(19) Europäisches Patentamt
European Patent Office
Office européen des brevets

(11) EP 4 778 951 A1

(12) **EUROPEAN PATENT APPLICATION**
published in accordance with Art. 153(4) EPC

(43) Date of publication:
**22.07.2026 Bulletin 2026/30**

(21) Application number: **24865576.3**

(22) Date of filing: **13.09.2024**

(51) International Patent Classification (IPC):
***C08F 290/06*** *(2006.01)* ***C07F 7/18*** *(2006.01)*
***C08F 220/10*** *(2006.01)* ***C08L 33/14*** *(2006.01)*
***C08L 101/00*** *(2006.01)* ***C09K 3/00*** *(2006.01)*
***G03C 8/06*** *(2006.01)* ***G03C 8/08*** *(2006.01)*
***G03C 8/10*** *(2006.01)* ***G03C 8/24*** *(2006.01)*
***G03C 8/26*** *(2006.01)* ***G03C 8/34*** *(2006.01)*
***G03C 8/36*** *(2006.01)* ***G03C 8/42*** *(2006.01)*

(52) Cooperative Patent Classification (CPC):
**C07F 7/18; C08F 220/10; C08F 290/06; C08L 33/14; C08L 101/00; C09K 3/00; G03C 8/06; G03C 8/08; G03C 8/10; G03C 8/24; G03C 8/26; G03C 8/34; G03C 8/36; G03C 8/42**

(86) International application number:
**PCT/JP2024/032970**

(87) International publication number:
**WO 2025/058077 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.09.2023 JP 2023150365**
**15.03.2024 JP 2024041730**
**14.08.2024 JP 2024135461**

(71) Applicant: **FUJIFILM Corporation**
**Tokyo 106-8620 (JP)**

(72) Inventors:
- **TAMURA, Akio**
**Ashigarakami-gun, Kanagawa 258-8577 (JP)**
- **SHIRAI, Hideyuki**
**ashigara-shi, Kanagawa 250-0193 (JP)**
- **HASEGAWA, Gaku**
**ashigara-shi, Kanagawa 250-0193 (JP)**
- **ISHIGURO, Naoko**
**ashigara-shi, Kanagawa 250-0193 (JP)**

(74) Representative: **HGF**
**HGF Limited**
**4th Floor, 1 City Square**
**Leeds LS1 2ES (GB)**

(54) **COMPOUND, COMPOSITION, FUNCTIONAL MATERIAL, PHOTOGRAPHIC PHOTOSENSITIVE SILVER HALIDE MATERIAL, AND DIFFUSION TRANSFER TYPE PHOTOGRAPHIC PHOTOSENSITIVE SILVER HALIDE MATERIAL**

(57) Provided are a compound having a structure represented by Formula (Ia) and having at least one or more selected from the group consisting of -OH, -COOH, $-PO_3H$, {$-OP(=O)(OH)_2$}, $-CO_2M^1$, $-SO_3M^1$, $-NT^1T^2$, an oxazoline group, $-NG^1G^2G^3E^1$, a group having a betaine structure, and a group having a polyoxyalkylene structure, a composition formed of the compound, a functional material, a silver halide photographic sensitive material, and a diffusion transfer type silver halide photographic sensitive material. In Formula (Ia), * represents a bonding position, and $R^{11}$, $R^{12}$, and $R^{13}$ each independently represent an alkyl group, an alkenyl group, or an aryl group.

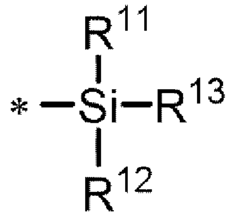

(Ia)

EP 4 778 951 A1

## Description

## BACKGROUND OF THE INVENTION

1. Field of the Invention

The present disclosure relates to a compound, a composition, a functional material, a silver halide photographic sensitive material, and a diffusion transfer type silver halide photographic sensitive material.

2. Description of the Related Art

In order to enhance user benefit in a silver halide photographic sensitive material, high sensitivity has been remarkably achieved in recent years. In addition, a production step, an imaging step, and a treatment step for the silver halide photographic sensitive material are accelerated and automated, and thus the silver halide photographic sensitive material is required to have performance to withstand contact with various rollers and devices or contact friction between photosensitive materials. The photosensitive material is usually composed of an electrically insulating support and a photographic emulsion layer. Therefore, electrostatic charges are likely to be accumulated due to contact with the surface of the same or different substances, peeling friction, or the like during the production step or use of the photosensitive material.

In a case where the electrostatic charge is accumulated before development in this manner, the photosensitive layer is exposed to light by the discharge of the charge, and so-called static fogging occurs after the development treatment. In addition, the accumulated electrostatic charge is also a factor of causing a failure such as the adhesion of dust to the photosensitive material.

As a method of preventing generation of static electricity against friction or contact by decreasing power generation properties on the surface of the silver halide photosensitive material, for example, a method of adding a fluorine-containing surfactant to a silver halide photographic sensitive material is disclosed in JP1995-120879A (JP-H7-120879A) or JP1993-273712A (JP-H5-273712A).

## SUMMARY OF THE INVENTION

The fluorine-containing surfactant is usually negatively charged with respect to various materials in contact therewith, and the generation of static electricity is suppressed by adjusting the amount of the fluorine-containing surfactant in the photosensitive material to adjust the power generation properties. However, since the material with which the photosensitive material comes into contact in the production step, the imaging step, and the treatment step is not constant, it is difficult to cope with only the fluorine-based surfactant, and there are disadvantages such as adverse effects on photographic performance in a case where a large amount of the fluorine-based surfactant is used.

Meanwhile, in a case where various functional films including a silver halide photographic sensitive material have a multilayer structure in order to exhibit various functions, the layers are also frequently laminated one after another. In this case, in a case where another layer is further laminated on the functional layer containing the fluorine-based surfactant, cissing, unevenness, or the like may easily occur.

An object to be achieved by the present disclosure is to provide a compound having an excellent coating surface state and excellent dust adhesion suppressiveness in a case of preparing a functional material. Further, the object of the present disclosure is to provide a compound having excellent upper layer lamination properties to a functional material. In addition, another object of the present disclosure is to provide a silver halide photographic sensitive material or a diffusion transfer type silver halide photographic sensitive material which is excellent in electrostatic fogging suppressiveness and density stability of a formed image.

Means for solving the above-described problems include the following aspects.

<1> A compound which is a polymer having at least one selected from the group consisting of a constitutional unit A having two or more structures represented by Formula (Ia) and a constitutional unit B derived from a linear silicone (meth)acrylate, and at least one selected from the group consisting of a constitutional unit C represented by Formula (2) and a constitutional unit D represented by Formula (3).

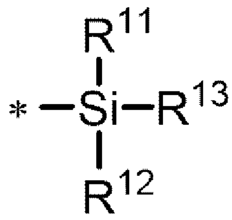 (Ia)

In Formula (Ia), * represents a bonding position, and $R^{11}$, $R^{12}$, and $R^{13}$ each independently represent an alkyl group, an alkenyl group, or an aryl group.

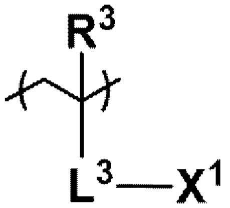 **(2)**

In Formula (2), $R^3$ represents a hydrogen atom or a methyl group, $L^3$ represents a single bond or a divalent linking group, $X^1$ represents -OH, -COOH, $-PO_3H$, $\{-OP(=O)(OH)_2\}$, $-CO_2M^1$, $-SO_3M^1$, $-NT^1T^2$, an oxazoline group, $-NG^1G^2G^3E^1$, or a group having a group having a betaine structure, $M^1$ represents an alkali metal, an alkaline earth metal, Mg, Al, or $Q^1Q^2Q^3Q^4N^+$, $Q^1$, $Q^2$, $Q^3$, and $Q^4$ each independently represent a hydrogen atom or an alkyl group having 1 to 20 carbon atoms, $T^1$ and $T^2$ each independently represent a hydrogen atom, an alkyl group having 1 to 20 carbon atoms, an alkylene group, an oxyalkylene group, or an alkoxy group, $T^1$ and $T^2$ may be bonded to each other, $E^1$ represents an anion, and $G^1$, $G^2$, and $G^3$ each independently represent a hydrogen atom or an alkyl group having 1 to 20 carbon atoms.

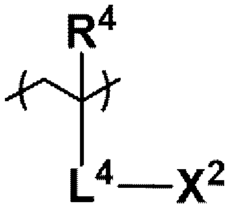 **(3)**

In Formula (3), $R^4$ represents a hydrogen atom or a methyl group, $L^4$ represents a single bond or a divalent linking group, and $X^2$ represents a polyoxyalkylene group.

<2> The compound according to <1>, in which the constitutional unit A is a constitutional unit represented by Formula (a1).

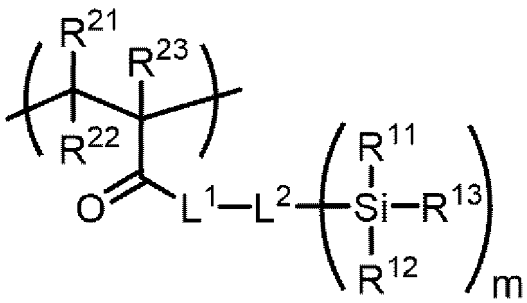 (a1)

In Formula (a1), m represents an integer of 2 or greater, $R^{11}$, $R^{12}$, and $R^{13}$ each independently represent an alkyl group, an alkenyl group, or an aryl group, $R^{21}$ and $R^{22}$ each independently represent a hydrogen atom or an alkyl group, $R^{23}$ represents a hydrogen atom or a substituent, $L^1$ represents -O- or $-NR^Z-$, $R^Z$ represents a hydrogen atom or a substituent, and $L^2$ represents an (m+1)-valent linking group.

<3> The compound according to <1> or <2>, in which the constitutional unit B is a constitutional unit represented by Formula (a2).

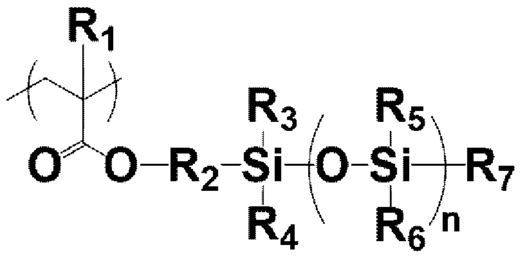

(a2)

In Formula (a2), $R_1$ represents a hydrogen atom or a methyl group, $R_2$ represents a divalent organic group having 1 to 20 carbon atoms, $R_3$ to $R_6$ each independently represent an alkyl group having 1 to 20 carbon atoms or an aryl group having 6 to 20 carbon atoms, $R_7$ represents an alkyl group having 1 to 20 carbon atoms or an aryl group having 6 to 20 carbon atoms, and n represents an integer of 1 to 200 which may have a distribution.

<4> The compound according to any one of <1> to <3>, in which the compound is a polymer having at least one selected from the group consisting of the constitutional unit A and the constitutional unit B, the constitutional unit C, and the constitutional unit D.

<5> The compound according to any one of <1> to <3>, in which the compound is a polymer having the constitutional unit A, the constitutional unit C, and the constitutional unit D.

<6> A composition comprising: a compound having a structure represented by Formula (Ia) and having at least one or more selected from the group consisting of -OH, -COOH, $-PO_3H$, $\{-OP(=O)(OH)_2\}$, $-CO_2M^1$, $-SO_3M^1$, $-NT^1T^2$, an oxazoline group, $-NG^1G^2G^3E^1$, a group having a betaine structure, and a group having a polyoxyalkylene structure; and a binder.

$M^1$ represents an alkali metal, an alkaline earth metal, Mg, Al, or $Q^1Q^2Q^3Q^4N^+$, $Q^1$, $Q^2$, $Q^3$, and $Q^4$ each independently represent a hydrogen atom or an alkyl group having 1 to 20 carbon atoms, $T^1$ and $T^2$ each independently represent a hydrogen atom, an alkyl group having 1 to 20 carbon atoms, an alkylene group, an oxyalkylene group, or an alkoxy group, $T^1$ and $T^2$ may be bonded to each other, $E^1$ represents an anion, and $G^1$, $G^2$, and $G^3$ each independently represent a hydrogen atom or an alkyl group having 1 to 20 carbon atoms.

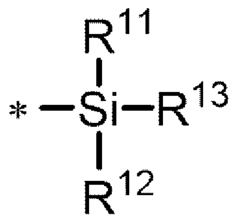

(Ia)

In Formula (Ia), * represents a bonding position, and $R^{11}$, $R^{12}$, and $R^{13}$ each independently represent an alkyl group, an alkenyl group, or an aryl group.

<7> A functional material comprising: a support; and a layer that is provided on the support and contains a compound having a structure represented by Formula (Ia) and having at least one or more selected from the group consisting of -OH, -COOH, $-PO_3H$, $\{-OP(=O)(OH)_2\}$, $-CO_2M^1$, $-SO_3M^1$, $-NT^1T^2$, an oxazoline group, $-NG^1G^2G^3E^1$, a group having a betaine structure, and a group having a polyoxyalkylene structure.

$M^1$ represents an alkali metal, an alkaline earth metal, Mg, Al, or $Q^1Q^2Q^3Q^4N^+$, $Q^1$, $Q^2$, $Q^3$, and $Q^4$ each independently represent a hydrogen atom or an alkyl group having 1 to 20 carbon atoms, $T^1$ and $T^2$ each independently represent a hydrogen atom, an alkyl group having 1 to 20 carbon atoms, an alkylene group, an oxyalkylene group, or an alkoxy group, $T^1$ and $T^2$ may be bonded to each other, $E^1$ represents an anion, and $G^1$, $G^2$, and $G^3$ each independently represent a hydrogen atom or an alkyl group having 1 to 20 carbon atoms.

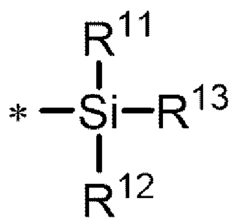

(Ia)

In Formula (Ia), * represents a bonding position, and $R^{11}$, $R^{12}$, and $R^{13}$ each independently represent an alkyl group, an alkenyl group, or an aryl group.

<8> A silver halide photographic sensitive material comprising: a support; and a layer that is provided on the support and contains a compound having a structure represented by Formula (Ia) and having at least one or more selected from the group consisting of -OH, -COOH, $-PO_3H$, $\{-OP(=O)(OH)_2\}$, $-CO_2M^1$, $-SO_3M^1$, $-NT^1T^2$, an oxazoline group, $-NG^1G^2G^3E^1$, a group having a betaine structure, and a group having a polyoxyalkylene structure.

$M^1$ represents an alkali metal, an alkaline earth metal, Mg, Al, or $Q^1Q^2Q^3Q^4N^+$, $Q^1$, $Q^2$, $Q^3$, and $Q^4$ each independently represent a hydrogen atom or an alkyl group having 1 to 20 carbon atoms, $T^1$ and $T^2$ each independently represent a hydrogen atom, an alkyl group having 1 to 20 carbon atoms, an alkylene group, an oxyalkylene group, or an alkoxy group, $T^1$ and $T^2$ may be bonded to each other, $E^1$ represents an anion, and $G^1$, $G^2$, and $G^3$ each independently represent a hydrogen atom or an alkyl group having 1 to 20 carbon atoms.

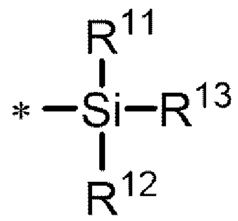 (Ia)

In Formula (Ia), * represents a bonding position, and $R^{11}$, $R^{12}$, and $R^{13}$ each independently represent an alkyl group, an alkenyl group, or an aryl group.

<9> A diffusion transfer type silver halide photographic sensitive material comprising: a support; and a layer that is provided on the support and contains a compound having a structure represented by Formula (Ia) and having at least one or more selected from the group consisting of -OH, -COOH, $-PO_3H$, $\{-OP(=O)(OH)_2\}$, $-CO_2M^1$, $-SO_3M^1$, $-NT^1T^2$, an oxazoline group, $-NG^1G^2G^3E^1$, a group having a betaine structure, and a group having a polyoxyalkylene structure.

$M^1$ represents an alkali metal, an alkaline earth metal, Mg, Al, or $Q^1Q^2Q^3Q^4N^+$, $Q^1$, $Q^2$, $Q^3$, and $Q^4$ each independently represent a hydrogen atom or an alkyl group having 1 to 20 carbon atoms, $T^1$ and $T^2$ each independently represent a hydrogen atom, an alkyl group having 1 to 20 carbon atoms, an alkylene group, an oxyalkylene group, or an alkoxy group, $T^1$ and $T^2$ may be bonded to each other, $E^1$ represents an anion, and $G^1$, $G^2$, and $G^3$ each independently represent a hydrogen atom or an alkyl group having 1 to 20 carbon atoms.

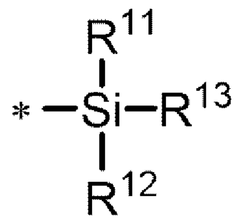 (Ia)

In Formula (Ia), * represents a bonding position, and $R^{11}$, $R^{12}$, and $R^{13}$ each independently represent an alkyl group, an alkenyl group, or an aryl group.

According to the present disclosure, it is possible to provide a compound having an excellent coating surface state and excellent dust adhesion suppressiveness in a case of preparing a functional material. Further, it is possible to provide a compound having excellent upper layer lamination properties to a functional material. In addition, it is possible to provide a silver halide photographic sensitive material or a diffusion transfer type silver halide photographic sensitive material which is excellent in electrostatic fogging suppressiveness and density stability of a formed image.

DESCRIPTION OF THE PREFERRED EMBODIMENTS

Hereinafter, the contents of the present disclosure will be described in detail. The description of configuration requirements below is made based on representative embodiments of the present disclosure in some cases, but the present disclosure is not limited to such embodiments.

Further, in the present specification, a numerical range shown using "to" indicates a range including numerical values described before and after "to" as a lower limit and an upper limit.

In a numerical range described in a stepwise manner in the present disclosure, an upper limit or a lower limit described in one numerical range may be replaced with an upper limit or a lower limit in another numerical range described in a stepwise manner. Further, in a numerical range described in the present disclosure, an upper limit or a lower limit described in the numerical range may be replaced with a value described in an example.

Further, in a case where substitution or unsubstitution is not noted in regard to the notation of "group" (atomic

group) in the present specification, the concept of "group" includes not only a group that does not have a substituent but also a group having a substituent. For example, the concept of "alkyl group" includes not only an alkyl group having no substituent (also referred to as an unsubstituted alkyl group), but also an alkyl group having a substituent (also referred to as a substituted alkyl group).

In the present specification, the concept of "(meth)acryl" includes both acryl and methacryl, and the concept of "(meth)acryloyl" includes both acryloyl and methacryloyl.

Further, the term "step" in the present specification indicates not only an independent step but also a step which cannot be clearly distinguished from other steps as long as the intended purpose of the step is achieved.

Further, in the present disclosure, "% by mass" has the same definition as that for "% by weight", and "part by mass" has the same definition as that for "part by weight".

Further, in the present disclosure, a combination of two or more preferred embodiments is a more preferred embodiment.

In addition, the weight-average molecular weight (Mw) and the number average molecular weight (Mn) in the present disclosure are values measured by gel permeation chromatography (GPC), unless otherwise specified.

The measurement according to GPC is performed using HLC (registered trademark)-8020GPC (manufactured by Tosoh Corporation) as a measuring device, three columns of TSKgel (registered trademark) Super Multipore HZ-H (manufactured by Tosoh Corporation, 4.6 mmID $\times$ 15 cm), and tetrahydrofuran (THF) as an eluent. Further, the measurement is performed under measurement conditions of a sample concentration of 0.45% by mass, a flow rate of 0.35 ml/min, a sample injection volume of 10 $\mu$L, and a measurement temperature of 40°C using a differential refractive index (RI) detector.

Further, the calibration curve is prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

In the present disclosure, the term "total solid content" denotes a total mass of components obtained by removing a solvent from the whole composition of the composition. In addition, the term "solid content" denotes components excluding the solvent as described above, and the components may be, for example, a solid or a liquid at 25°C.

Hereinafter, the present disclosure will be described in detail.

(Compound)

A compound according to the present disclosure has a structure represented by Formula (Ia) and has at least one or more selected from the group consisting of -OH, -COOH, $-PO_3H$, $\{-OP(=O)(OH)_2\}$, $-CO_2M^1$, $-SO_3M^1$, $-NT^1T^2$, an oxazoline group, $-NG^1G^2G^3E^1$, a group having a betaine structure, and a group having a polyoxyalkylene structure.

$M^1$ represents an alkali metal, an alkaline earth metal, Mg, Al, or $Q^1Q^2Q^3Q^4N^+$, $Q^1$, $Q^2$, $Q^3$, and $Q^4$ each independently represent a hydrogen atom or an alkyl group having 1 to 20 carbon atoms, $T^1$ and $T^2$ each independently represent a hydrogen atom, an alkyl group having 1 to 20 carbon atoms, an alkylene group, an oxyalkylene group, or an alkoxy group, $T^1$ and $T^2$ may be bonded to each other, $E^1$ represents an anion, and $G^1$, $G^2$, and $G^3$ each independently represent a hydrogen atom or an alkyl group having 1 to 20 carbon atoms.

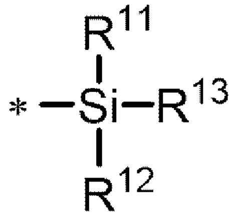
(Ia)

In Formula (Ia), * represents a bonding position, and $R^{11}$, $R^{12}$, and $R^{13}$ each independently represent an alkyl group, an alkenyl group, or an aryl group.

It is presumed that since the compound according to the present disclosure has a structure represented by Formula (Ia) and has at least one or more hydrophilic structures selected from the group consisting of -OH, -COOH, $-PO_3H$, $\{-OP(=O)(OH)_2\}$, $-CO_2M^1$, $-SO_3M^1$, $-NT^1T^2$, an oxazoline group, $-NG^1G^2G^3E^1$, a group having a betaine structure, and a group having a polyoxyalkylene structure, the compound contains a hydrophobic moiety (for example, a structure represented by Formula (Ia)) and a hydrophilic moiety (for example, the hydrophilic structure), is easily aligned at a gas-liquid interface, and has excellent dust adhesion suppressiveness on a surface.

From the viewpoints of the dust adhesion suppressiveness, the coating surface state, the upper layer lamination properties, the surface state uniformity, and the cissing suppressiveness, $R^{11}$ in Formula (Ia) represents preferably an alkyl group, an allyl group, or a phenyl group, more preferably an alkyl group, still more preferably an alkyl group having 1 to 12

carbon atoms, and particularly preferably a methyl group.

From the viewpoints of the dust adhesion suppressiveness, the coating surface state, the upper layer lamination properties, the surface state uniformity, and the cissing suppressiveness, $R^{12}$ in Formula (Ia) represents preferably an alkyl group or a phenyl group, more preferably an alkyl group, still more preferably an alkyl group having 1 to 12 carbon atoms, and particularly preferably a methyl group.

From the viewpoints of the dust adhesion suppressiveness, the coating surface state, the upper layer lamination properties, the surface state uniformity, and the cissing suppressiveness, $R^{13}$ in Formula (Ia) represents preferably an alkyl group, more preferably an alkyl group having 1 to 12 carbon atoms, and particularly preferably a methyl group.

The alkyl group and the alkenyl group as $R^{11}$, $R^{12}$, and $R^{13}$ may be linear or branched, or may have a ring structure.

The alkyl group, the alkenyl group, and the aryl group as $R^{11}$, $R^{12}$, and $R^{13}$ may have a substituent. Examples of the substituent include an alkyl group, an alkenyl group, an aryl group, and an alkoxy group.

In addition, from the viewpoints of the dust adhesion suppressiveness, the coating surface state, the upper layer lamination properties, the surface state uniformity, and the cissing suppressiveness, it is preferable that the group represented by Formula (Ia) is bonded to an oxygen atom in the compound described above.

In addition, from the viewpoints of the compatibility, the dispersibility, the dust adhesion suppressiveness, the coating surface state, the upper layer lamination properties, the surface state uniformity, and the cissing suppressiveness, it is preferable that the compound according to the present disclosure has a structure represented by Formula (Ib) as the structure represented by Formula (Ia).

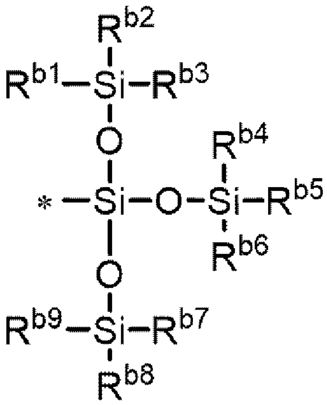

(Ib)

In Formula (Ib), * represents a bonding position, and $R^{b1}$ to $R^{b9}$ each independently represent an alkyl group, an alkenyl group, or an aryl group.

From the viewpoints of the dust adhesion suppressiveness, the coating surface state, the upper layer lamination properties, the surface state uniformity, and the cissing suppressiveness, $R^{b1}$ to $R^{b9}$ in Formula (Ib) each independently represent preferably an alkyl group, more preferably an alkyl group having 1 to 12 carbon atoms, and particularly preferably a methyl group.

The alkyl group and the alkenyl group as $R^{b1}$ to $R^{b9}$ may be linear or branched, or may have a ring structure.

The alkyl group, the alkenyl group, and the aryl group as $R^{b1}$ to $R^{b9}$ may have a substituent. Examples of the substituent include an alkyl group, an alkenyl group, an aryl group, and an alkoxy group.

From the viewpoints of the dust adhesion suppressiveness, electrostatic fogging suppressiveness, density change suppressiveness after high-humidity storage, and sensitivity stability, the compound according to the present disclosure contains, as the specific hydrophilic structure, preferably at least one or more selected from the group consisting of -OH, -COOH, $-PO_3H$, $\{-OP(=O)(OH)_2\}$, $-CO_2M^1$, an oxazoline group, $-NG^1G^2G^3E^1$, a group having a betaine structure, and a group having a polyoxyalkylene structure, more preferably at least one or more selected from the group consisting of a group having a betaine structure and a group having a polyoxyalkylene structure, and particularly preferably a group having a betaine structure and a group having a polyoxyalkylene structure.

In a case where the compound according to the present disclosure has $-CO_2M^1$, it is preferable that $-CO_2M^1$ is in a state of $-CO_2^-\cdot(M^1)^+$ which is a salt. $(M^1)^+$ represents an alkali metal ion, an alkaline earth metal ion, $Mg^{2+}$, $Al^{3+}$, or $Q^1Q^2Q^3Q^4N^+$. Further, in a case where $(M^1)^+$ is $Mg^{2+}$, it is preferable that one $Mg^{2+}$ and two $CO_2^-$ form a salt. In a case where $(M^1)^+$ is $Al^{3+}$, it is preferable that one $Al^{3+}$ and three $CO_2^-$ form a salt.

In a case where the compound according to the present disclosure represents $-SO_3M^1$, it is preferable that the compound is in a state of $-SO_3^-\cdot(M^1)^+$ which is a salt. $(M^1)^+$ represents an alkali metal ion, an alkaline earth metal ion, $Mg^{2+}$, $Al^{3+}$, or $Q^1Q^2Q^3Q^4N^+$, In a case where $(M^1)^+$ is $Mg^{2+}$, it is preferable that one $Mg^{2+}$ and two $SO_3^-$ form a salt. In a case where $(M^1)^+$ is $Al^{3+}$, it is preferable that one $Al^{3+}$ and three $SO_3^-$ form a salt.

Examples of the alkali metal represented by $M^1$ include lithium (Li), sodium (Na), potassium (K), and cesium (Cs).

Examples of the alkaline earth metal represented by $M^1$ include calcium (Ca), strontium (Sr), and barium (Ba).

$Q^1$, $Q^2$, $Q^3$, and $Q^4$ in $Q^1Q^2Q^3Q^4N^+$ (that is, a quaternary ammonium salt) represented by $M^1$ each independently represent a hydrogen atom or an alkyl group having 1 to 20 carbon atoms. The alkyl group represented by $Q^1$, $Q^2$, $Q^3$, and $Q^4$ may be linear or branched, and is preferably an alkyl group having 1 to 10 carbon atoms, more preferably an alkyl group having 1 to 7 carbon atoms, and still more preferably an alkyl group having 1 to 4 carbon atoms.

The alkyl group represented by $Q^1$, $Q^2$, $Q^3$, and $Q^4$ may have a substituent.

Examples of the alkyl group represented by $Q^1$, $Q^2$, $Q^3$, and $Q^4$ include a methyl group, an ethyl group, a 2-hydroxyethyl group, an n-propyl group, an isopropyl group, a 3-hydroxypropyl group, an n-butyl group, an isobutyl group, a sec-butyl group, a tert-butyl group, a 4-hydroxybutyl group, and an n-hexyl group.

Specific examples of $Q^1Q^2Q^3Q^4N^+$ include quaternary ammonium salts such as $(CH_3)_4N^+$, $(C_2H_5)_4N^+$, $(C_3H_7)_4N^+$, $(C_4H_9)_4N^+$, $(C_5H_{11})_4N^+$, $(C_6H_{13})_4N^+$, $(C_7H_{15})_4N^+$, $(C_8H_{17})_4N^+$, $(C_9H_{19})_4N^+$, and $(C_{10}H_{21})_4N^+$ in a case where all of $Q^1$ to $Q^4$ have the same definition.

Examples of $Q^1Q^2Q^3Q^4N^+$ in a case where all of $Q^1$ to $Q^3$ represent a methyl group include quaternary ammonium salts in which $Q^4$ represents $(C_2H_5)$, $(C_6H_{13})$, $(C_8H_{17})$, $(C_9H_{19})$, $(C_{10}H_{21})$, $(C_{12}H_{25})$, $(C_{14}H_{29})$, $(C_{16}H_{33})$, or $(C_{18}H_{37})$.

Examples of $Q^1Q^2Q^3Q^4N^+$ in a case where $Q^1$ and $Q^2$ represent a methyl group include quaternary ammonium salts in which $Q^3$ and $Q^4$ represent $(C_8H_{17})$, $(C_{10}H_{21})$, $(C_{12}H_{25})$, $(C_{14}H_{29})$, $(C_{16}H_{33})$, or $(C_{18}H_{37})$.

Examples of $Q^1Q^2Q^3Q^4N^+$ in a case where $Q^1$ represents a methyl group include quaternary ammonium salts in which all of $Q^2$ to $Q^4$ represent $(C_4H_9)$, $(C_8H_{17})$, and the like.

In a case where the compound according to the present disclosure has $-NT^1T^2$, $T^1$ and $T^2$ each independently represent preferably a hydrogen atom, an alkyl group having 1 to 20 carbon atoms, or an alkoxy group having 1 to 20 carbon atoms. In addition, $T^1$ and $T^2$ may be bonded to each other.

The alkyl group represented by $T^1$ and $T^2$ may be linear or branched, and represent preferably an alkyl group having 1 to 10 carbon atoms, more preferably an alkyl group having 1 to 7 carbon atoms, and still more preferably an alkyl group having 1 to 4 carbon atoms.

The alkyl group represented by $T^1$ and $T^2$ may have a substituent.

Examples of the alkyl group represented by $T^1$ and $T^2$ include a methyl group, an ethyl group, a 2-hydroxyethyl group, an n-propyl group, an isopropyl group, a 3-hydroxypropyl group, an n-butyl group, an isobutyl group, a sec-butyl group, a tert-butyl group, a 4-hydroxybutyl group, and an n-hexyl group.

The alkoxy group represented by $T^1$ and $T^2$ may be linear or branched, and represents preferably an alkoxy group having 1 to 10 carbon atoms, more preferably an alkoxy group having 1 to 7 carbon atoms, and still more preferably an alkoxy group having 1 to 4 carbon atoms.

The alkoxy group represented by $T^1$ and $T^2$ may have a substituent.

Examples of the alkoxy group represented by $T^1$ and $T^2$ include a methoxy group, an ethoxy group, a 2-hydroxyethoxy group, an n-propyloxy group, an isopropyloxy group, a 3-hydroxypropyloxy group, an n-butyloxy group, an isobutyloxy group, a sec-butyloxy group, a tert-butyloxy group, a 4-hydroxybutyloxy group, and an n-hexyloxy group.

In a case where $T^1$ and $T^2$ are bonded to each other, $-NT^1T^2$ represents a cyclic group. Examples of such a group include a morpholino group.

It is most preferable that $T^1$ and $T^2$ represent a hydrogen atom.

In a case where the compound according to the present disclosure has $-NG^1G^2G^3E^1$, it is preferable that the compound is in a form of $-N^+G^1G^2G^3 \cdot E^1$ which is a salt.

The anion represented by $E^1$ is not particularly limited, and examples thereof include a halide ion such as a fluoride ion ($F^-$), a chloride ion ($Cl^-$), a bromide ion ($Br^-$), or an iodide ion ($I^-$), a hydroxide ion ($OH^-$), a cyanide ion ($CN^-$), a nitrate ion ($NO_3^-$), a carbonate ion ($CO_3^{2-}$), a sulfate ion ($SO_4^{2-}$), a sulfonate anion such as a methanesulfonate anion ($CH_3SO_3^-$), a benzenesulfonate anion, a p-toluenesulfonate anion, or a trifluoromethanesulfonate anion, a perchlorate anion, a borate anion such as a tetrafluoroborate anion or a tetraphenylborate anion, a hexafluorophosphate anion, and an acetate anion. Further, in a case where $E^1$ represents a divalent anion, it is preferable that one $E^1$ and two $NG^1G^2G^3$ form a salt.

$G^1$, $G^2$, and $G^3$ each independently represent a hydrogen atom or an alkyl group having 1 to 20 carbon atoms. The alkyl group represented by $G^1$, $G^2$, and $G^3$ may be linear or branched, and is preferably an alkyl group having 1 to 10 carbon atoms, more preferably an alkyl group having 1 to 7 carbon atoms, and still more preferably an alkyl group having 1 to 4 carbon atoms.

The alkyl group represented by $G^1$, $G^2$, and $G^3$ may have a substituent.

Examples of the alkyl group represented by $G^1$, $G^2$, and $G^3$ include a methyl group, an ethyl group, a 2-hydroxyethyl group, an n-propyl group, an isopropyl group, a 3-hydroxypropyl group, an n-butyl group, an isobutyl group, a sec-butyl group, a tert-butyl group, a 4-hydroxybutyl group, and an n-hexyl group.

The group having a betaine structure is not particularly limited, but is preferably a group represented by Formula

(BT1), Formula (BT2), Formula (BT3), or Formula (BT4).

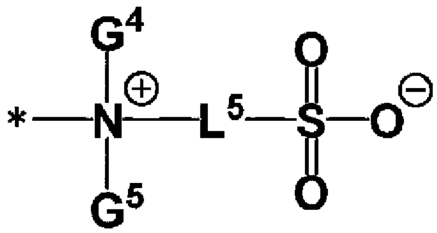

(BT1)

In Formula (BT1), $G^4$ and $G^5$ each independently represent a hydrogen atom or an alkyl group having 1 to 20 carbon atoms, $L^5$ represents a divalent linking group, and * represents a bonding position.

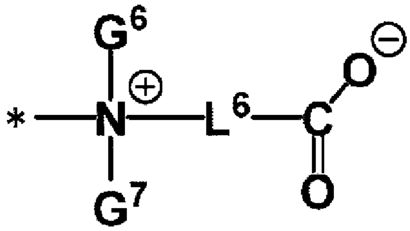

(BT2)

In Formula (BT2), $G^6$ and $G^7$ each independently represent a hydrogen atom or an alkyl group having 1 to 20 carbon atoms, $L^6$ represents a divalent linking group, and * represents a bonding position.

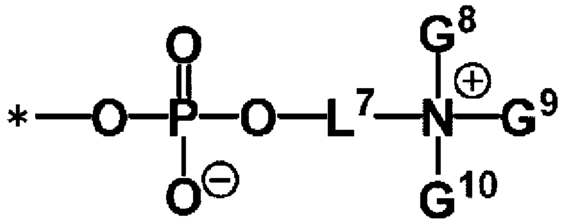

(BT3)

In Formula (BT3), $G^8$, $G^9$, and $G^{10}$ each independently represent a hydrogen atom or an alkyl group having 1 to 20 carbon atoms, $L^7$ represents a divalent linking group, and * represents a bonding position.

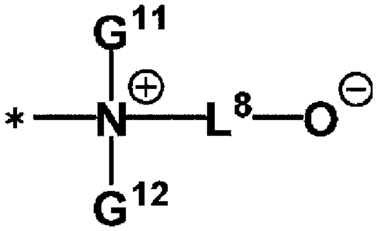

(BT4)

In Formula (BT4), $G^{11}$ and $G^{12}$ each independently represent a hydrogen atom or an alkyl group having 1 to 20 carbon atoms, $L^8$ represents a divalent linking group, and * represents a bonding position.

The description, specific examples, and preferable ranges for the alkyl group having 1 to 20 carbon atoms as $G^4$ and $G^5$ in Formula (BT1) are the same as those for the alkyl group having 1 to 20 carbon atoms as $G^1$, $G^2$, and $G^3$ described above.

It is preferable that $L^5$ represents an alkylene group. The alkylene group is preferably an alkylene group having 1 to 12 carbon atoms, more preferably an alkylene group having 1 to 6 carbon atoms, and still more preferably an alkylene group having 1 to 4 carbon atoms.

The alkylene group as $L^5$ may have a substituent.

Specific examples of the alkylene group as $L^5$ include a methylene group, an ethylene group, a trimethylene group, a 2-hydroxytrimethylene group, a methylethylene group, a tetramethylene group, a 1-methyltrimethylene group, a pentamethylene group, a 2,2-dimethyltrimethylene group, a hexamethylene group, a nonamethylene group, a 2-methyloctamethylene group, a decamethylene group, and a dodecamethylene group.

The description, specific examples, and preferable ranges for the alkyl group having 1 to 20 carbon atoms as $G^6$ and $G^7$ in Formula (BT2) are the same as those for the alkyl group having 1 to 20 carbon atoms as $G^1$, $G^2$, and $G^3$ described above.

The description, specific examples, and preferable ranges for $L^6$ are the same as those for $L^5$ described above.

The description, specific examples, and preferable ranges for the alkyl group having 1 to 20 carbon atoms as $G^8$, $G^9$, and $G^{10}$ in Formula (BT3) are the same as those for the alkyl group having 1 to 20 carbon atoms as $G^1$, $G^2$, and $G^3$ described above.

The description, specific examples, and preferable ranges for $L^7$ are the same as those for $L^5$ described above.

The description, specific examples, and preferable ranges for the alkyl group having 1 to 20 carbon atoms as $G^{11}$ and $G^{12}$ in Formula (BT4) are the same as those for the alkyl group having 1 to 20 carbon atoms as $G^1$, $G^2$, and $G^3$ described above.

The description, specific examples, and preferable ranges for $L^8$ are the same as those for $L^5$ described above.

From the viewpoints of the dust adhesion suppressiveness, the electrostatic fogging suppressiveness, the density change suppressiveness after high-humidity storage, and the sensitivity stability, the betaine structure in the group having a betaine structure is preferably a betaine phosphate structure or a betaine sulfonate structure and preferably a betaine phosphate structure.

In addition, from the viewpoints of the dust adhesion suppressiveness, the electrostatic fogging suppressiveness, the density change suppressiveness after high-humidity storage, and the sensitivity stability, the group having a betaine structure is preferably a group represented by Formula (BT1), Formula (BT2), Formula (BT3), or Formula (BT4), more preferably a group represented by Formula (BT1), Formula (BT2), or Formula (BT3), still more preferably a group represented by Formula (BT1) or Formula (BT3), and particularly preferably a group represented by Formula (BT1).

From the viewpoints of the dust adhesion suppressiveness, the coating surface state, the upper layer lamination properties, the surface state uniformity, the cissing suppressiveness, the electrostatic fogging suppressiveness, the density change suppressiveness after high-humidity storage, and the sensitivity stability, the compound according to the present disclosure is preferably a polymer, more preferably a polymer having at least one selected from the group consisting of a constitutional unit A having two or more structures represented by Formula (Ia) and a constitutional unit B derived from linear silicone (meth)acrylate and at least one selected from the group consisting of a constitutional unit C represented by Formula (2) and a constitutional unit D represented by Formula (3), and particularly preferably a polymer having at least one selected from the group consisting of the constitutional unit A and the constitutional unit B, the constitutional unit C, and the constitutional unit D.

In addition, from the viewpoints of the dust adhesion suppressiveness, the electrostatic fogging suppressiveness, the density change suppressiveness after high-humidity storage, and the sensitivity stability, the compound according to the present disclosure is preferably a polymer having the constitutional unit A and the constitutional unit C and particularly preferably a polymer having the constitutional unit A, the constitutional unit C, and the constitutional unit D.

In addition, from the viewpoints of the dust adhesion suppressiveness, the coating surface state, the upper layer lamination properties, the surface state uniformity, and the cissing suppressiveness, the compound according to the present disclosure is preferably a polymer having the constitutional unit B and the constitutional unit C and particularly preferably a polymer having the constitutional unit B, the constitutional unit C, and the constitutional unit D.

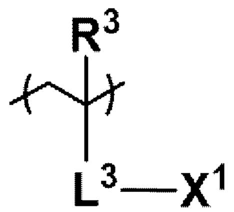

(2)

In Formula (2), $R^3$ represents a hydrogen atom or a methyl group, $L^3$ represents a single bond or a divalent linking group, $X^1$ represents -OH, -COOH, $-PO_3H$, {-OP(=O)$(OH)_2$}, $-CO_2M^1$, $-SO_3M^1$, $-NT^1T^2$, an oxazoline group, $-NG^1G^2G^3E^1$, or a group having a group having a betaine structure, $M^1$ represents an alkali metal, an alkaline earth metal, Mg, Al, or $Q^1Q^2Q^3Q^4N^+$, $Q^1$, $Q^2$, $Q^3$, and $Q^4$ each independently represent a hydrogen atom or an alkyl group having 1 to 20 carbon atoms, $T^1$ and $T^2$ each independently represent a hydrogen atom, an alkyl group having 1 to 20 carbon atoms, an alkylene group, an oxyalkylene group, or an alkoxy group, $T^1$ and $T^2$ may be bonded to each other, $E^1$ represents an anion, and $G^1$, $G^2$, and $G^3$ each independently represent a hydrogen atom or an alkyl group having 1 to 20 carbon atoms.

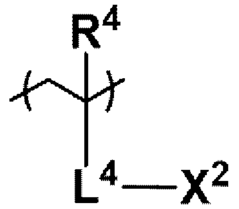

(3)

In Formula (3), $R^4$ represents a hydrogen atom or a methyl group, $L^4$ represents a single bond or a divalent linking group, and $X^2$ represents a polyoxyalkylene group.

<Constitutional unit A having two or more structures represented by Formula (Ia)>

From the viewpoints of the dust adhesion suppressiveness, the coating surface state, the upper layer lamination properties, the surface state uniformity, and the cissing suppressiveness, it is preferable that the compound according to the present disclosure has a constitutional unit A having two or more structures represented by Formula (Ia).

Preferable aspects of Formula (Ia) in the constitutional unit A are the same as the preferable aspects of Formula (Ia) described above.

From the viewpoints of the dust adhesion suppressiveness, the coating surface state, the upper layer lamination properties, the surface state uniformity, and the cissing suppressiveness, the number of structures represented by Formula (Ia) in the constitutional unit A may be 2 or more, but is preferably 3 or more, more preferably 3 to 20, and particularly preferably 3 to 10.

In addition, from the viewpoints of the compatibility, the dispersibility, the dust adhesion suppressiveness, the coating surface state, the upper layer lamination properties, the surface state uniformity, and the cissing suppressiveness, it is preferable that the constitutional unit A has a structure represented by Formula (Ib).

Further, the constitutional unit A is preferably a constitutional unit derived from a (meth)acrylate compound or a constitutional unit derived from (meth)acrylamide and more preferably a constitutional unit derived from a (meth)acrylate compound.

From the viewpoints of the dust adhesion suppressiveness, the coating surface state, the upper layer lamination properties, the surface state uniformity, and the cissing suppressiveness, it is preferable that the constitutional unit A is a constitutional unit represented by Formula (a1).

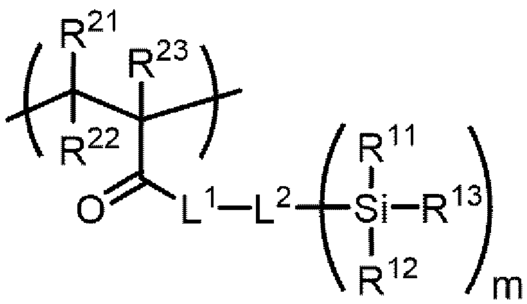

(a1)

In Formula (a1), m represents an integer of 2 or greater, $R^{11}$, $R^{12}$, and $R^{13}$ each independently represent an alkyl group, an alkenyl group, or an aryl group, $R^{21}$ and $R^{22}$ each independently represent a hydrogen atom or an alkyl group, $R^{23}$ represents a hydrogen atom or a substituent, $L^1$ represents -O- or $-NR^Z-$, $R^Z$ represents a hydrogen atom or a substituent, and $L^2$ represents an (m+1)-valent linking group.

Preferable aspects of $R^{11}$, $R^{12}$, and $R^{13}$ in Formula (a1) are the same as the preferable aspects of $R^{11}$, $R^{12}$, and $R^{13}$ in Formula (Ia).

From the viewpoints of the dust adhesion suppressiveness, the coating surface state, the upper layer lamination properties, the surface state uniformity, and the cissing suppressiveness, m in Formula (a1) represents preferably an integer of 3 or greater, more preferably an integer of 3 to 10, and particularly preferably an integer of 3 to 6.

It is preferable that $R^{21}$ and $R^{22}$ in Formula (a1) represent a hydrogen atom.

In addition, examples of the substituent as $R^{23}$ of Formula (a1) include an alkyl group, an alkenyl group, an aryl group, and a substituent having a linking group and having the structure represented by (Ia) at a terminal. Further, examples thereof also include $-CH_2-CO-L^1-L^2-(Si(R^{11})(R^{12})(R^{13}))_m$. Further, $L^1$ represents -O- or $-NR^Z-$.

$R^{23}$ in Formula (a1) represents preferably a hydrogen atom or an alkyl group, more preferably a hydrogen atom or a linear alkyl group having 1 to 4 carbon atoms, still more preferably a hydrogen atom, a methyl group, or an ethyl group,

and particularly preferably a hydrogen atom or a methyl group.

The substituent as $R^Z$ is preferably an alkyl group, more preferably a linear alkyl group having 1 to 4 carbon atoms, and still more preferably a methyl group or an ethyl group.

$L^1$ in Formula (a1) represents preferably -O- or -NH- and more preferably -O-.

$L^2$ in Formula (a1) represents preferably a group formed of at least one selected from the group consisting of a carbon atom, a hydrogen atom, an oxygen atom, a nitrogen atom, and a silicon atom, more preferably a group formed of at least one selected from the group consisting of a carbon atom, a hydrogen atom, an oxygen atom, and a silicon atom, still more preferably a group consisting of a carbon atom, a hydrogen atom, and an oxygen atom or a group consisting of a carbon atom, a hydrogen atom, an oxygen atom, and a silicon atom, and particularly preferably a group consisting of a carbon atom, a hydrogen atom, an oxygen atom, and a silicon atom.

In addition, the number of carbon atoms in $L^2$ is preferably 2 to 30, more preferably 3 to 20, and particularly preferably 3 to 10.

Specific preferred examples of the constitutional unit A include constitutional units represented by K-1 to K-23.

Among these, from the viewpoints of the compatibility, the dispersibility, the dust adhesion suppressiveness, the coating surface state, the upper layer lamination properties, the surface state uniformity, and the cissing suppressiveness, K-1 or K-23 is particularly preferable.

K-1
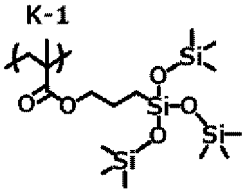
K-2
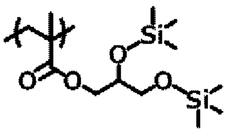
K-3
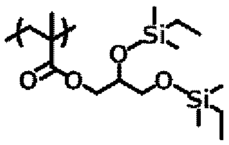
K-4
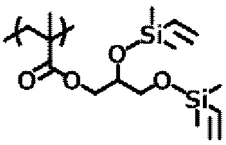

K-5
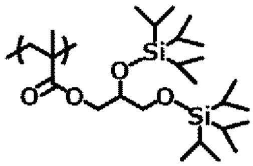
K-6
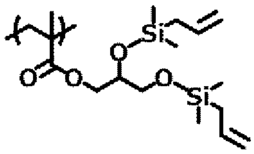
K-7
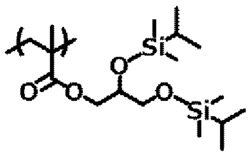
K-8
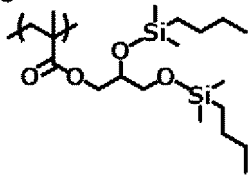

K-9
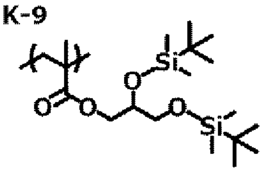
K-10
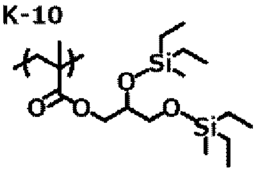
K-11
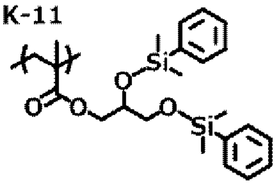
K-12
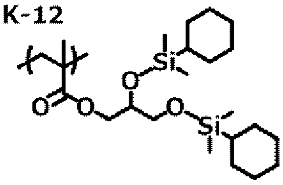

K-13
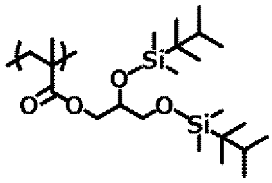
K-14
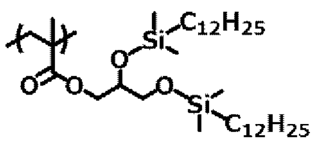
K-15
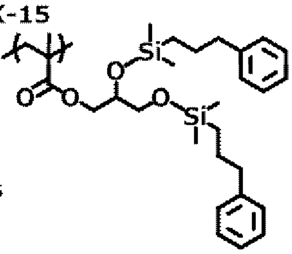
K-16
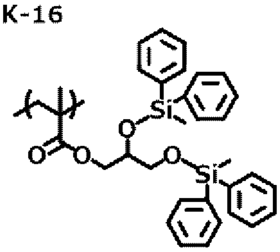

K-17
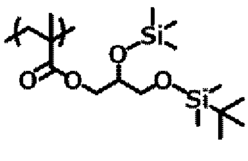
K-18
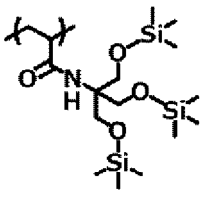
K-19
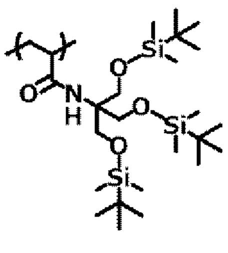
K-20
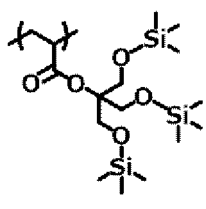

K-21

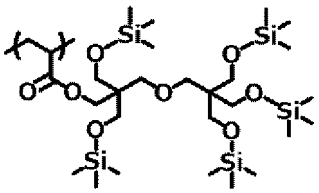

K-22

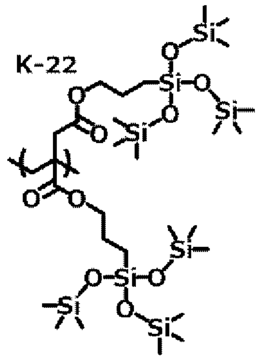

K-23

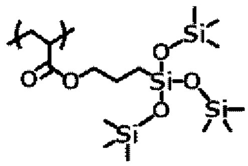

From the viewpoints of the dust adhesion suppressiveness, the coating surface state, the upper layer lamination properties, the surface state uniformity, and the cissing suppressiveness, the content of the constitutional unit A is preferably 30% by mass to 90% by mass, more preferably 40% by mass to 80% by mass, and particularly preferably 50% by mass to 70% by mass with respect to the total mass of the compound.

<Constitutional unit B derived from linear silicone (meth)acrylate>

From the viewpoints of the dust adhesion suppressiveness, the coating surface state, the upper layer lamination properties, the surface state uniformity, and the cissing suppressiveness, it is preferable that the compound according to the present disclosure has a constitutional unit B derived from linear silicone (meth)acrylate.

The constitutional unit B has a linear silicone chain.

From the viewpoints of the dust adhesion suppressiveness, the coating surface state, the upper layer lamination properties, the surface state uniformity, and the cissing suppressiveness, the group on the silicon atom other than the oxygen atom in the linear silicone chain is preferably an alkyl group or an aryl group, more preferably an alkyl group or a phenyl group, still more preferably an alkyl group having 1 to 10 carbon atoms, and particularly preferably a methyl group.

From the viewpoints of the dust adhesion suppressiveness, the coating surface state, the upper layer lamination properties, the surface state uniformity, and the cissing suppressiveness, the number of silicon atoms in the linear silicone chain is preferably 2 to 200, more preferably 3 to 50, still more preferably 6 to 21, and particularly preferably 9 to 21.

In addition, from the viewpoints of the dust adhesion suppressiveness, the coating surface state, the upper layer lamination properties, the surface state uniformity, and the cissing suppressiveness, the terminal of the linear silicone chain on the side opposite to the (meth)acryloxy group side (the (meth)acrylic resin chain side) is preferably a trialkylsiloxy group, more preferably a dimethyl monobutylsiloxy group, or a trimethylsiloxy group, and particularly preferably a dimethyl monobutylsiloxy group.

Further, the constitutional unit B is preferably a constitutional unit derived from a (meth)acrylate compound or a constitutional unit derived from (meth)acrylamide and more preferably a constitutional unit derived from a (meth)acrylate compound.

From the viewpoints of the dust adhesion suppressiveness, the coating surface state, the upper layer lamination properties, the surface state uniformity, and the cissing suppressiveness, it is preferable that the constitutional unit B is a constitutional unit represented by Formula (a2).

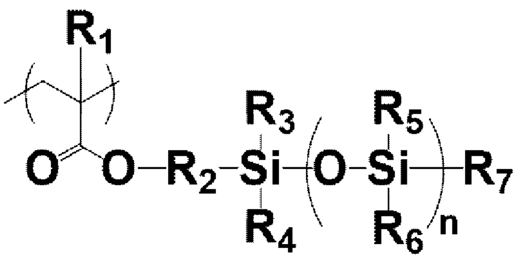 (a2)

In Formula (a2), $R_1$ represents a hydrogen atom or a methyl group, $R_2$ represents a divalent organic group having 1 to 20 carbon atoms, $R^3$ to $R_6$ each independently represent an alkyl group having 1 to 20 carbon atoms or an aryl group having 6 to 20 carbon atoms, $R_7$ represents an alkyl group having 1 to 20 carbon atoms or an aryl group having 6 to 20 carbon atoms, and n represents an integer of 1 to 200 which may have a distribution.

It is preferable that $R_1$ in Formula (a2) represents a methyl group.

From the viewpoints of the dust adhesion suppressiveness, the coating surface state, the upper layer lamination

properties, the surface state uniformity, and the cissing suppressiveness, $R_2$ in Formula (a2) represents preferably an alkylene group having 2 to 20 carbon atoms, more preferably an alkylene group having 2 to 10 carbon atoms, still more preferably an alkylene group having 3 to 8 carbon atoms, and particularly preferably a 1,3-propylene group.

From the viewpoints of the dust adhesion suppressiveness, the coating surface state, the upper layer lamination properties, the surface state uniformity, and the cissing suppressiveness, $R^3$ to $R_6$ in Formula (a2) each independently represent preferably an alkyl group having 1 to 20 carbon atoms or a phenyl group, more preferably an alkyl group having 1 to 10 carbon atoms, and particularly preferably a methyl group.

From the viewpoints of the dust adhesion suppressiveness, the coating surface state, the upper layer lamination properties, the surface state uniformity, and the cissing suppressiveness, $R_7$ in Formula (a2) represents preferably an alkyl group having 1 to 20 carbon atoms or a phenyl group, more preferably an alkyl group having 1 to 10 carbon atoms, and particularly preferably an alkyl group having 1 to 4 carbon atoms.

From the viewpoints of the dust adhesion suppressiveness, the coating surface state, the upper layer lamination properties, the surface state uniformity, and the cissing suppressiveness, n in Formula (a2) represents preferably 2 to 50, more preferably 5 to 20, and particularly preferably 8 to 20.

Specific preferred examples of the constitutional unit B include constitutional units represented by S-1 to S-6.

Among these, from the viewpoints of the dust adhesion suppressiveness, the coating surface state, the upper layer lamination properties, the surface state uniformity, and the cissing suppressiveness, S-1 or S-5 is preferable, and S-1 is particularly preferable.

S-1

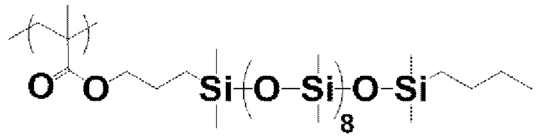

S-2

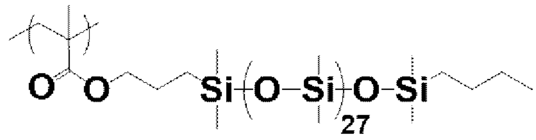

S-3

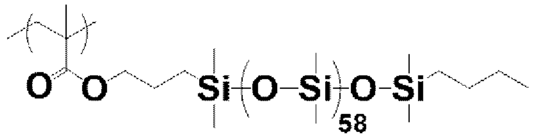

S-4

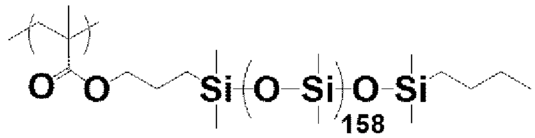

S-5

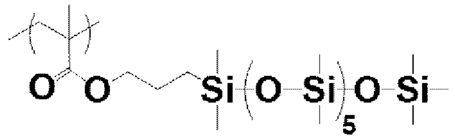

S-6

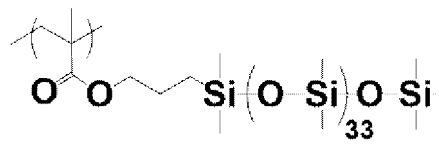

From the viewpoints of the dust adhesion suppressiveness, the coating surface state, the upper layer lamination properties, the surface state uniformity, and the cissing suppressiveness, the content of the constitutional unit B is preferably 30% by mass to 90% by mass, more preferably 40% by mass to 80% by mass, and particularly preferably 50% by mass to 70% by mass with respect to the total mass of the compound.

<Constitutional unit C represented by Formula (2)>

From the viewpoints of the dust adhesion suppressiveness, the electrostatic fogging suppressiveness, the density change suppressiveness after high-humidity storage, and the sensitivity stability, it is preferable that the compound according to the present disclosure has the constitutional unit C represented by Formula (2).

It is preferable that $R^3$ in Formula (2) represents a methyl group.

$L^3$ in Formula (2) represents preferably a single bond, -CONH-, -CONH-alkylene group-, -COO-, or -COO-alkylene group-, more preferably a single bond, -CONH-alkylene group-, or -COO-alkylene group-, still more preferably a single bond, $-COOCH_2CH_2-$, or $-CONHCH_2CH_2-$, and particularly preferably $-COOCH_2CH_2-$ or $-CONHCH_2CH_2-$.

Preferable aspects of the group having -OH, -COOH, $-PO_3H$, {-OP(=O)$(OH)_2$ }, $-CO_2M^1$, $-SO_3M^1$, $-NT^1T^2$, an oxazoline group, $-NG^1G^2G^3E^1$, and a group having a group having a betaine structure as $X^1$ of Formula (2) are as described below and are the same as the preferable aspects of the group having -OH, -COOH, $-PO_3H$, {-OP(=O)$(OH)_2$ },

$-CO_2M^1$, $-SO_3M^1$, $-NT^1T^2$, an oxazoline group, $-NG^1G^2G^3E^1$, and a group having a group having a betaine structure in the above-described compound.

From the viewpoints of the dust adhesion suppressiveness, the electrostatic fogging suppressiveness, the density change suppressiveness after high-humidity storage, and the sensitivity stability, $X^1$ in Formula (2) represents preferably at least one or more selected from the group consisting of -OH, -COOH, $-PO_3H$, $\{-OP(=O)(OH)_2\}$, $-CO_2M^1$, an oxazoline group, $-NG^1G^2G^3E^1$, and a group having a betaine structure, more preferably a group having a betaine structure, and particularly preferably a group having a betaine phosphate structure or a group having a betaine sulfonate structure.

Further, the constitutional unit C represented by Formula (2) is preferably a constitutional unit derived from a (meth)acrylate compound, a constitutional unit derived from (meth)acrylamide, a constitutional unit derived from (meth) acrylic acid, a constitutional unit derived from a (meth)acrylate, or a constitutional unit derived from vinyl oxazoline, more preferably a constitutional unit derived from a (meth)acrylate compound or a constitutional unit derived from (meth) acrylamide, and particularly preferably a constitutional unit derived from a (meth)acrylate compound.

Specific preferred examples of the constitutional unit C include constitutional units represented by H-1 to H-17.

Among these, from the viewpoints of the dust adhesion suppressiveness, the coating surface state, the upper layer lamination properties, the surface state uniformity, and the cissing suppressiveness, H-1 to H-5 or H-9 is preferable, H-1, H-2, H-4, or H-9 is more preferable, and H-1 or H-9 is particularly preferable.

H-1

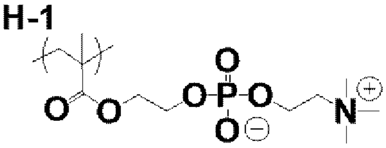

H-2

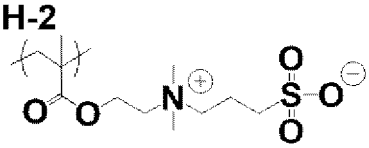

H-3

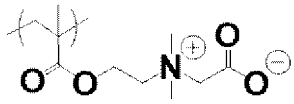

H-4

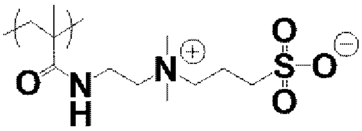

H-5

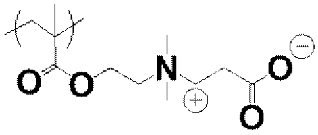

H-6

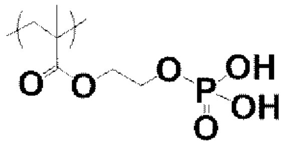

H-7

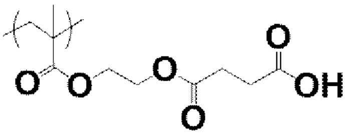

H-8

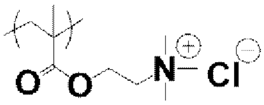

H-9

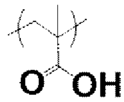

H-10

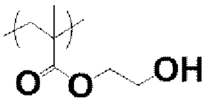

H-11

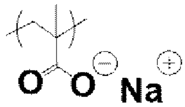

H-12

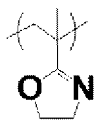

H-13

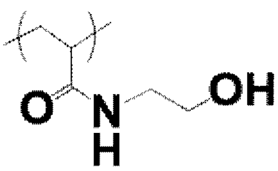

H-14

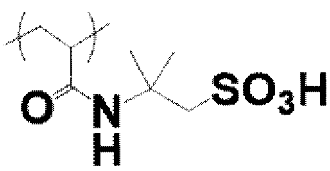

H-15

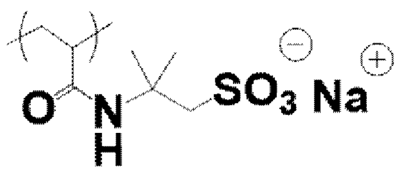

**H-16**

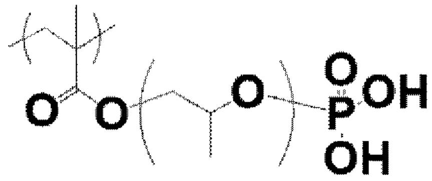

**H-17**

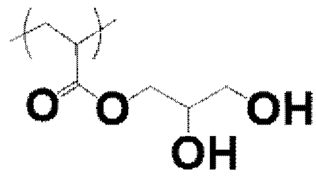

From the viewpoints of the dust adhesion suppressiveness, the electrostatic fogging suppressiveness, the density change suppressiveness after high-humidity storage, and the sensitivity stability, the content of the constitutional unit C is preferably 1% by mass to 50% by mass, more preferably 2% by mass to 30% by mass, and particularly preferably 5% by mass to 20% by mass with respect to the total mass of the compound.

<Constitutional unit D represented by Formula (3)>

From the viewpoints of the dust adhesion suppressiveness, the electrostatic fogging suppressiveness, the density change suppressiveness after high-humidity storage, and the sensitivity stability, the compound according to the present disclosure has preferably the constitutional unit D represented by Formula (3) and more preferably the constitutional unit C represented by Formula (2) and the constitutional unit D represented by Formula (3).

It is preferable that $R^4$ in Formula (3) represents a methyl group.

$L^4$ in Formula (3) represents preferably a divalent linking group, more preferably -COO- or -COO-alkylene group-, still more preferably -COO- or -COO-C2-C10 alkylene group-, and particularly preferably -COO-, $-COOCH_2CH_2-$, $-COOCH(CH_3)CH_2-$, or $-COOCH_2CH(CH_3)-$.

From the viewpoints of the dust adhesion suppressiveness, the electrostatic fogging suppressiveness, the density change suppressiveness after high-humidity storage, and the sensitivity stability, the polyoxyalkylene group as $X^2$ of Formula (3) is preferably a group obtained by combining two or more of the at least one group selected from the group consisting of an oxyethylene group, an oxypropylene group, and an oxybutylene group and more preferably a polyoxyethylene group.

From the viewpoints of the hydrophilicity, the dust adhesion suppressiveness, the electrostatic fogging suppressiveness, the density change suppressiveness after high-humidity storage, and the sensitivity stability, the number of oxyalkylene groups in the polyoxyalkylene group is preferably 2 to 500, preferably 8 to 200, and particularly preferably 20 to 150.

In addition, from the viewpoints of the dust adhesion suppressiveness, the electrostatic fogging suppressiveness, the density change suppressiveness after high-humidity storage, and the sensitivity stability, the terminal of the polyoxyalkylene group on the side opposite to $L^4$ is preferably a hydroxy group or an alkoxy group, more preferably a hydroxy group or an alkoxy group having 1 to 20 carbon atoms, and particularly preferably a hydroxy group or a methoxy group.

Further, the constitutional unit D represented by Formula (3) is preferably a constitutional unit derived from a (meth)acrylate compound or a constitutional unit derived from (meth)acrylamide and more preferably a constitutional unit derived from a (meth)acrylate compound.

Specific examples of the constitutional unit D include constitutional units represented by A-1 to A-13.

Among these, from the viewpoints of the dust adhesion suppressiveness, the coating surface state, the upper layer lamination properties, the surface state uniformity, and the cissing suppressiveness, A-1, A-7, or A-8 is preferable, and A-1 is particularly preferable.

**A-1**

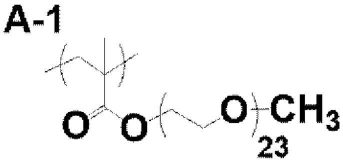

**A-2**

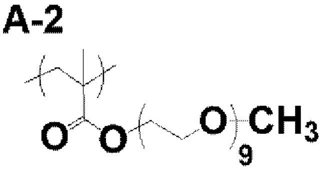

A-3

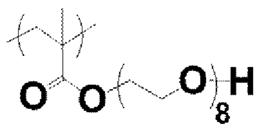

A-4

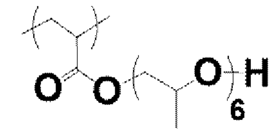

A-5

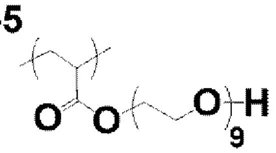

A-6

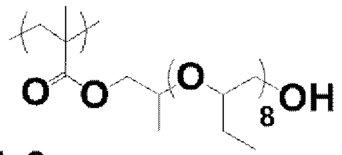

A-7

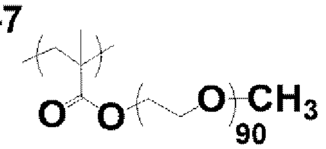

A-8

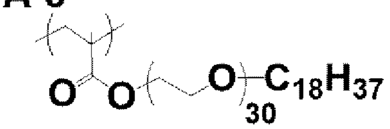

A-9

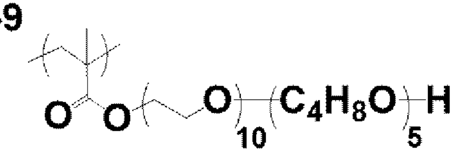

A-10

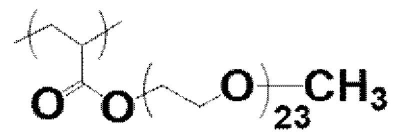

A-11

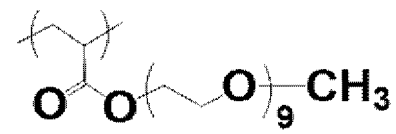

A-12

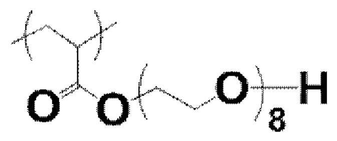

A-13

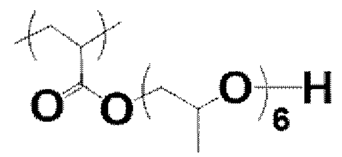

From the viewpoints of the dust adhesion suppressiveness, the electrostatic fogging suppressiveness, the density change suppressiveness after high-humidity storage, and the sensitivity stability, the content of the constitutional unit D is preferably 5% by mass to 70% by mass, more preferably 10% by mass to 50% by mass, and particularly preferably 20% by mass to 40% by mass with respect to the total mass of the compound.

From the viewpoints of the dust adhesion suppressiveness, the coating surface state, the upper layer lamination properties, the surface state uniformity, and the cissing suppressiveness, the weight-average molecular weight (Mw) or molecular weight of the compound according to the present disclosure is preferably 500 to 100,000, more preferably 2,000 to 40,000, still more preferably 5,000 to 30,000, and particularly preferably 10,000 to 20,000.

Specific preferred examples of the compound according to the present disclosure include (P1) to (P37). The copolymerization ratio in the polymer is not particularly limited, but is preferably set to be based on the preferable content described above. Further, in Formula (P1), m represents an integer of 0 or greater and 200 or less, n represents an integer of 1 or greater and 100 or less, a represents an integer of 0 or greater and 40 or less, b represents an integer of 0 or greater and 40 or less, and R represents a hydrogen atom or an alkyl group.

Among these, from the viewpoints of the dust adhesion suppressiveness, the coating surface state, the upper layer lamination properties, the surface state uniformity, the cissing suppressiveness, the electrostatic fogging suppressiveness, the density change suppressiveness after high-humidity storage, and the sensitivity stability, in a case where water is contained as a solvent in an amount of 50% by mass or greater (as a main component), (P2) or (P4) is preferable,

and (P2) is particularly preferable.

Examples of the compound particularly effective in a case of containing, as a solvent, an organic solvent such as acetone, methyl ethyl ketone, or methanol as a main component include (P8) to (P21).

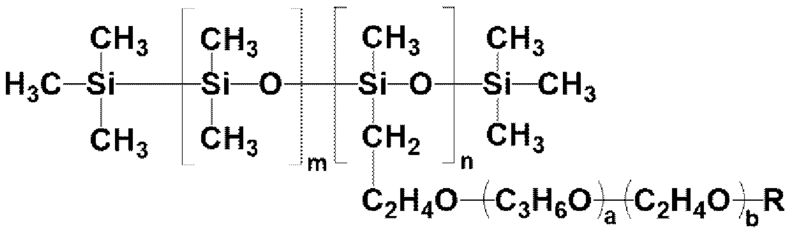

(P1)

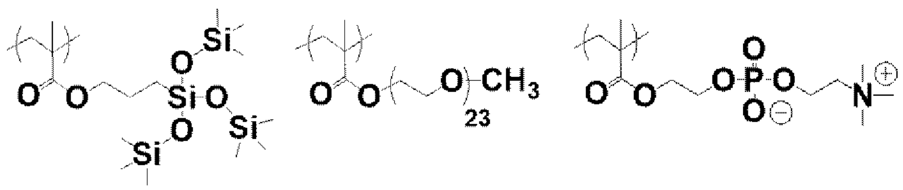

(P2)

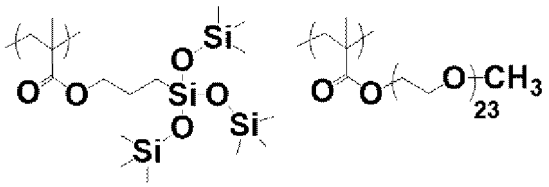

(P3)

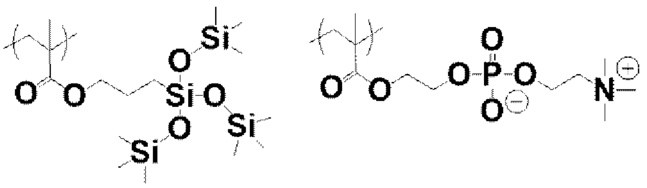

(P4)

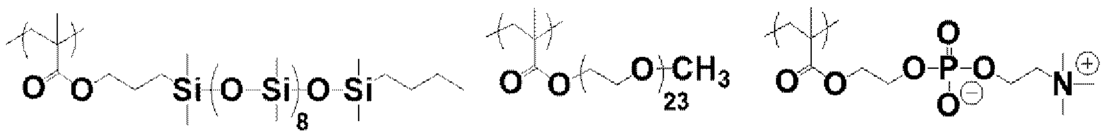

(P5)

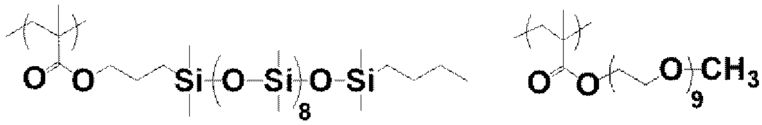

(P6)

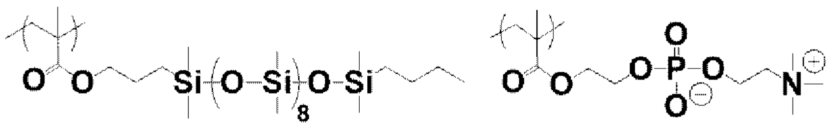

(P7)

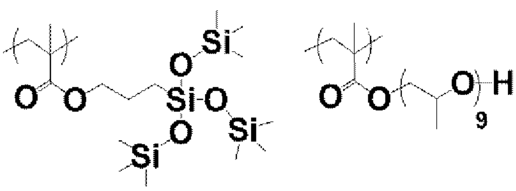

(P8)

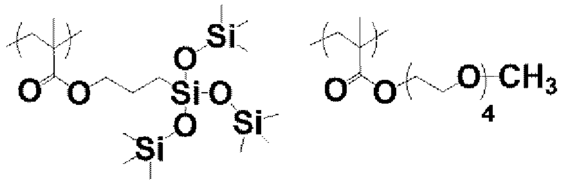

(P9)

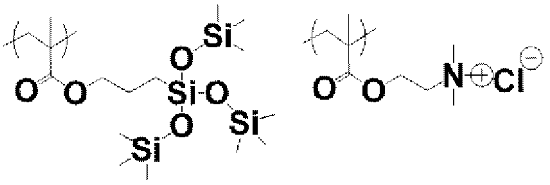

(P10)

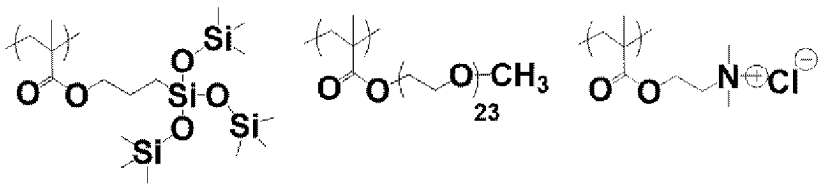

(P11)

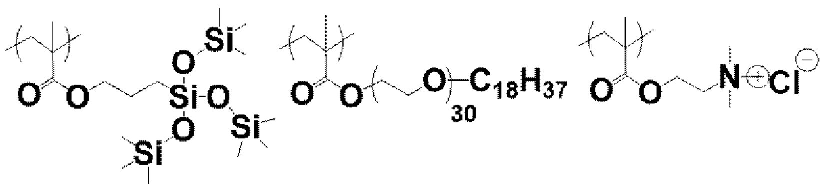

(P12)

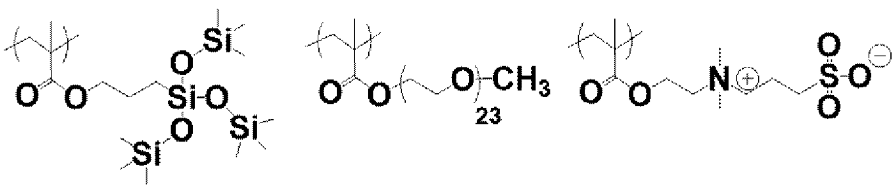

(P13)

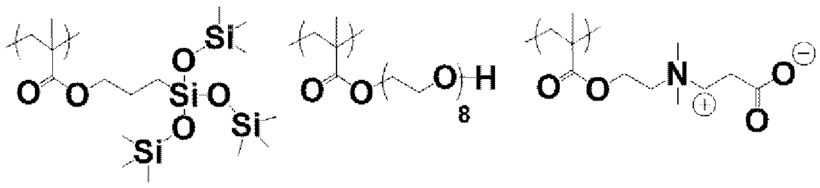

(P14)

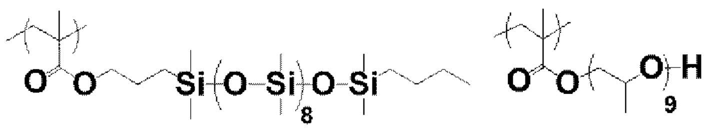

(P15)

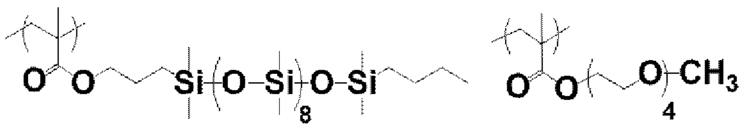

(P16)

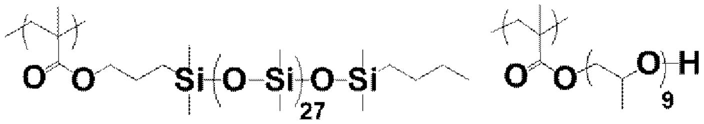

(P17)

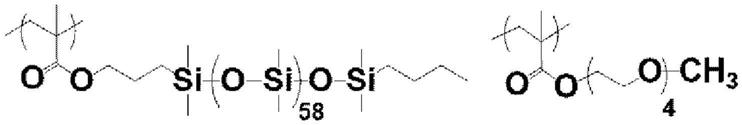

(P18)

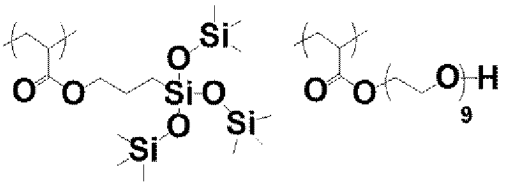

(P19)

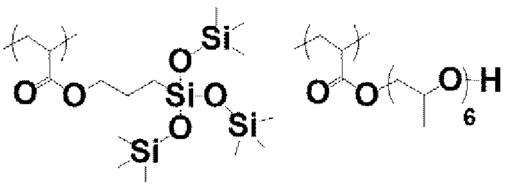

(P20)

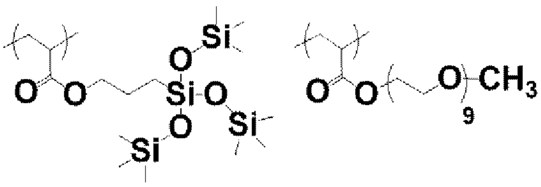

(P21)

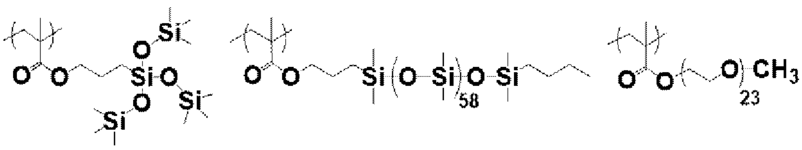

(P22)

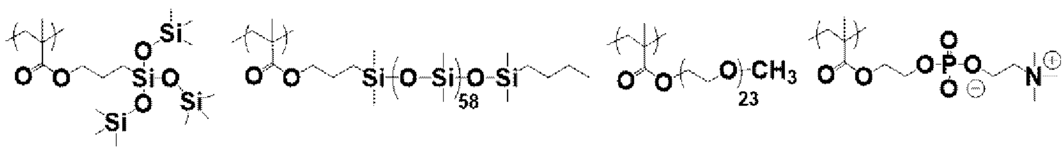

(P23)

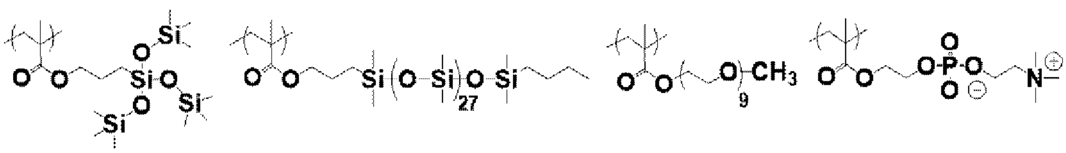

(P24)

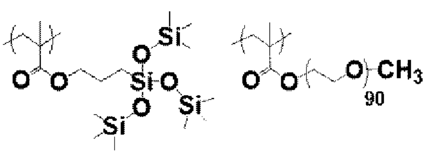

(P25)

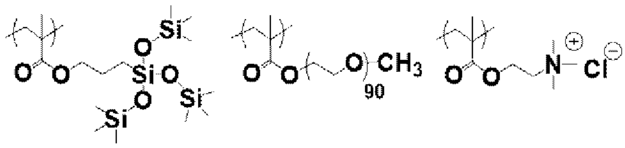

(P26)

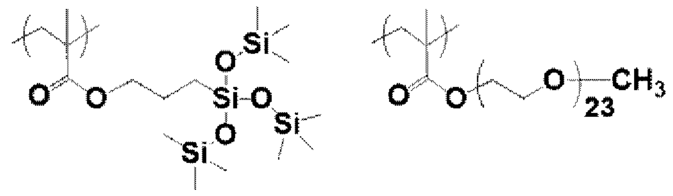

(P27)

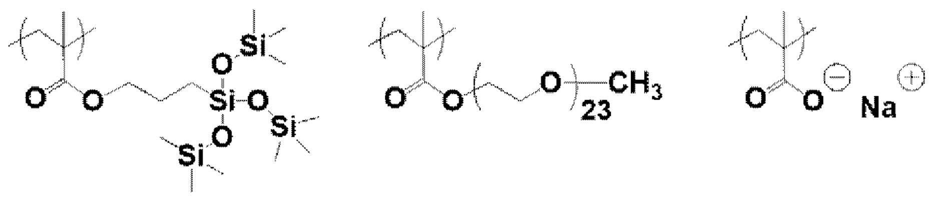

(P28)

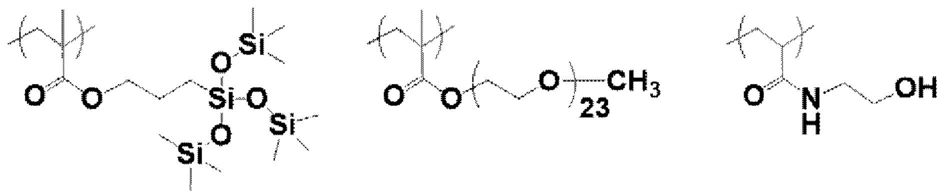

(P29)

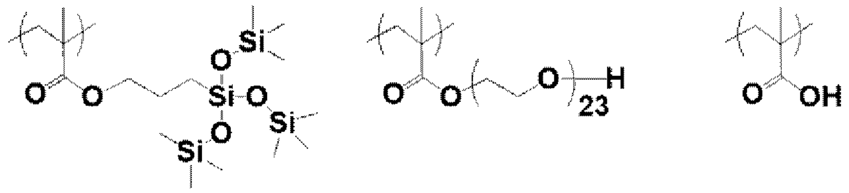

(P30)

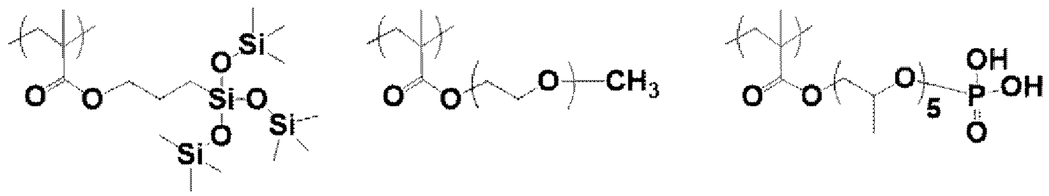

(P31)

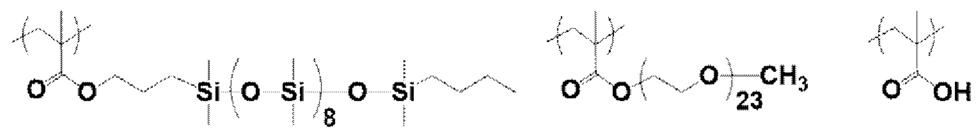

(P32)

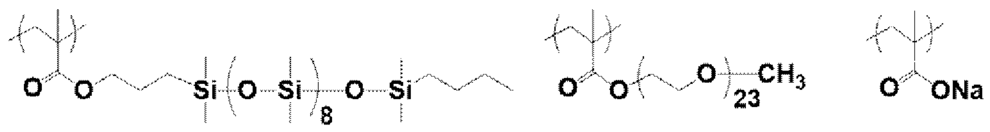

(P33)

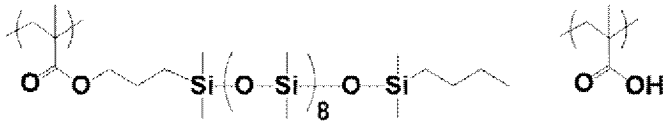
(P34)

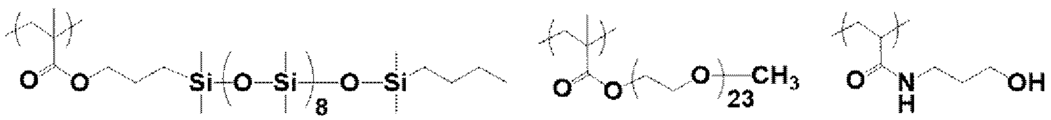
(P35)

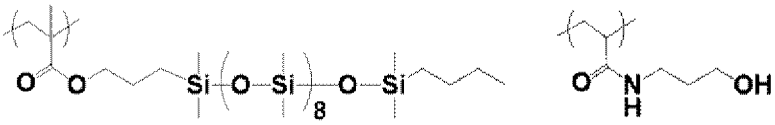
(P36)

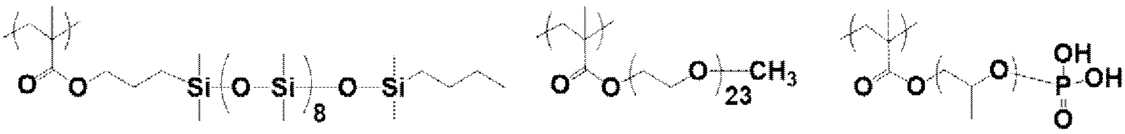
(P37)

From the viewpoints of the content of silicon atoms, suppression of cissing using the balance between hydrophilicity and hydrophobicity, the upper layer coating properties, and ease of synthesis, the compound according to the present disclosure is preferably a binary copolymer or a ternary copolymer and more preferably a ternary copolymer.

From the viewpoints of dust adhesion suppressiveness, cissing suppression, and the upper layer coating properties, a combination of the constitutional units is preferably a polymer having the constitutional unit A represented by any of Formulae K-1 to K-23 and the constitutional unit C represented by any of Formulae H-1 to H-17, more preferably a polymer having the constitutional unit A represented by any of Formulae K-1 to K-23, the constitutional unit C represented by any of Formulae H-1 to H-17, and the constitutional unit D represented by any of Formulae A-1 to A-13, particularly preferably a polymer having the constitutional unit A represented by any of Formula K-1 or K-23, the constitutional unit C represented by any of Formulae H-1 or H-9, and the constitutional unit D represented by Formulae A-1, A-7, or A-8, and most preferably a polymer having the constitutional unit A represented by Formula K-1, the constitutional unit C represented by Formulae H-1 or H-9, and the constitutional unit D represented by Formula A-1. Specific examples thereof include (P22) to (P31).

From the viewpoints of the coating surface state and the surface state uniformity, a combination of the constitutional units is preferably a polymer having the constitutional unit B represented by any of Formulae S-1 to S-6 and the constitutional unit C represented by any of Formulae H-1 to H-17, more preferably a polymer having the constitutional unit B represented by any of Formulae S-1 to S-6, the constitutional unit C represented by any of Formulae H-1 to H-17, and the constitutional unit D represented by any of Formulae A-1 to A-13, particularly preferably a polymer having the constitutional unit B represented by Formula S-1 or S-5, the constitutional unit C represented by Formulae H-1 or H-9, and the constitutional unit D represented by Formulae A-1, A-7, or A-8, and most preferably a polymer having the constitutional unit B represented by Formula S-1, the constitutional unit C represented by Formula H-1 or H-9, and the constitutional unit D represented by Formula A-1. Specific examples thereof include (P32) to (P37).

<Applications>

The applications of the compound according to the present disclosure are not particularly limited, but the compound can be suitably used as a leveling agent or a surfactant.

In addition, the compound according to the present disclosure can be suitably used for known applications as a leveling agent or a surfactant.

Further, the compound according to the present disclosure can be suitably used for film formation.

In addition, the compound according to the present disclosure can be suitably used for a photosensitive material, a surface modifier, a composition for forming a protective layer, a composition for forming a conductive layer, a composition for forming an undercoat layer, a pressure responsive material, a thermal responsive material, a microcapsule, a microgel, and the like.

Among these, the compound according to the present disclosure can be particularly suitably used for a silver halide photographic sensitive material and a diffusion transfer type silver halide photographic sensitive material.

(Composition)

The composition according to the present disclosure contains the compound (compound according to the present disclosure) which has a structure represented by Formula (Ia) and contains at least one or more selected from the group consisting of -OH, -COOH, $-PO_3H$, $\{-OP(=O)(OH)_2\}$, $-CO_2M^1$, $-SO_3M^1$, $-NT^1T^2$, an oxazoline group, $-NG^1G^2G^3E^1$, a group having a betaine structure, and a group having a polyoxyalkylene structure, and a binder.

Further, $M^1$ represents an alkali metal, an alkaline earth metal, Mg, Al, or $Q^1Q^2Q^3Q^4N^+$, $Q^1$, $Q^2$, $Q^3$, and $Q^4$ each independently represent a hydrogen atom or an alkyl group having 1 to 20 carbon atoms, $T^1$ and $T^2$ each independently represent a hydrogen atom, an alkyl group having 1 to 20 carbon atoms, an alkylene group, an oxyalkylene group, or an alkoxy group, $T^1$ and $T^2$ may be bonded to each other, $E^1$ represents an anion, and $G^1$, $G^2$, and $G^3$ each independently represent a hydrogen atom or an alkyl group having 1 to 20 carbon atoms.

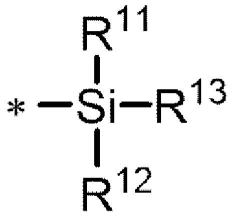

(Ia)

In Formula (Ia), * represents a bonding position, and $R^{11}$, $R^{12}$, and $R^{13}$ each independently represent an alkyl group, an alkenyl group, or an aryl group.

Preferable aspects of the compound in the composition according to the present disclosure are the same as the preferable aspects of the compound according to the present disclosure described above.

The composition according to the present disclosure may contain only one or two or more kinds of the compounds according to the present disclosure.

The content of the compound according to the present disclosure in the composition according to the present disclosure may be appropriately selected depending on the applications thereof, but is preferably 0.0001% by mass to 50% by mass, more preferably 0.001% by mass to 20% by mass, and particularly preferably 0.01% by mass to 10% by mass with respect to the total solid content of the composition.

<Binder>

The composition according to the present disclosure contains a binder.

The binder is not particularly limited, and may be appropriately selected depending on the applications thereof. In addition, a known binder polymer, a known monomer (that is, a polymerizable compound), or the like can be used.

Examples of the binder polymer include an epoxy resin, a diallyl phthalate resin, a silicone resin, a phenol resin, an unsaturated polyester resin, a polyimide resin, a polyurethane resin, a melamine resin, a urea resin, an ionomer resin, an ethylene ethyl acrylate resin, an acrylonitrile acrylate styrene copolymer resin, an acrylonitrile styrene resin, an acrylonitrile chloride polyethylene styrene copolymer resin, an ethylene-vinyl acetate resin, an ethylene vinyl alcohol copolymer resin, an acrylonitrile butadiene styrene copolymer resin, a vinyl chloride resin, a chlorinated polyethylene resin, a polyvinylidene chloride resin, a cellulose acetate resin, a fluororesin, a polyoxymethylene resin, a polyamide resin, a polyarylate resin, a thermoplastic polyurethane elastomer, a polyether ether ketone resin, a polyether sulfone resin, polyethylene, polypropylene, a polycarbonate resin, polystyrene, a polystyrene maleic acid copolymer resin, a polystyrene acrylic acid copolymer resin, a polyphenylene ether resin, a polyphenylene sulfide resin, a polybutadiene resin, a polybutylene terephthalate resin, an acrylic resin, a methacrylic resin, a methylpentene resin, polylactic acid, a polybutylene succinate resin, a butyral resin, a formal resin, polyvinyl alcohol, polyvinylpyrrolidone, ethyl cellulose, carboxymethyl cellulose, gelatin, and a copolymer resin thereof.

Examples of the polymerizable compound (that is, the monomer) include a (meth)acrylic monomer, an epoxy-based monomer, an oxetanyl-based monomer, and a vinyl-based monomer.

The (meth)acrylic monomer is not particularly limited, and examples thereof include known (meth)acrylate compounds, (meth)acrylamide compounds, (meth)acrylic acid, and (meth)acrylonitrile.

Specific examples thereof include alkyl (meth)acrylate such as methyl (meth)acrylate, ethyl (meth)acrylate, isopropyl (meth)acrylate, n-propyl (meth)acrylate, n-butyl (meth)acrylate, isobutyl (meth)acrylate, t-butyl (meth)acrylate, hexyl (meth)acrylate, or ethylhexyl (meth)acrylate, hydroxyalkyl (meth)acrylate such as hydroxymethyl (meth)acrylate, 2-hydroxyethyl (meth)acrylate, 2-hydroxypropyl (meth)acrylate, 4-hydroxybutyl (meth)acrylate, hydroxypentyl (meth)acrylate, or hydroxyhexyl (meth)acrylate, alkylaminoalkyl (meth)acrylate such as dimethylaminoethyl (meth)acrylate, diethylaminoethyl (meth)acrylate, or t-butylaminoethyl (meth)acrylate, aromatic ring-containing (meth)acrylate such

as benzyl (meth)acrylate or phenoxyethyl (meth)acrylate, styrenes such as styrene, α-methylstyrene, and chlorostyrene, alicyclic (meth)acrylate such as cyclopropyl (meth)acrylate, cyclobutyl (meth)acrylate, cyclopentyl (meth)acrylate, cyclohexyl (meth)acrylate, cycloheptyl (meth)acrylate, cyclooctyl (meth)acrylate, cyclononyl (meth)acrylate, cyclodecyl (meth)acrylate, isobornyl (meth)acrylate, norbornyl (meth)acrylate, adamantyl (meth)acrylate, dicyclopentanyl (meth) acrylate, or dicyclopentenyloxyethyl (meth)acrylate, N-hydroxyalkyl (meth)acrylamide such as N-hydroxymethyl (meth) acrylamide, N-hydroxybutyl (meth)acrylamide, or N-hydroxybutyl (meth)acrylamide, N-alkoxyalkyl (meth)acrylamide such as N-methoxymethyl (meth)acrylamide, N-ethoxymethyl (meth)acrylamide, N-(n-, iso)butoxymethyl (meth)acrylamide, N-methoxyethyl (meth)acrylamide, N-ethoxyethyl (meth)acrylamide, or N-(n-, iso)butoxyethyl (meth)acrylamide, (meth)acrylonitrile, tricyclodecanedimethanol di(meth)acrylate, tricyclodecanedimenanol di(meth)acrylate, 1,9-nonanediyl di(meth)acrylate, 1,6-hexanediol di(meth)acrylate, trimethylolpropane triacrylate, trimethylolpropane propylene oxide (PO)-modified triacrylate, trimethylolpropane ethylene oxide (EO)-modified triacrylate, trimethylolpropane trimethacrylate, pentaerythritol triacrylate, pentaerythritol tetraacrylate, pentaerythritol tetramethacrylate, dipentaerythritol pentaacrylate, dipentaerythritol pentamethacrylate, dipentaerythritol hexaacrylate, and dipentaerythritol hexamethacrylate.

Examples of an epoxy group-containing monomer which is the epoxy-based monomer include a bisphenol A type epoxy resin, a bisphenol F type epoxy resin, a brominated bisphenol A type epoxy resin, a bisphenol S type epoxy resin, a diphenyl ether epoxy resin, a hydroquinone type epoxy resin, a naphthalene type epoxy resin, a biphenyl type epoxy resin, a fluorene type epoxy resin, a phenol novolac type epoxy resin, an orthocresol novolac type epoxy resin, a trishydroxyphenylmethane type epoxy resin, a trifunctional epoxy resin, a tetraphenylolethane type epoxy resin, a dicyclopentadiene phenol type epoxy resin, a hydrogenated bisphenol A type epoxy resin, a bisphenol A nucleus-containing polyol type epoxy resin, a polypropylene glycol type epoxy resin, a glycidyl ester type epoxy resin, a glycidylamine type epoxy resin, a glyoxal type epoxy resin, an alicyclic epoxy resin, and a heterocyclic epoxy resin.

The composition according to the present disclosure may contain only one or two or more kinds of binder.

The content of the binder in the composition according to the present disclosure may be appropriately selected depending on the applications thereof, but is preferably 1% by mass to 99% by mass, more preferably 5% by mass to 90% by mass, and particularly preferably 10% by mass to 80% by mass with respect to the total solid content of the composition.

In addition, in a case where the composition according to the present disclosure contains other additives described below in addition to the binder, the composition may contain the binder in a sufficient proportion to form a desired functional film. In that case, the content of the binder is preferably 0.5% by mass to 98% by mass, more preferably 2% by mass to 60% by mass, and may be 2% by mass to 50% by mass with respect to the total solid content of the composition.

<Polymerization initiator>

The composition according to the present disclosure may contain a polymerization initiator.

Among these, in a case where the composition contains the polymerizable compound, it is preferable that the composition contains a polymerization initiator.

Examples of the polymerization initiator include a photopolymerization initiator and a thermal polymerization initiator.

Examples of the photopolymerization initiator include a photoradical polymerization initiator and a photocationic polymerization initiator.

Examples of the photopolymerization initiator include a halogenated hydrocarbon derivative (for example, a compound having a triazine skeleton or a compound having an oxadiazole skeleton), an acylphosphine compound, hexaarylbiimidazole, an oxime compound, an organic peroxide, a thio compound, a ketone compound, an aromatic onium salt, an α-hydroxy ketone compound, and an α-amino ketone compound.

Examples of the thermal polymerization initiator include a diazo compound, a peroxide, and an onium salt compound.

The composition according to the present disclosure may contain only one or two or more kinds of polymerization initiators.

The content of the polymerization initiator in the composition according to the present disclosure may be appropriately selected depending on the applications thereof, but is preferably 0.1% by mass to 30% by mass, more preferably 0.5% by mass to 25% by mass, and particularly preferably 1% by mass to 20% by mass with respect to the total solid content of the composition.

<Curing agent>

The composition according to the present disclosure may contain a curing agent.

Examples of the curing agent for the resin containing a hydroxyl group include polyisocyanates, partial condensates of isocyanate compounds, adducts with multimer, polyhydric alcohol, low-molecular-weight polyester coatings, and the like, blocked polyisocyanate compounds in which an isocyanate group is blocked with a blocking

agent such as phenol, melamine resins, urea resins, and polybasic acids or anhydrides thereof. In addition, examples of the curing agent for the resin containing an epoxy group include an aliphatic polyamine, an aromatic polyamine, polyamide amine, a modified polyamine, polymercaptan, an acid anhydride, phenol resol, and phenol novolac.

<Solvent>

From the viewpoints of the coating properties and the like, the composition according to the present disclosure may contain a solvent.

Examples of the solvent include water, an organic solvent, and a mixed solvent of water and an organic solvent.

As water, distilled water, ion exchange water, or the like can be used.

The organic solvent can be appropriately selected depending on the applications, the purpose, and the like of the liquid composition. Examples of the organic solvent include an ester, an ether, a ketone, an aromatic hydrocarbon, and an alcohol.

Examples of the ester include ethyl acetate, n-butyl acetate, isobutyl acetate, amyl formate, isoamyl acetate, isobutyl acetate, butyl propionate, isopropyl butyrate, ethyl butyrate, butyl butyrate, methyl lactate, ethyl lactate, an alkyl oxyacetate-based solvent (examples thereof include methyl oxyacetate, ethyl oxyacetate, and butyl oxyacetate (specific examples thereof include methyl methoxyacetate, ethyl methoxyacetate, butyl methoxyacetate, methyl ethoxyacetate, and ethyl ethoxyacetate)), an alkyl 3-oxypropionate-based solvent (examples thereof include methyl 3-oxypropionate and ethyl 3-oxypropionate (specific examples thereof include methyl 3-methoxypropionate, ethyl 3-methoxypropionate, methyl 3-ethoxypropionate, and ethyl 3-ethoxypropionate)), an alkyl 2-oxypropionate-based solvent (examples thereof include methyl 2-oxypropionate, ethyl 2-oxypropionate, and propyl 2-oxypropionate (specific examples thereof include methyl 2-methoxypropionate, ethyl 2-methoxypropionate, propyl 2-methoxypropionate, methyl 2-ethoxypropionate, and ethyl 2-ethoxypropionate)), an alkyl 2-oxy-2-methylpropionate-based solvent (examples thereof include methyl 2-oxy-2-methylpropionate and ethyl 2-oxy-2-methylpropionate (specific examples thereof include methyl 2-methoxy-2-methylpropionate and ethyl 2-ethoxy-2-methylpropionate)), methyl pyruvate, ethyl pyruvate, propyl pyruvate, methyl acetoacetate, ethyl acetoacetate, methyl 2-oxobutanoate, ethyl 2-oxobutanoate, cyclohexyl acetate, and 1-methyl-2-methoxyethyl propionate.

Examples of the ether include diethylene glycol dimethyl ether, tetrahydrofuran, ethylene glycol monomethyl ether, ethylene glycol monoethyl ether, methyl cellosolve acetate, ethyl cellosolve acetate, diethylene glycol monomethyl ether, diethylene glycol monoethyl ether, diethylene glycol monobutyl ether, propylene glycol monomethyl ether, propylene glycol monomethyl ether acetate (also referred to as PEGMEA), diethylene glycol monoethyl ether acetate (also referred to as ethyl carbitol acetate), diethylene glycol monobutyl ether acetate (also referred to as butyl carbitol acetate), propylene glycol monoethyl ether acetate, and propylene glycol monopropyl ether acetate.

Examples of the ketone include acetone, methyl ethyl ketone, cyclohexanone, 2-heptanone, and 3-heptanone.

Examples of the aromatic hydrocarbon include toluene and xylene.

Examples of the alcohols include alcohols (for example, methanol, ethanol, propanol, isopropanol, butanol, isobutanol, sec-butanol, t-butanol, pentanol, hexanol, cyclohexanol, and benzyl alcohol), polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol, and thiodiglycol), and glycol derivatives (for example, ethylene glycol monomethyl ether, ethylene glycol monoethyl ether, ethylene glycol monobutyl ether, diethylene glycol monomethyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monomethyl ether, triethylene glycol monoethyl ether, triethylene glycol monobutyl ether, and ethylene glycol monophenyl ether).

In addition, from the viewpoint of further exhibiting leveling properties or a surface-active effect, preferred examples of the solvent include at least one solvent selected from the group consisting of water and a water-soluble solvent.

Examples of the water-soluble solvent include amines (for example, ethanolamine, diethanolamine, triethanolamine, N-methyldiethanolamine, N-ethyldiethanolamine, morpholine, N-ethylmorpholine, ethylenediamine, diethylenetriamine, triethylenetetramine, polyethyleneimine, and tetramethylpropylenediamine), and other polar solvents (for example, formamide, N,N-dimethylformamide, N,N-dimethylacetamide, dimethyl sulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile, and acetone) in addition to the substances exemplified as the alcohols.

The composition according to the present disclosure may contain only one or two or more kinds of solvents.

The content of the solvent in the composition according to the present disclosure may be appropriately selected depending on the applications thereof.

<Other additives>

The composition according to the present disclosure can contain known additives depending on the applications thereof in addition to each of the components described above.
Examples of other additives include known additives such as a colorant, a surfactant other than the compound according to the present disclosure, a leveling agent other than the compound according to the present disclosure, a filler, a fading inhibitor, an emulsion stabilizer, a penetration enhancer, an ultraviolet absorber, a preservative, a fungicide, a pH adjuster, a viscosity adjuster, a dispersion stabilizer, a rust inhibitor, and a chelating agent.

(Functional material)

The functional material according to the present disclosure includes a support, and a layer that is provided on the support and contains a compound (that is, the compound according to the present disclosure) having a structure represented by Formula (Ia) and having at least one or more selected from the group consisting of -OH, -COOH, $-PO_3H$, $\{-OP(=O)(OH)_2\}$, $-CO_2M^1$, $-SO_3M^1$, $-NT^1T^2$, an oxazoline group, $-NG^1G^2G^3E^1$, a group having a betaine structure, and a group having a polyoxyalkylene structure.
$M^1$ represents an alkali metal, an alkaline earth metal, Mg, Al, or $Q^1Q^2Q^3Q^4N^+$, $Q^1$, $Q^2$, $Q^3$, and $Q^4$ each independently represent a hydrogen atom or an alkyl group having 1 to 20 carbon atoms, $T^1$ and $T^2$ each independently represent a hydrogen atom, an alkyl group having 1 to 20 carbon atoms, an alkylene group, an oxyalkylene group, or an alkoxy group, $T^1$ and $T^2$ may be bonded to each other, $E^1$ represents an anion, and $G^1$, $G^2$, and $G^3$ each independently represent a hydrogen atom or an alkyl group having 1 to 20 carbon atoms.

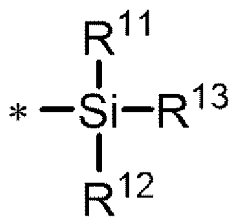

(Ia)

In Formula (Ia), * represents a bonding position, and $R^{11}$, $R^{12}$, and $R^{13}$ each independently represent an alkyl group, an alkenyl group, or an aryl group.
The functional material according to the present disclosure is not particularly limited as long as the functional material has a layer containing the compound according to the present disclosure on a support, and suitable examples thereof include a photosensitive material, a material having a protective layer, a material having a conductive layer, a material having an undercoat layer, a pressure responsive material, and a thermal responsive material.
Among these, a silver halide photographic sensitive material and a diffusion transfer type silver halide photographic sensitive material, which will be described below, are particularly suitable.

<Layer containing compound according to present disclosure>

Preferable aspects of the compound in the functional material according to the present disclosure are the same as the preferable aspects of the compound according to the present disclosure described above.
The functional material according to the present disclosure may contain only one or two or more kinds of the compounds according to the present disclosure.
The layer containing the compound according to the present disclosure may be a single layer or a plurality of layers. In a case where the functional material is formed of a plurality of layers, these layers may be sequentially formed or simultaneously formed by multilayer coating or the like.
The content of the compound according to the present disclosure in the above-described layer of the functional material according to the present disclosure may be appropriately selected depending on the applications thereof, but is preferably 0.0001% by mass to 50% by mass, more preferably 0.001% by mass to 20% by mass, and particularly preferably 0.01% by mass to 10% by mass with respect to the total mass of the above-described layer.
As the compound according to the present disclosure, a silicone-based surfactant having a polyoxyalkylene structure as shown below can be used in the functional material according to the present disclosure. The silicone-based surfactant having a polyoxyalkylene structure means a surfactant having a polyoxyalkylene structure and a polysiloxane structure, and may have a functional group such as a hydrophilic group, a hydrophilic polymer chain, and the like, such as a polyether-modified group, a polyether-alkyl co-modified group, a polyglycerin-modified group, and a polyglycerin-alkyl co-modified group, at a side chain, a terminal, and the like. More specifically, it is preferable that the functional material

contains a silicone-based surfactant represented by General Formula (1).

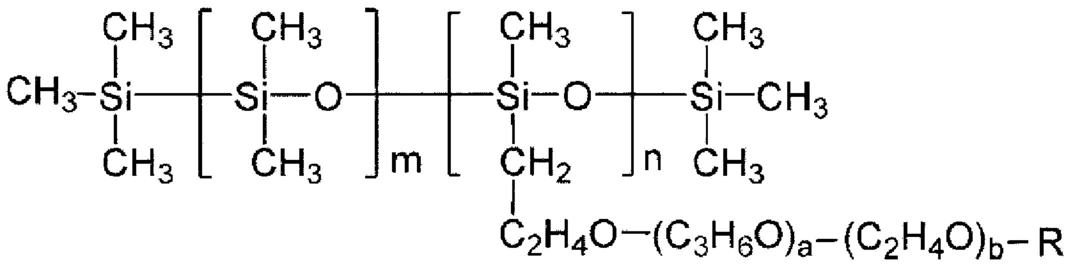

(1)

In Formula (1), m represents an integer of 0 or greater and 200 or less, preferably 0 or greater and 100 or less, and more preferably 0 or greater and 50 or less, and n represents an integer of 1 or greater and 100 or less, preferably 2 or greater and 80 or less, and more preferably 4 or greater and 50 or less. In Formula (1), a represents an integer of 0 or greater and 40 or less, preferably 35 or less, more preferably 25 or less, and still more preferably 15 or less, and b represents an integer of 0 or greater and 40 or less, preferably 2 or greater and 35 or less, more preferably 4 or greater and 25 or less, and still more preferably 6 or greater and 20 or less.

(a + b) is preferably 1 or greater and 50 or less, more preferably 2 or greater and 40 or less, and still more preferably 5 or greater and 30 or less. Further, each structural unit of m, n, a, and b may be a block copolymer or a random copolymer.

In a case where the composition according to the present disclosure contains 50% by mass or greater of water as a solvent (as a main component), the weight-average molecular weight thereof is preferably 400 to 30,000, more preferably 400 to 10,000, and particularly preferably 400 to 2,000. Further, in a case where the composition according to the present disclosure contains, as a main component, an organic solvent such as acetone, methyl ethyl ketone, or methanol as a solvent, the weight-average molecular weight thereof is preferably 1,000 to 60,000, more preferably 1,000 to 50,000, and is 2,000 to 40,000.

R in General Formula (1) represents a hydrogen atom or an alkyl group, preferably a hydrogen atom or an alkyl group having 1 to 15 carbon atoms, more preferably a hydrogen atom or an alkyl group having 1 to 8 carbon atoms, still more preferably a hydrogen atom or an alkyl group having 1 to 3 carbon atoms, and even still more preferably a hydrogen atom or a methyl group.

Examples of the polyether-modified silicone-based surfactant represented by General Formula (1) include PEG-3 dimethicone, PEG-9 dimethicone, PEG-9PEG-9 dimethicone, PEG-9 methyl ether dimethicone, PEG-10 dimethicone, PEG-11 methyl ether dimethicone, PEG/PPG-20/22 butyl ether dimethicone, PEG-32 methyl ether dimethicone, PEG-9 polydimethylsiloxyethyl dimethicone, lauryl PEG-9 polydimethylsiloxyethyl dimethicone, a dimethicone/(-PEG-10/15) crosspolymer, and a (PEG-15/lauryl polydimethylsiloxyethyl dimethicone) crosspolymer.

Examples of a commercially available product of the silicone-based surfactant include BYK-302, BYK-306, BYK-307, BYK-326, BYK-333, BYK-341, BYK-345, BYK-346, BYK-347, BYK-348, BYK-379, BYK-3451, BYK-3565, and BYK-UV3530 (all trade names, manufactured by BYK-Chemie GmbH), KF-351A, KF-352A, KF-353, KF-354L, KF-355A, KF-615A, KF-618, KF-642, KF-643, KF-945, KF-640, KF-642, KF-643, KF-6020, X-22-4515, KF-6011, KF-6012, KF-6013, KF-6015, KF-6017, KF-6028, KF-6038, KF-6043, KP-101, KP-104, KP-105, KP-106, KP-109, KP-110, KP-112, KP-118, KP-120, KP-121, KP-124, KP-125, and KP-341 (all trade names, manufactured by Shin-Etsu Chemical Co., Ltd.), SAG503A, SAG014, and SAG002 (all trade names, manufactured by Nissin Chemical Co., Ltd.), TEGO WET240 and TEGO WET270 (both trade names, manufactured by Evonik Industries AG), EMALEX-SS-5602 and SS-1906EX (both trade names, manufactured by Nihon Emulsion Co., Ltd.), FZ-2105, FZ-2118, FZ-2154, FZ-2161, FZ-2162, FZ-2163, FZ-2164, Dowsil 67, and Dowsil 501W (all trade names, manufactured by Dow Corning Toray Co., Ltd.), BYK-33 and BYK-387 (both trade names, manufactured by BYK-Chemie GmbH), and TSF4440, TSF4452, and TSF4453 (all trade names, manufactured by Toshiba Silicone Co., Ltd.).

The above-described layer may contain known components depending on the applications thereof. For example, the layer may contain the above-described binder and the above-described polymerization initiator, and may contain a colorant, a surfactant other than the compound according to the present disclosure, a leveling agent other than the compound according to the present disclosure, a filler, a fading inhibitor, an emulsion stabilizer, a penetration enhancer, an ultraviolet absorber, a preservative, a fungicide, a pH adjuster, a viscosity adjuster, a dispersion stabilizer, a rust inhibitor, a chelating agent, or the like.

In addition, the layer may contain various components contained in a silver halide photographic sensitive material or a diffusion transfer type silver halide photographic sensitive material, which will be described below.

The average thickness of the above-described layer is not particularly limited and may be selected depending on the applications thereof, but is preferably 0.01 μm to 1 mm and more preferably 0.1 μm to 200 μm.

In the present disclosure, the method of measuring the average thickness is as follows.

The sample is cut along a plane parallel to the thickness direction, the thickness is measured at five or more points in the cross section, and the average value thereof is defined as the average thickness.

Particularly, in a case where the compound according to the present disclosure has a matting agent having a thickness greater than the average film thickness of the layer in the outermost layer of the functional material, the compound can exhibit an effect of preventing cissing and improving the surface state. Specifically, a ratio (D/d) of a particle size D of the matting agent to an average film thickness d is preferably 1.5 to 60, more preferably 5 to 50, and still more preferably 10 to 50. The content of the matting agent varies depending on the desired shape of the surface, but is preferably 10 $mg/m^2$ to 800 $mg/m^2$, more preferably 20 $mg/m^2$ to 600 $mg/m^2$, and still more preferably 30 $mg/m^2$ to 500 $mg/m^2$. In this case, the binder is preferably a water-soluble colloid, and examples thereof include gelatin, carboxymethyl cellulose, and polyvinyl alcohol.

<Support>

The functional material according to the present disclosure has a support.

Examples of the support include a metal plate, a glass plate, a resin plate, a resin film, a paper support, and a metal foil. In addition, the support may be a laminate having various functional layers.

In addition, the support may be surface-treated.

The average thickness of the support is not particularly limited, but is preferably 0.1 μm or greater and 10 cm or less and more preferably 1 μm or greater and 1 mm or less.

<Other layers>

The functional material according to the present disclosure may have other layers between the support and the above-described layer or on a side of the support opposite to a side having the above-described layer, depending on the applications thereof.

The other layers are not particularly limited, and examples thereof include known layers in known applications.

(Silver halide photographic sensitive material)

The silver halide photographic sensitive material according to the present disclosure includes a support, and a layer that is provided on the support and contains a compound having a structure represented by Formula (Ia) and having at least one or more selected from the group consisting of -OH, -COOH, $-PO_3H$, {-OP(=O)$(OH)_2$}, $-CO_2M^1$, $-SO_3M^1$, $-NT^1T^2$, an oxazoline group, $-NG^1G^2G^3E^1$, a group having a betaine structure, and a group having a polyoxyalkylene structure.

$M^1$ represents an alkali metal, an alkaline earth metal, Mg, Al, or $Q^1Q^2Q^3Q^4N^+$, $Q^1$, $Q^2$, $Q^3$, and $Q^4$ each independently represent a hydrogen atom or an alkyl group having 1 to 20 carbon atoms, $T^1$ and $T^2$ each independently represent a hydrogen atom, an alkyl group having 1 to 20 carbon atoms, an alkylene group, an oxyalkylene group, or an alkoxy group, $T^1$ and $T^2$ may be bonded to each other, $E^1$ represents an anion, and $G^1$, $G^2$, and $G^3$ each independently represent a hydrogen atom or an alkyl group having 1 to 20 carbon atoms.

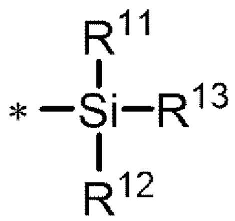

(Ia)

In Formula (Ia), * represents a bonding position, and $R^{11}$, $R^{12}$, and $R^{13}$ each independently represent an alkyl group, an alkenyl group, or an aryl group.

The silver halide photographic sensitive material is preferably a material photosensitive to irradiation with light, a laser, or X-ray, and is suitably selected from a black-and-white reversal film, a black-and-white negative film, a color reversal film, a color negative film, a film in which photosensitive photographic components are digitally scanned, black-and-white reversal paper, black-and-white paper, color paper, reversal color paper, paper in which photosensitive photographic components are exposed to a laser applied from a digital database, and a photosensitive material subjected to a development treatment with heat.

Preferable aspects of the compound in the silver halide photographic sensitive material according to the present

disclosure are the same as the preferable aspects of the compound according to the present disclosure described above.

The silver halide photographic sensitive material according to the present disclosure may contain only one or two or more kinds of the compounds according to the present disclosure.

The content of the compound according to the present disclosure in the above-described layer of the silver halide photographic sensitive material according to the present disclosure may be appropriately selected depending on the applications thereof, but is preferably 0.0001% by mass to 50% by mass, more preferably 0.001% by mass to 20% by mass, and particularly preferably 0.01% by mass to 10% by mass with respect to the total mass of the above-described layer.

The above-described layer may be any layer constituting a silver halide photographic sensitive material described below. In a case of forming a layer by coating, it is preferable that the layer is an outermost layer during coating. In a case where a plurality of layers are sequentially laminated, it is preferable that the sequential coating is applied to each outermost layer.

In addition, in the silver halide photographic sensitive material according to the present disclosure, the layer containing the compound according to the present disclosure may be one layer or two or more layers.

The above-described layer may contain various components contained in the silver halide photographic sensitive material described below.

In the present disclosure, in a case where the compound according to the present disclosure is used in the layer of the photographic sensitive material, the aqueous coating composition containing the compound according to the present disclosure may be formed of only the compound according to the present disclosure and water, or may appropriately contain other components depending on the purpose.

In the aqueous coating composition, the compound according to the present disclosure may be used alone or in the form of a mixture of two or more kinds thereof.

In addition, a surfactant other than the compound according to the present disclosure may be used together with the compound according to the present disclosure.

Examples of the surfactant that can be used include various anionic, cationic, and nonionic surfactants, and the surfactant may be a polymeric surfactant or a silicone-based surfactant other than the compound according to the present disclosure. Among these, anionic or nonionic surfactants are more preferable. Specific examples thereof include the compounds that can be used in the functional material according to the present disclosure described above. In addition, in a case where the photosensitive material is a target, particularly, among silicone-based surfactants, a nonionic surfactant containing an alkylene oxide group is preferable from the viewpoint that degradation of the sensitivity of the photosensitive material during storage is small, and the inhibition of mordanting is less particularly in a case where the nonionic surfactant is used for a diffusion transfer type silver halide photographic sensitive material.

Examples of the surfactant which can be used in combination include the surfactants described in JP1987-215272A (JP-S62-215272A) (pp. 649 to 706) and Research Disclosure (RD) Item 17643 (pp. 26 and 27 (December 1978)), Research Disclosure (RD) Item 18716 (p. 650 (November 1979)), and Research Disclosure (RD) Item 307105 (pp. 875 and 876 (November 1989)).

A representative example of the above-described compound which may be contained in the aqueous coating composition is a polymer compound. The polymer compound may be a polymer (also referred to as a soluble polymer) soluble in a water-soluble solvent or may be an aqueous dispersion of a polymer (so-called polymer latex).

The soluble polymer is not particularly limited, and examples thereof include gelatin, polyvinyl alcohol, casein, agar, gum arabic, hydroxyethyl cellulose, methyl cellulose, and carboxymethyl cellulose. Examples of the polymer latex include a homopolymer or copolymer of various vinyl monomers (for example, an acrylate derivative, a methacrylate derivative, an acrylamide derivative, a methacrylamide derivative, a styrene derivative, a conjugated diene derivative, an N-vinyl compound, an O-vinyl compound, vinyl nitrile, and other vinyl compounds (for example, ethylene and vinylidene chloride)) and a dispersion of a condensation polymer (for example, polyester, polyurethane, polycarbonate, and polyamide). Specific examples of this type of polymer compound include the polymer compounds described in JP1987-215272A (JP-S62-215272A) (pp. 707 to 763) and Research Disclosure (RD) Item 17643 (p. 651 (December 1978)), Research Disclosure (RD) Item 18716 (p. 650 (November 1979)), and Research Disclosure (RD) Item 307105 (pp. 873 and 874 (November 1989)).

The solvent in the aqueous coating composition may be water alone or a mixed solvent of water and an organic solvent other than water (for example, methanol, ethanol, isopropyl alcohol, n-butanol, methyl cellosolve, dimethylformamide, acetone, or ethyl acetate). The proportion of water in the solvent of the aqueous coating composition is preferably 50% by mass or greater.

The aqueous coating composition may contain various compounds depending on the layer of the photographic sensitive material to be used, and the compounds may be dissolved or dispersed in a medium. Examples thereof include various couplers, ultraviolet absorbers, color mixing inhibitors, antistatic agents, scavengers, fogging inhibitors, hardening agents, dyes, and fungicides. In addition, in order to obtain an effective antistatic ability and uniformity of coating, it is preferable to use the compound in the photographic sensitive material and a hydrophilic colloid layer as the uppermost

layer.

In this case, the coating composition for the above-described layer can contain, in addition to the hydrophilic colloid (for example, gelatin) and the compound according to the present disclosure, other surfactants, matting agents, lubricants, colloidal silica, plasticizers, and the like.

The amount of the compound according to the present disclosure to be used is not particularly limited, and can be optionally changed depending on the structure of the compound according to the present disclosure, the applications thereof, the kind and the amount of the compound contained in the aqueous composition, the configuration of the solvent, and the like. For example, in a case where the compound according to the present disclosure is used as a coating liquid for a hydrophilic colloid (for example, gelatin) layer as the uppermost layer of the photographic sensitive material according to the preferable aspect of the present disclosure, the concentration of the compound in the coating solution is preferably 0.003% by mass to 0.5% by mass, and the concentration thereof is preferably 0.03% by mass to 10% by mass with respect to the gelatin solid content.

In the present disclosure, in a case where the photographic sensitive material has a layer formed of a hydrophobic binder component, the compound according to the present disclosure and the hydrophobic binder component can be used together with an organic solvent in a composition for preparing the layer. Preferable aspects in this case are the same as the preferable aspects of the above-described layer containing the compound according to the present disclosure.

The silver halide photographic sensitive material according to the present disclosure may have at least one photosensitive layer provided on the support.

A typical example thereof is a silver halide photographic sensitive material having at least one photosensitive layer that is provided on a support and is formed of a plurality of silver halide emulsion layers having substantially the same color sensitivity but different photosensitivities. The photosensitive layer is a unit photosensitive layer having color sensitivity to any of blue light, green light, or red light, and in a multilayer silver halide color photographic sensitive material, the unit photosensitive layers are usually arranged such that a red color sensitive layer, a green color sensitive layer, and a blue color sensitive layer are installed in this order from the support side. However, the installation order may be reversed depending on the purpose, or an installation order in which different photosensitive layers are sandwiched between the same color sensitive layers can also be employed. A non-photosensitive layer may be provided between the above-described silver halide photosensitive layers and on the uppermost layer and the lowermost layer. These may include a coupler, a DIR compound, and a color mixing inhibitor, which will be described below. In the plurality of silver halide emulsion layers constituting each unit photosensitive layer, it is preferable that two layers of a high-sensitivity emulsion layer and a low-sensitivity emulsion layer are arranged in a descending order of the photosensitivity toward the support, as described in DE1,121,470 or GB923,045. In addition, as described in JP1982-112751A (JP-S57-112751A), JP1987-200350A (JP-S62-200350A), JP1987-206541A (JP-S62-206541A), and JP1987-206543A (JP-S62-206543A), a low-sensitivity emulsion layer may be installed on a side away from the support, and a high-sensitivity emulsion layer may be installed on a side close to the support.

As a specific example, the layers can be installed in order of a low sensitivity blue photosensitive layer (BL)/a high sensitivity blue photosensitive layer (BH)/a high sensitivity green photosensitive layer (GH)/a low sensitivity green photosensitive layer (GL)/a high sensitivity red photosensitive layer (RH)/a low sensitivity red photosensitive layer (RL) from the side farthest from the support, in order of BH/BL/GL/GH/RH/RL, or in order of BH/BL/GH/GL/RL/RH.

In addition, as described in JP1980-34932B (JP-S55-34932B), the layers can be arranged in order of a blue photosensitive layer/GH/RH/GL/RL from the side farthest from the support. In addition, as described in JP1981-25738A (JP-S56-25738A) and JP1987-63936A (JP-S62-63936A), the layers can be arranged in order of a blue photosensitive layer/GL/RL/GH/RH from the side farthest from the support. In addition, as described in JP1974-15495B (JP-S49-15495B), arrangement of three layers of an upper layer that is a silver halide emulsion layer having the highest photosensitivity, a middle layer that is a silver halide emulsion layer having a photosensitivity lower than the upper layer, and a lower layer that is a silver halide emulsion layer having a photosensitivity lower than the middle layer, which have different photosensitivities, in order that the photosensitivity is sequentially lowered toward the support is exemplified. Even in a case where the photosensitive layer is composed of three layers having different photosensitivities, as described in JP1984-202464A (JP-S59-202464A), a medium-sensitivity emulsion layer, a high-sensitivity emulsion layer, and a low-sensitivity emulsion layer may be disposed in order from the side farther from the support in the same color sensitive layer.

In addition, the layers may be disposed in order of a high-sensitivity emulsion layer/a low-sensitivity emulsion layer/a medium-sensitivity emulsion layer or in order of a low-sensitivity emulsion layer/a medium-sensitivity emulsion layer/a high-sensitivity emulsion layer. In addition, even in a case of four or more layers, the arrangement may be changed as described above. In order to improve color reproducibility, it is preferable to dispose a donor layer (CL) having a multilayer effect in which a spectral sensitivity distribution is different from that of a main photosensitive layer such as BL, GL, or RL, which is described in US4663271A, US4705744A, US4707436A, JP1987-160448A (JP-S62-160448A), and JP1988-89850A (JP-S63-89850A), adjacent to or close to the main photosensitive layer.

The preferable silver halide used in the present disclosure is silver iodobromide, silver iodochloride, or silver iodide chlorobromide, which contains about 30% by mole or less of silver iodide. Silver iodobromide or silver iodide

chlorobromide, which contains about 2% by mole to about 10% by mole of silver iodide, is particularly preferable.

The silver halide particles in the photographic emulsion may have regular crystals with shapes of a cube, an octahedron, and a dodecahedron, irregular crystal forms such as a sphere and a plate, crystal defects such as a twin plane, or a combination thereof. The silver halide may have a particle diameter of about 0.2 μm or less or a particle size in which the projected area diameter reaches about 10 μm, and may be a polydisperse emulsion or a monodisperse emulsion.

The silver halide photographic emulsion that can be used in the present disclosure can be prepared using, for example, the methods described in Research Disclosure (hereinafter, abbreviated as RD) No. 17643 (December 1978), pp. 22 to 23, "I. Emulsion preparation and types", Research Disclosure No. 18716 (November 1979), p. 648, Research Disclosure No. 307105 (November 1989), pp. 863 to 865, "Chimie et Physique Photographiques" (written by P. Glafkides, published by Paul Montel, 1967), "Photographic Emulsion Chemistry" (written by G. F. Duffin, published by Focal Press, 1966), and "Making and Coating Photographic Emulsion" (written by V. L. Zelikman, et al., published by Focal Press, 1964).

Monodisperse emulsions described in US3574628A, US3655394A, and GB1413748 are also preferable. In addition, flat plate-like particles having an aspect ratio of about 3 or greater can also be used in the present disclosure. In particular, in order to improve the temporal preservability, an emulsion in which 50% or greater of the total projected area is occupied by silver halide flat plate particles having an aspect ratio of 8 or greater can be used. The upper limit of the aspect ratio is not particularly limited, but is preferably 30 or less. The flat plate-like particles can be easily prepared by the methods described in Photographic Science and Engineering (written by Gutoff, Vol. 14, pp. 248 to 257 (1970)), US4434226A, US4414310A, US4433048A, US4439520A, and GB2112157.

The crystal structure may be uniform or may be formed of heterogeneous halogen compositions inside and outside, and may have a layered structure. Silver halides having different compositions may be bonded by epitaxial bonding, or a silver halide may be bonded to a compound other than a silver halide, such as silver rhodan or lead oxide. In addition, a mixture of particles having various crystal forms may be used.

The emulsion may be any type of emulsion having a latent image on the surface or inside of the emulsion, such as a surface latent image type emulsion that forms a latent image mainly on the surface or an internal latent image type emulsion that forms a latent image inside of the emulsion, but it is necessary that the emulsion is a negative tone emulsion. Among the internal latent image type emulsions, the core/shell type internal latent image type emulsion described in JP1988-264740A (JP-S63-264740A) may be used, and the preparation method thereof is described in JP1984-133542A (JP-S59-133542A). The thickness of the shell of the emulsion varies depending on the development treatment or the like, but is preferably 3 nm to 40 nm and particularly preferably 5 nm to 20 nm.

As the silver halide emulsion, a silver halide emulsion subjected to physical ripening, chemical ripening, and spectral sensitization is usually used. The additives used in such a step are described in RD No. 17643, RD No. 18716, and RD No. 307105, and the corresponding description sites thereof are summarized in the table below.

In the silver halide photographic sensitive material according to the present disclosure, two or more kinds of emulsions having different characteristics of at least one of the particle size, the particle size distribution, the halogen composition, the shape of particles, or the sensitivity of a photosensitive silver halide emulsion can be mixed and used in the same layer. It is preferable that the silver halide particles in which the particle surface is fogged described in US4082553A, the silver halide particles in which the inside of the particles is fogged described in US4626498A and JP1984-214852A (JP-S59-214852A), and colloidal silver are applied to a photosensitive silver halide emulsion layer and/or a substantially non-photosensitive hydrophilic colloid layer. The silver halide particles in which the inside or surface of the particles is fogged denotes silver halide particles that can be uniformly (that is, a non-image pattern) developed regardless of the non-exposed portion and the exposed portion of the photosensitive material, and the preparation method thereof is described in US4626498A and JP1984-214852A (JP-S59-214852A). The silver halide forming the internal nucleus of the core/shell type silver halide particles in which the inside of the particles is fogged may have a different halogen composition. As the silver halide in which the inside or the surface of the particles is fogged, any of silver chloride, silver chlorobromide, silver iodide, or silver chloroiodobromide can be used. The average particle size of the above-described fogged silver halide particles is preferably 0.01 μm to 0.75 μm and particularly preferably 0.05 μm to 0.6 μm. In addition, the silver halide particles may have a regular particle shape or may be a polydisperse emulsion, but monodisperse particles (for example, at least 95% of the mass or the number of the silver halide particles have a particle diameter within ± 40% in terms of the average particle diameter) are preferable.

In the present disclosure, it is preferable to use a non-photosensitive particulate silver halide. The non-photosensitive particle silver halide is a silver halide particle that is not photosensitive during the image pattern exposure for obtaining a coloring agent image and is not substantially developed in the development treatment, and it is preferable that the non-photosensitive particle silver halide is not pre-fogged. In the case of the particulate silver halide, the content of silver bromide is 0 to 100% by mole, and may contain silver chloride and/or silver iodide as necessary. It is preferable that the particulate silver halide contains 0.5% to 10% by mole of silver iodide. The average particle diameter (that is, the average value of the equivalent circle diameters of the projected areas) of the particulate silver halide is preferably 0.01 μm to 0.5 μm and more preferably 0.02 μm to 0.2 μm.

The particulate silver halide can be prepared by the same method as that for the typical photosensitive silver halide. The surface of the silver halide particles is not required to be optically sensitized, and is also not required to be spectrally sensitized. However, it is preferable that a known stabilizer such as a triazole-based, azaindene-based, benzothiazolium-based, or mercapto-based compound or a zinc compound is added in advance before addition of the silver halide particles to a coating liquid. This particulate silver halide particle-containing layer may contain colloidal silver.
The amount of the coating silver in the silver halide photographic sensitive material according to the present disclosure is preferably 6.0 g/$m^2$ or less and more preferably 4.5 g/$m^2$ or less.
The photographic additives that can be used in the present disclosure are also described in RD, and the relevant description sites are listed in the following table.

[Table 1]

| Type of additive | RD17643 | RD18716 | RD307105 |
|---|---|---|---|
| 1. Chemical sensitizer | p. 23 | Right column on p. 648 | p. 866 |
| 2. Sensitivity enhancer | | Right column on p. 648 | |
| 3. Spectral sensitizer | pp. 23 and 24 | Right column on p. 648 to right column on p. 649 | pp. 866 to 868 |
| Supersensitizer | | Right column on p. 647 | p. 868 |
| 4. Whitening agent | p. 24 | Right column on p. 649 to left column on p. 650 | p. 873 |
| 5. Light absorber, filter dye, ultraviolet absorber | pp. 25 and 26 | | |
| 6. Binder | p. 26 | Left column on p. 651 | pp. 873 and 874 |
| 7. Plasticizer, lubricant | P. 27 | Right column on p. 650 | p. 876 |
| 8. Coating aid, surfactant | pp. 26 and 27 | Right column on p. 650 | pp. 875 and 876 |
| 9. Antistatic agent | p. 27 | Right column on p. 650 | pp. 876 and 877 |
| 10. Matting agent | | | pp. 878 and 879 |

Various coloring agent couplers can be used in the silver halide photographic sensitive material according to the present disclosure, but the following couplers are particularly preferable.

Yellow coupler: couplers represented by Formulae (I) and (II) in EP502, 424A, couplers represented by Formulae (1) and (2) in EP513, 496A, (particularly, Y-28, p. 18), couplers represented by Formula (I) in claim 1 of EP568, 037A, couplers represented by General Formula (I) of columns 1, lines 45 to 55 of US5066576A, couplers represented by General Formula (I) in paragraph 0008 of JP1992-274425A (JP-H4-274425A), couplers described in claim 1 of EP498, 381A1, p. 40 (particularly, D-35, p. 18), couplers represented by Formula (Y) in EP447, 969A1, p. 4 (particularly, Y-1, p. 17, Y-54, p. 41), couplers represented by Formulae (II) to (IV) in column 7, lines 36 to 58 of US4476219A (particularly, II-17, 19 (column 17) and II-24 (column 19))
Magenta coupler: (L-57 (bottom right, p. 11), L-68 (bottom right, p. 12), L-77 (bottom right, p. 13) in JP1991-39737A (JP-H3-39737A), (A-4-63 (p. 134), A-4-73, -75 (p. 139)) in EP456,257A, M-4, -6 (p. 26), M-7 (p. 27)) in EP486,965A, M-45 (p. 19) in EP571,959A, (M-1) (p. 6) in JP1993-204106A (JP-H5-204106A), and paragraph 0237, M-22 in JP1992-362631A (JP-H4-362631A)
Cyan coupler: CX-1, 3, 4, 5, 11, 12, 14, and 15 (pp. 14 to 16) in JP1992-204843A (JP-H4-204843A), C-7 and 10 (p. 35), 34 and 35 (p. 37), (I-1) and (I-17) (pp. 42 to 43) in JP1992-43345A (JP-H4-43345A), and couplers represented by General Formula (Ia) or (Ib) in claim 1 of JP1994-67385A (JP-H6-67385A)
Polymer coupler: P-1 and P-5 (p. 11) of JP1990-44345A (JP-H2-44345A)

As the coupler having appropriate diffusibility of a color developing agent, those described in US4366237A, GB2125570A, EP96873B, and DE3234533B are preferable.
As the coupler for correcting the unnecessary absorption of the color developing agent, a yellow-colored cyan coupler represented by Formulae (CI), (CII), (CIII), and (CIV) described on p. 5 of EP456257A1 (particularly, YC-86 on p. 84), a yellow-colored magenta coupler ExM-7 (p. 202), EX-1 (p. 249), and EX-7 (p. 251) described in EP456257A1, a magenta-colored cyan coupler CC-9 (column 8) and CC-13 (column 10) described in US4833069A, (2) (column 8) described in US4837136A, and a colorless masking coupler represented by Formula (A) of claim 1 of WO92/11575A (particularly, exemplary compounds on pp. 36 to 45) are preferable.
Examples of the coupler that releases a photographically useful group include the following. Development suppressing agent releasing compound: compounds represented by Formulae (I), (II), (III), and (IV) described on p. 11 of

EP378236A1 (particularly T-101 (p. 30), T-104 (p. 31), T-113 (p. 36), T-131 (p. 45), T-144 (p. 51), and T-158 (p. 58)), compounds represented by Formula (I) described on p. 7 of EP436938A2 (particularly D-49 (p. 51)), compounds represented by Formula (1) described in EP568037A (particularly (23) (p. 11)), compounds represented by Formulae (I), (II), and (III) described on pp. 5 and 6 of EP440195A2 (particularly I-(1) on p. 29), bleach accelerator releasing compound: compounds represented by Formulae (I) and (I') described on p. 5 of EP310125A2 (particularly (60) and (61) on p. 61) and compounds represented by Formula (I) in claim 1 of JP1994-59411A (JP-H6-59411A) (particularly (7) (p. 7)), ligand releasing compound: compounds represented by LIG-X described in claim 1 of US4555478A (particularly compounds of lines 21 to 41 of column 12), leuco coloring agent releasing compound: compounds 1 to 6 of columns 3 to 8 of US4749641A, fluorescent coloring agent releasing compound: compounds represented by COUP-DYE in claim 1 of US4774181A (particularly compounds 1 to 11 of columns 7 to 10), development accelerator or fogging agent releasing compound: compounds represented by Formulae (1), (2), and (3) of column 3 in US4656123A (particularly (I-22) of column 25) and ExZK-2 of lines 36 to 38 on p. 75 of EP450637A2, and compound releasing group that serves as coloring agent for the first time after leaving: compounds represented by Formula (I) in claim 1 of US4857447A (particularly Y-1 to Y-19 of columns 25 to 36).

The following additives other than the coupler are preferable. Dispersant of oil-soluble organic compound: P-3, 5, 16, 19, 25, 30, 42, 49, 54, 55, 66, 81, 85, 86, and 93 (pp. 140 to 144) in JP1987-215272A (JP-S62-215272A), latex for impregnation with oil-soluble organic compound: latex described in US4199363A, developing agent oxide scavenger: compounds represented by Formula (I) in lines 54 to 62 of column 2 in US4978606A (particularly I-, (1), (2), (6), (12) (columns 4 and 5), and compounds represented by the formula in lines 5 to 10 of column 2 in US4923787A (particularly compound 1 (column 3)), stain inhibitor: compounds represented by Formulae (I) to (III) in lines 30 to 33 on p. 4 in EP298321A (particularly 1-47, 72, III-1, 27 (pp. 24 to 48)), fading inhibitor: A-6, 7, 20, 21, 23, 24, 25, 26, 30, 37, 40, 42, 48, 63, 90, 92, 94, 164 (pp. 69 to 118) in EP298321A, II-1 to III-23 in lines 25 to 38 in US5122444A (particularly III-10), I-1 to III-4 on pp. 8 to 12 in EP471347A (particularly II-2), A-1 to 48 in columns 32 to 40 of US5139931A (particularly A-39, 42); material for reducing amount of color development enhancing agent or color mixing inhibitor used: I-1 to II-15 on pp. 5 to 24 in EP411324A (particularly I-46), formalin scavenger: SCV-1 to 28 on pp. 24 to 29 in EP477932A (particularly SCV-8),hardening agent: H-1, 4, 6, 8, and 14 on page 17 in JP1989-214845A (JP-H1-214845A), compounds (H-1 to 54) represented by Formulae (VII) to (XII) in columns 13 to 23 of US4618573A, compounds (H-1 to 76) represented by Formula (6) on the lower right of p. 8 of JP1990-214852A (JP-H2-214852A), (particularly H-14), and compounds described in claim 1 of US3325287A; development suppressing agent precursor: P-24, 37, and 39 (pp. 6 and 7) in JP1987-168139A (JP-S62-168139A), compounds described in claim 1 of US5019492A (particularly 28 and 29 in column 7), preservative and fungicide: I-1 to III-43 in columns 3 to 15 of US4923790A (particularly II-1, 9, 10, 18, and III-25), stabilizer and fogging inhibitor: I-1 to (14) in columns 6 to 16 of US4923793A (particularly I-1, 60, (2), and (13)), compounds 1 to 65 in columns 25 to 32 of US4952483A (particularly 36), chemical sensitizer: triphenylphosphine selenide, compound 50 in JP1993-40324A (JP-H5-40324A), dye: a-1 to b-20 on pp. 15 to 18 (particularly a-1, 12, 18, 27, 35, 36, b-5), and V-1 to 23 on pp. 27 to 29 in JP1991-156450A (JP-H3-156450A) (particularly V-1), F-I-1 to F-II-43 on pp. 33 to 55 in EP445627A (particularly F-I-11 and F-II-8), III-1 to 36 on pp. 17 to 28 in EP457153A (particularly III-1 and 3), microcrystal dispersion of Dye-1 to 124 of 8 to 26 in WO88/04794A, compounds 1 to 22 on pp. 6 to 11 in EP319999A (particularly compound 1), compounds D-1 to 87 (pp. 3 to 28) represented by Formula (1) or (3) in EP519306A, compounds 1 to 22 (columns 3 to 10) represented by Formula (I) in US4268622A, and compounds (1) to (31) (columns 2 to 9) represented by Formula (I) of US4923788A, UV absorber: compounds (18b) to (18r) represented by Formula (1) and 101 to 427 (pp. 6 to 9) in JP1971-3335A (JP-S46-3335A), compounds (3) to (66) (pp. 10 to 44) represented by Formula (I) of EP520938A, and compounds HBT-1 to HBT-10 (p. 14) represented by Formula (III), and compounds (1) to (31) (columns 2 to 9) represented by Formula (1) in EP521823A.

The present disclosure can be applied to various color photosensitive materials such as black-and-white printing paper, black-and-white negative films, X-ray films, color negative films for general use or for a movie, color reversal films for a slide or for a television, color paper, color positive films, and color reversal paper. In addition, the present disclosure is suitable for a film unit provided with a lens described in JP1990-32615B (JP-H2-32615B) and JP1991-39784B (JP-H3-39784B).

Suitable supports that can be used in the present disclosure are described, for example, on p. 28 of RD. No. 17643, in the right column of p. 647 and the left column of p. 648 in RD. No. 18716, and p. 879 of RD. No. 307105.

In the silver halide photographic sensitive material according to the present disclosure, the sum of the film thicknesses of all the hydrophilic colloid layers on the side where the emulsion layer is provided is preferably 28 μm or less, more preferably 23 μm or less, still more preferably 18 μm or less, and particularly preferably 16 μm or less. In addition, a film swelling rate $T_{1/2}$ is preferably 30 seconds or less and more preferably 20 seconds or less. $T_{1/2}$ is defined as a time taken for a film thickness to reach 1/2 of the maximum swelling film thickness in a case where the maximum swelling film thickness reached 90% in a case of being treated with a color developing solution at 30°C for 3 minutes and 15 seconds is set as a saturated film thickness. The film thickness is a film thickness measured under conditions of 25°C and a relative humidity of 55% (2 days), and $T_{1/2}$ can be measured by using a swellometer (also referred to as a swelling meter) of a type

described in Photogr. Sci. Eng., written by A. Green et al., vol. 19, No. 2, pp. 124 to 129. $T_{1/2}$ can be adjusted by adding a hardening agent to gelatin as a binder or changing the conditions over time after coating. In addition, the swelling ratio is preferably 150% to 400%. The swelling ratio can be calculated by using "Expression: (maximum swelling film thickness - film thickness)/film thickness" based on the maximum swelling film thickness under the above-described conditions.

In the silver halide photographic sensitive material according to the present disclosure, it is preferable that a hydrophilic colloid layer (referred to as a back layer) having a total dry film thickness of 2 μm to 20 μm is provided on a side opposite to the side where the emulsion layer is provided. It is preferable that the back layer contains a light absorber, a filter dye, an ultraviolet absorber, an antistatic agent, a hardening agent, a binder, a plasticizer, a lubricant, a coating aid, and a surfactant described above. The swelling ratio of the back layer is preferably 150% to 500%.

The silver halide photographic sensitive material according to the present disclosure can be subjected to a development treatment by a typical method described on pp. 28 and 29 of RD. No. 17643, in the left and right columns of p. 651 of RD. No. 18716, and on pp. 880 and 881 of RD. No. 307105.

In addition, in the present disclosure, an antistatic agent is preferably used.

Examples of the antistatic agent include a carboxylic acid and a carboxylate, a polymer containing a sulfonate, a cationic polymer, an ionic surfactant compound, and a π-electron conjugated conductive polymer. As the antistatic agent, a small amount of an antistatic agent selected from ZnO, $TiO_2$, $SnO_2$, $Al_2O_3$, $In_2O_3$, $SiO_2$, MgO, BaO, $MoO_3$, and $V_2O_5$ is preferable, particles of crystalline metal oxides or composite oxides thereof (Sb, P, B, In, S, Si, C, and the like) having a particle size of 0.001 μm to 1.0 μm, in which the volume resistivity of at least one kind selected from ZnO, $TiO_2$, $SnO_2$, $Al_2O_3$, $In_2O_3$, $SiO_2$, MgO, BaO, $MoO_3$, and $V_2O_5$ is $10^7$ Ω·cm or less and more preferably $10^5$ Ω·cm or less as well as particles of sol-like metal oxides or composite oxides thereof are preferable. The content of the antistatic agent in the silver halide photographic sensitive material is preferably 5 $mg/m^2$ to 500 $mg/m^2$ and particularly preferably 10 $mg/m^2$ to 350 $mg/m^2$. The ratio of the amount of the conductive crystalline oxide or the composite oxide thereof to the amount of the binder is preferably 1/300 to 100/1 and more preferably 1/100 to 100/5. Examples of the π-electron conjugated conductive polymer include a polythiophene compound, a polypyrrole compound, and a polyfuran compound. A latex-like aqueous dispersion containing a polythiophene compound and a polymeric polyanionic compound can be preferably used. Preferable aspects of the detailed structure of the compound, the composition of the dispersion, and the dispersant used in combination can be obtained by using the methods described in JP2003-330145A, JP4244541B, JP2016-120650A, and JP1996-211615A (JP-H8-211615A).

The silver halide photographic sensitive material according to the present disclosure preferably has sliding properties. It is preferable that the lubricant-containing layer is used for both the surface of the photosensitive layer and the back surface. As the preferable sliding properties, the dynamic friction coefficient of the layer is 0.01 or greater and 0.25 or less. The measured value here indicates a value in a case where the layer is transported at 60 cm/min with respect to a stainless steel ball having a diameter of 5 mm (25°C, 60% RH). In this evaluation, even in a case where the opposite material is replaced with the surface of the photosensitive layer, the value is almost at the same level.

Examples of the lubricant that can be used in the present disclosure include polyorganosiloxane, a higher fatty acid amide, a higher fatty acid metal salt, and an ester of a higher fatty acid and a higher alcohol. As the polyorganosiloxane, polydimethylsiloxane, polydiethylsiloxane, polystyrylmethylsiloxane, polymethylphenylsiloxane, or the like can be used. As the additive layer, the outermost layer or the back layer of the emulsion layer is preferable. In particular, an ester containing a polydimethylsiloxane or a long-chain alkyl group is preferable.

It is preferable that the silver halide photographic sensitive material according to the present disclosure contains a matting agent. The matting agent may be provided on either the emulsion surface or the back surface, but is particularly preferably added to the outermost layer on the emulsion side. The matting agent may be treatment liquid-soluble or treatment liquid-insoluble, and it is preferable to use both in combination. For example, polymethyl methacrylate, poly(methyl methacrylate/methacrylic acid = 9/1 or 5/5 (molar ratio)), polystyrene particles, and the like are preferable. The particle diameter is preferably 0.8 μm to 10 μm, and it is preferable that the particle size distribution is also narrow and that 90% or greater of the total number of particles are included in a range of 0.9 times to 1.1 times the average particle diameter. In addition, in order to enhance the matting properties, particles having a particle size of 0.8 μm or less are also preferably added at the same time, and examples thereof include polymethyl methacrylate (0.2 μm), poly(methyl methacrylate/methacrylic acid = 9/1 (molar ratio), (0.3 μm)), polystyrene particles (0.25 μm), and colloidal silica (0.03 μm).

The silver halide photographic sensitive material according to the present disclosure can contain other known additives in each layer.

In addition, even in the silver halide photographic sensitive material according to the present disclosure which is not photosensitive to irradiation with X-rays, the configuration, each component, and the like of a silver halide photographic sensitive material which is photosensitive to irradiation with X-rays described below may be used as necessary.

In addition, a silver halide photographic sensitive material having photosensitive to irradiation with X-rays will be described below.

Preferred examples of the silver halide photographic sensitive material include a silver halide photographic sensitive material having photosensitivity to irradiation with X-rays.

[Silver halide emulsion]

First, the silver halide emulsion used in the present disclosure will be described.

1) Halogen composition

The photosensitive silver halide particles can use silver chloride, silver chlorobromide, silver bromide, silver iodobromide, or silver iodide chlorobromide can be used, but from the viewpoint of the rapid treatment as described above, the amount of iodine contained in the photosensitive silver halide particles is preferably 0% by mole or greater and 0.45% by mole or less on average. The amount of iodine is more preferably 0.05% by mole or greater and 0.40% by mole or less and still more preferably 0.10% by mole or greater and 0.30% by mole or less on average. Here, the term "average" of the amount of iodine contained in the photosensitive silver halide particles denotes the average value of the iodine content determined from the halogen composition of each photosensitive silver halide particle. The distribution of the halogen composition in the particles of the photosensitive silver halide may be uniform, and the halogen composition may change stepwise or continuously. In addition, as the photosensitive silver halide particles, photosensitive silver halide particles having a core/shell structure can also be used.

2) Particle shape

Suitable examples of the photosensitive silver halide particles also include so-called halogen conversion type particles (also referred to as conversion type particles) as described in GB635841 and US3622318A. As a method of halogen conversion, a halogen aqueous solution having a smaller solubility product with silver than the halogen composition of the particle surface before halogen conversion is usually added. For example, a potassium bromide and/or potassium iodide aqueous solution is added to silver chloride or silver chlorobromide flat plate-like particles, and a potassium iodide aqueous solution is added to silver bromide or silver iodobromide flat plate-like particles to cause conversion. The concentration of the aqueous solution to be added is preferably low, and is preferably 30% or less and more preferably 10% or less. It is preferable that the conversion halogen solution is added at a rate of 1% by mole or less per minute in terms of 1 mole of the silver halide before the halogen conversion. Further, during the halogen conversion, a part or all of the sensitizing dye and/or the silver halide adsorbing substance may be present, and instead of the conversion halogen aqueous solution, silver halide particles of silver bromide, silver iodobromide, or silver iodide may be added. The size of these fine particles is preferably 0.2 μm or less, preferably 0.1 μm or less, and particularly preferably 0.05 μm or less. The halogen conversion method is not limited to the above-described method, and can be appropriately combined and used according to the purpose.

3) Particle size

A method of forming the photosensitive silver halide particles is well known in the related art, and the photosensitive silver halide particles can be prepared by using, for example, the methods described in JP1990-68539A (JP-H2-68539A), US3700458A, and Research Disclosure No. 17029, June 1978.

4) Chemical sensitization method

As a chemical sensitization method, the methods described in the line 13 of the upper right column on p. 10 to the line 16 of the lower left column on p. 10 in JP1990-68539A (JP-H2-68539A), JP1993-313282A (JP-H5-313282A), and JP1994-110144A (JP-H6-110144A) can be used.

Specifically, as a method of chemical sensitization of the silver halide emulsion, known methods such as a sulfur sensitization method, a selenium sensitization method, a reduction sensitization method, and a gold sensitization method can be used in the presence of a silver halide adsorbing substance, and these methods can be used alone or in combination.

Among noble metal sensitization methods, the gold sensitization method is a representative method, and a gold compound, mainly a gold complex salt, is used. A noble metal other than gold, for example, a complex salt of platinum, palladium, or iridium may be contained. Specific examples thereof are described in US2448060A, GB618061, and the like.

As the sulfur sensitizer, in addition to the sulfur compound contained in the gelatin, various sulfur compounds such as thiosulfates, thioureas, thiazoles, and rhodanines can be used. Specific examples thereof are described in US1574944A, US2278947A, US2410689A, US2728668A, US5501313A, and US3656955A. In addition, the selenium sensitizer is described in JP1994-110144A (JP-H6-110144A).

The use of a combination of sulfur sensitization with a thiosulfate, selenium sensitization, and gold sensitization is useful. As the reduction sensitizer, a first tin salt, amines, formamidine disulfinic acid, a silane compound, and the like can

be used.

5) Antifoggant and stabilizer

As the antifoggant and the stabilizer, those described in the line 17 of the lower left column on p. 10 to the line 7 of the upper left column on p. 11, and described in the line 2 of the lower left column on p. 3 to the lower left column on p. 4 of JP1990-68539A (JP-H2-68539A) can be used.

Specifically, it is possible to add azoles (for example, benzothiazolium salts, etroimidazoles, nitrobenzimidazoles, chlorobenzimidazoles, chromobenzimidazoles, nitroindazoles, benzotriazoles, and aminotriazoles), mercapto compounds (for example, mercaptothiazols, mercaptobenzothiazoles, mercaptobenzimidazoles, mercaptothiadiazoles, mercaptotetrazoles, mercaptopyrimidines, and mercaptotriazines), thioketone compounds such as oxadrinthione, azaindenes (for example, triazaindenes, tetraazaindenes (particularly, 4-hydroxy-substituted (1,3,3a,7) tetrazaindenes), and pentaazaindenes); and compounds known as an antifoggants or a stabilizer, such as benzenethiosulfonic acid, benzenesulfinic acid, and benzenesulfonic acid amide.

In particular, nitron and derivatives thereof described in JP1985-76743A (JP-S60-76743A) and JP1985-87322A (JP-S60-87322A), mercapto compounds described in JP1985-80839A (JP-S60-80839A), heterocyclic compounds described in JP1982-164735A (JP-S57-164735A), and complex salts of heterocyclic compounds and acids (for example, 1-phenyl-5-mercaptotetrazoles) can be preferably used.

Further, purines or nucleic acids, or polymer compounds described in JP1986-36213B (JP-S61-36213B), JP1984-90844A (JP-S59-90844A), and the like can also be used. Among these, azaindenes, purines, and nucleic acids can be particularly preferably used. The amount of these compounds to be added is preferably 0.5 mmol to 5.0 mmol and more preferably 0.5 mmol to 3.0 mmol per mole of silver halide.

6) Tone improver

Examples of the tone improver include those described in the line 7 of the lower left column on p. 2 to the line 20 of the lower left column on p. 10 in JP1987-276539A (JP-S62-276539A) and those described in the line 15 of the lower left column on p. 6 to the line 19 of the upper right column on p. 11 in JP1991-94249A (JP-H3-94249A).

Specifically, the coating power of the silver halide photographic emulsion layer is set to 60 or greater, and the silver halide photographic emulsion layer and/or other layers can contain a dye having a maximal absorption wavelength in a wavelength range of 520 nm to 560 nm and a dye having a maximal absorption wavelength in a wavelength range of 570 nm to 700 nm such that an increase in optical density due to the contained dyes in the transmission density of the unexposed portion after the development treatment is 0.03 or less.

Representative examples of the emulsion having a coating power of 60 or greater of the silver halide photographic emulsion layer include a flat plate-like emulsion and a particle emulsion. In particular, in a case where the silver halide photographic emulsion is formed of flat plate-like silver halide particles having a particle thickness of 0.4 μm or less, or a mixed emulsion of a high iodine surface photosensitive emulsion and an emulsion formed of particles with the fogged inside is used, the effect of improving the tone is large.

Examples of the aspect of the dye that can be used for tone improvement include an aspect in which a dye having a maximal absorption wavelength preferably in a wavelength range of 520 nm to 560 nm and more preferably in a wavelength range of 530 nm to 555 nm and a dye having a maximal absorption wavelength preferably in a wavelength range of 570 nm to 700 nm and more preferably in a wavelength range of 580 nm to 650 nm are used in combination. The maximal absorption wavelength is the maximal absorption wavelength in a state where the dye is present in the photosensitive material.

As the dye, for example, a dye having a predetermined maximum wavelength is selected from an anthraquinone dye, an azo dye, an azomethine dye, an indaniline dye, an oxonol dye, a carbocyanine dye, a styryl dye, a triphenylmethane dye, and the like. In consideration of the influence on the stability against the development treatment, the light fastness, and the photographic performance such as sensitivity, fogging, and staining, a preferable one from among the anthraquinone dye, the azo dye, the azomethine dye, and the indoaniline dye is used. The preferable compounds are described in the line 5 of the upper left column on p. 3 to the line 9 of the upper left column on p. 9 of JP1987-276539A (JP-S62-276539A).

Such a dye can be dispersed in an emulsion layer and other hydrophilic colloid layers (an interlayer, a protective layer, an antihalation layer, a filter layer, or the like) by various known methods, and specifically, the methods are described in the line 14 of the upper left column on p. 9 to the line 20 of the lower left column on p. 10 of JP1987-276539A (JP-S62-276539A).

7) Spectral sensitizing dye

Examples of the spectral sensitizing dye include those described in the line 4 of the lower right column on p. 4 to the lower right column on p. 8 of JP1990-68539A (JP-H2-68539A).

Specifically, a cyanine coloring agent, a merocyanine coloring agent, a complex cyanine coloring agent, a complex merocyanine coloring agent, a holopolyanine coloring agent, a styryl coloring agent, a hemicyanine coloring agent, an oxonol coloring agent, a hemioxonol coloring agent, or the like can be used.

The sensitizing dye is described in, for example, US3522052A, US3617197A, US3713828A, US3615643A, US3615632A, US3617293A, US3628964A, US3703377A, US3666480A, US3667960A, US3679428A, US3672897A, US3769026A, US3556800A, US3615613A, US3613638A, US3615635A, US3705809A, US3632349A, US3677765A, US3770449A, US3770440A, US3769025A, US3745014A, US3713826A, US3567458A, US3625698A, US2526632A, US2503776A, JP1973-76525A (JP-S48-76525A), and Belgian Patent No. 691807. The amount of the sensitizing dye to be added is preferably 0.5 mmol or greater and less than 4 mmol and more preferably 0.5 mmol or greater and less than 1.5 mmol per mole of silver halide.

Specific examples of the sensitizing dye include II-1 to II-47 described on pp. 5 to 8 of JP1990-68539A (JP-H2-68539A).

8) Antistatic agent

In the present disclosure, as a coating aid, an antistatic agent, or a charge adjuster, the surfactants described in the line 14 of the upper left column on p. 11 to the line 9 of the upper left column on p. 12 in JP1990-68539A (JP-H2-68539A) can be used.

In addition, the compound according to the present disclosure may be used as the coating aid, the antistatic agent, or the charge adjuster.

Specific examples of the surfactant used for such a purpose include nonionic surfactants such as saponin (steroid-based), an alkylene oxide derivative (for example, polyethylene glycol, a polyethylene glycol/polypropylene glycol condensate, polyethylene glycol alkyl ethers or polyethylene glycol alkyl aryl ethers, and polyethylene oxide compounds of silicone), and alkyl esters of sugars, anionic surfactants such as alkyl sulfonates, alkyl benzene sulfonates, alkyl naphthalene sulfonates, alkyl sulfates, N-acyl-N-alkyl taurines, sulfosuccinic acid esters, and sulfoalkyl polyoxyethylene alkyl phenyl ethers, amphoteric surfactants such as alkyl betaines and alkyl sulfobetaine, and cationic surfactants such as aliphatic or aromatic quaternary ammonium salts, pyridinium salts, and imidazolium salts.

Among these, anionic surfactants such as saponin, a sodium salt of dodecylbenzene sulfonic acid, a sodium salt of di-2-ethylhexyl $\alpha$-sulfosuccinic acid, a sodium salt of p-octylphenoxyethoxyethane sulfonic acid, a sodium salt of dodecyl sulfuric acid, a sodium salt of triisopropyl naphthalene sulfonic acid, and a sodium salt of N-methyl-oleoyl taurine, cationic surfactants such as dodecyltrimethylammonium chloride, N-oleoyl-N',N',N'-trimethylammoniodiaminopropane bromide, and dodecylpyridinium chloride, betaines such as N-dodecyl-N,N-dimethylcarboxybetaine and N-oleoyl-N,N-dimethylsulfobutyl betaine, and nonionic surfactants such as poly(average polymerization degree n-10) oxyethylene cetyl ether, poly(n=25) oxyethylene p-nonylphenol ether, and bis(1-poly(n=15) oxyethylene-oxy-2,4-di-t-pentylphenyl)ethane can be particularly preferably used.

In addition, as the antistatic agent, nonionic surfactants described in JP1985-80848A (JP-S60-80848A), JP1986-112144A (JP-S61-112144A), JP1987-172343A (JP-S62-172343A), and JP1987-173459A (JP-S62-173459A), a nitrate of an alkali metal, conductive tin oxide, zinc oxide, vanadium pentoxide, or a composite oxide obtained by doping these with antimony or the like can be preferably used.

9) Matting agent, lubricant, and plasticizer

Examples of the matting agent, the lubricant, and the plasticizer include those described in the line 10 of the upper left column on p. 12 to the line 10 of the upper right column on p. 12, and the line 10 of the lower left column on p. 14 to the line 1 of the lower right column on p. 14 in JP1990-68539A (JP-H2-68539A).

Specifically, as the matting agent, a homopolymer of polymethyl methacrylate or a copolymer of methyl methacrylate and methacrylic acid, an organic compound such as starch, or fine particles of an inorganic compound such as silica, titanium dioxide, sulfuric acid, or strontium barium, as described in US2992101A, US2701245A, US4142894A, and US4396706A, can be used. The particle size of the matting agent is preferably 1.0 $\mu$m to 10 $\mu$m and particularly preferably 2 $\mu$m to 5 $\mu$m.

In addition to the silicone compound described in US3489576A, US4047958A, and the like, and the colloidal silica described in JP1981-23139B (JP-S56-23139B), paraffin wax, higher fatty acid ester, starch derivatives, and the like can be used as the lubricant in the surface layer of the silver halide photographic sensitive material according to the present disclosure.

Polyols such as trimethylolpropane, pentanediol, butanediol, ethylene glycol, and glycerin can be used as a plasticizer in the hydrophilic colloid layer of the silver halide photographic sensitive material according to the present disclosure. In addition, the emulsion layer of the silver halide photographic sensitive material according to the present disclosure can contain a plasticizer such as a polymer or an emulsion in order to improve pressure characteristics.
For example, GB738618 discloses a method using a heterocyclic compound, GB738637 discloses a method using alkyl phthalate, GB738639 discloses a method using alkyl ester, US2960404A discloses a method using a polyhydric alcohol, US3121060A discloses a method using carboxylalkyl cellulose, JP1974-5017A (JP-S49-5017A) discloses a method using paraffin and a carboxylate, and JP1978-28086B (JP-S53-28086B) discloses a method using an alkyl acrylate and an organic acid, and these methods can also be used in the present disclosure.

10) Hydrophilic colloid

As a binding agent or a protective colloid that can be used in the emulsion layer, the interlayer, and the surface protective layer of the silver halide photographic sensitive material according to the present disclosure, it is advantageous to use gelatin, but other hydrophilic colloids can also be used.
Examples of the hydrophilic colloid include those described in the line 11 of the upper right column on p. 12 to the line 16 of the lower left column on p. 12 of JP1990-68539A (JP-H2-68539A).
For example, a protein such as a gelatin derivative, a graft polymer of gelatin and another polymer, albumin, or casein, a cellulose derivative such as hydroxyethyl cellulose, carboxymethyl cellulose, or cellulose sulfates, a sugar derivative such as sodium alginate, dextran, or a starch derivative, and various kinds of synthetic hydrophilic polymer substances such as polyvinyl alcohol, polyvinyl alcohol partial acetal (such as a homopolymer or copolymer of poly-N-vinylpyrrolidone, polyacrylic acid, polymethacrylic acid, polyacrylamide, polyvinylimidazole, or polyvinylpyrazole) can be used.
As the gelatin, in addition to the lime-treated gelatin, acid-treated gelatin or enzyme-treated gelatin may be used, and hydrolyzates or enzymatic decomposition products of gelatin can also be used.
Among these, it is preferable to use dextran or polyacrylamide having an average molecular weight of 100,000 or less in combination with gelatin. The methods described in JP1988-68887A (JP-S63-68887A) and JP1988-149641A (JP-S63-149641A) can also be used in the present disclosure.

11) Hardening agent

The photographic emulsion and the non-photosensitive hydrophilic colloid may contain an inorganic or organic hardening agent.
Examples of the hardening agent include those described in the line 17 of the lower left column on p. 12 to the line 6 of the upper right column on p. 13 in JP1990-68539A (JP-H2-68539A).
Specifically, for example, chromium salts (chromium alum, chromium acetate, and the like), aldehydes (formaldehyde, glyoxal, glutaraldehyde, and the like), N-methylol compounds (dimethylol urea, methylol dimethyl hydantoin, and the like), dioxane derivatives (2,3-dihydroxydioxane and the like), active vinyl compounds (1,3,5-triacryloyl-hexahydro-s-triazine, bis(vinylsulfonyl)methyl ether, N,N'-methylene bis-(β-(vinylsulfonyl)propionamide), and the like), active halogen compounds (2,4-dichloro-6-hydroxy-s-triazine and the like), mucohalogen acids (mucochloric acid, mucophenoxyacetic acid, and the like), isoxazoles, dialdehyde starch, 2-chloro-6-hydroxytriazinylated gelatin, and the like can be used alone or in combination. Among these, the active vinyl compounds described in JP1978-41221A (JP-S53-41221A), JP1978-57257A (JP-S53-57257A), JP1984-162546A (JP-S59-162546A), and JP1985-80846A (JP-S60-80846A), and the active halides described in US3325287A are preferable.
As the hardening agent, a polymer hardening agent can also be effectively used.
Examples of the polymeric hardening agent include polymers containing an aldehyde group such as dialdehyde starch, polyacrolein, and an acrolein copolymer described in US3396029A, polymers containing an epoxy group described in US3623878A, polymers containing a dichlorotriazine group described in US3362827A, Research Disclosure No. 17333 (1978), and the like, polymers containing an active ester group described in JP1981-66841A (JP-S56-66841A), polymers containing an active vinyl group or a group serving as a precursor thereof described in JP1981-142524A (JP-S56-142524A), US4161407A, JP1981-65033A (JP-S54-65033A), Research Disclosure No. 16725 (1978), and the like, and polymers containing an active vinyl group or a group serving as a precursor thereof. Among these, polymers containing an active vinyl group or a group serving as a precursor thereof are preferable, and polymers in which an active vinyl group or a group serving as a precursor thereof is bonded to the main chain of the polymer by a long spacer, as described in JP1981-142524A (JP-S56-142524A), are particularly preferable.
It is preferable that the hydrophilic colloid layer of the silver halide photographic sensitive material according to the present disclosure is hardened by these hardening agents such that the swelling ratio in water is 300% or less, particularly 230% or less.

12) Support

Examples of the support include those described in the line 7 of the upper right column on p. 13 to the line 20 of JP1990-68539A (JP-H2-68539A). Specifically, a polyethylene terephthalate film or a triacetate cellulose film is preferable as the support.
In order to improve the adhesion force to the hydrophilic colloid layer, a method of performing a corona discharge treatment, a glow discharge treatment, or an ultraviolet irradiation treatment on the surface of the support is preferable, or an undercoat layer formed of styrene-butadiene latex, vinylidene chloride-based latex, or the like may be provided, and a gelatin layer may be further provided on the upper layer thereof.
In addition, an undercoat layer formed of an organic solvent containing a polyethylene swelling agent and gelatin may be provided. The adhesion force to the hydrophilic colloid layer can be further improved by performing a surface treatment on these undercoat layers.

13) Crossover cut method

It is a well-known fact in the related art that the sharpness is significantly reduced by the crossover light. As a method of setting the crossover light of the photographic sensitive material to 12% or less, a method of absorbing light having a wavelength that matches the emission wavelength of the X-ray fluorescence screen by using a sensitizing coloring agent or a dye is disclosed in US4130429A, JP1986-116354A (JP-S61-116354A), and the like.
Further, US4800150A discloses a technique in which a dye is present in the form of a microcrystal dispersion between a support and an emulsion layer so that the crossover light is 10% or less. In addition, JP1988-305345A (JP-S63-305345A) discloses a technique of fixing an anionic dye to a specific layer using a cationic polymer latex, and JP1989-166031A (JP-H1-166031A) discloses a technique of using a fixing layer of a dye as an undercoat layer of a support. In the photosensitive material according to the present disclosure, any of these methods can be used, but the colored layer formed of a dye is preferably an undercoat layer, and it is desirable that the dye is fixed by the method described in JP1989-166031A (JP-H1-166031A) and particularly desirable that the dye is fixed to the undercoat layer in the form of a microcrystal dispersion described in US4803150A. In the present disclosure, these methods can be used in combination as appropriate.
Preferred examples of the dye include those described in the lower left column on p. 4 to the upper right column on p. 9 in JP1990-264944A (JP-H2-264944A).
In addition, as the mordant layer, those described in the lower right column on p. 9 to the upper right column on p. 14 in JP1990-264944A (JP-H2-264944A) can be used.

14) Polyhydroxybenzenes

Examples of the polyhydroxybenzenes include those described in the upper left column on p. 11 to the lower left column on p. 12 of JP1991-39948A (JP-H3-39948A) and those described in EP452772A.
Specific examples thereof include the compounds represented by General Formula (III) described in the upper left column on p. 11 of JP1996-39948A (JP-H8-39948A), and the compounds (III)-1 to (III)-25 which are specific compounds thereof described in the lower left column on p. 11 to the lower left column on p. 12 of the same publication.
The amount of these polyhydroxybenzene compounds to be added may be less than $5 \times 10^{-1}$ mol per mole of silver halide and is preferably $5 \times 10^{-3}$ mol to $1 \times 10^{-1}$ mol per mole of silver halide.
The silver halide photographic sensitive material according to the present disclosure is formed of a silver halide emulsion layer (that is, a photosensitive layer) containing photosensitive silver halide particles on a support, and at least one non-photosensitive hydrophilic colloid layer from among an interlayer, a surface protective layer, a back layer, a back surface protective layer, an antihalation layer, or a filter layer, but the emulsification sensitization method and various additives used are not particularly limited, and for example, those described in JP1990-68539A (JP-H2-68539A) can be suitably used.

15) Surface protective layer and back protective layer

It is preferable that the silver halide photographic sensitive material according to the present disclosure has a surface protective layer and a back protective layer, and the surface protective layer and the back protective layer contain various chemicals with a hydrophilic colloid such as gelatin as a binder. In a case where the main component of the layer is gelatin, a preservative or the like is required. In addition, it is preferable that the silver halide photographic sensitive material contains a matting agent, a lubricant, a plasticizer, an antistatic agent, a surfactant, a hardening agent, a thickener, a dye, a conductive material, or the like as necessary.

16) Development treatment method

As a development treatment method for the silver halide photographic sensitive material according to the present disclosure, the methods described in the line 7 of the upper right column on p. 16 to the line 15 of the lower left column on p. 19 in JP1990-103037A (JP-H2-103037A), in the line 5 of the lower right column on p. 3 to the line 10 of the upper column on p. 6 in JP1990-115837A (JP-H2-115837A), and in the line 42 of the left column on p. 34 to the line 2 of the left column on p. 35 in JP2000-112078A can be employed. In addition, in the thermally-developable photosensitive material, the method described in the line 40 of the left column on p. 37 to the line 43 of the left column on p. 35 in JP2001-255617A can be employed.

Examples of one aspect of the silver halide photographic sensitive material according to the present disclosure include a photosensitive thermal development photographic material. The technique is described in paragraphs 16 to 189 of JP5623921B. In this aspect, in a case where the surfactants described in paragraphs 181 to 183 of the publication are the surfactants described in the present application, a desired effect can be obtained.

(Diffusion transfer type silver halide photographic sensitive material)

The diffusion transfer type silver halide photographic sensitive material according to the present disclosure includes a support, and a layer that is provided on the support and contains a compound (that is, the compound according to the present disclosure) having a structure represented by Formula (Ia) and having at least one or more selected from the group consisting of -OH, -COOH, $-PO_3H$, {$-OP(=O)(OH)_2$}, $-CO_2M^1$, $-SO_3M^1$, $-NT^1T^2$, an oxazoline group, $-NG^1G^2G^3E^1$, a group having a betaine structure, and a group having a polyoxyalkylene structure.

$M^1$ represents an alkali metal, an alkaline earth metal, Mg, Al, or $Q^1Q^2Q^3Q^4N^+$, $Q^1$, $Q^2$, $Q^3$, and $Q^4$ each independently represent a hydrogen atom or an alkyl group having 1 to 20 carbon atoms, $T^1$ and $T^2$ each independently represent a hydrogen atom, an alkyl group having 1 to 20 carbon atoms, an alkylene group, an oxyalkylene group, or an alkoxy group, $T^1$ and $T^2$ may be bonded to each other, $E^1$ represents an anion, and $G^1$, $G^2$, and $G^3$ each independently represent a hydrogen atom or an alkyl group having 1 to 20 carbon atoms.

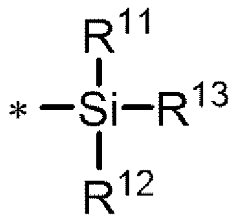
(Ia)

In Formula (Ia), * represents a bonding position, and $R^{11}$, $R^{12}$, and $R^{13}$ each independently represent an alkyl group, an alkenyl group, or an aryl group.

Preferable aspects of the compound in the diffusion transfer type silver halide photographic sensitive material according to the present disclosure are the same as the preferable aspects of the compound according to the present disclosure described above.

The diffusion transfer type silver halide photographic sensitive material according to the present disclosure may contain only one or two or more kinds of the compounds according to the present disclosure.

The content of the compound according to the present disclosure in the above-described layer of the diffusion transfer type silver halide photographic sensitive material according to the present disclosure may be appropriately selected according to the applications thereof, but is preferably 0.0001% by mass to 50% by mass, more preferably 0.001% by mass to 20% by mass, and particularly preferably 0.01% by mass to 10% by mass with respect to the total mass of the above-described layer.

The above-described layer may be any layer constituting the diffusion transfer type silver halide photographic sensitive material described below. The layer is preferably a layer that serves as a gas-liquid interface during coating and more preferably the outermost layer of the photosensitive material that is finally laminated. Specifically, the layer is an interlayer in a base material for a photosensitive sheet, an outermost layer of a base material, an interlayer in a photosensitive sheet, a protective layer, a temperature compensating layer in a cover sheet, or the like. Among these, the outermost layer of the base material in the base material for a photosensitive sheet, the protective layer in the photosensitive sheet, and the temperature compensating layer in the cover sheet are particularly suitable.

In addition, in the diffusion transfer type silver halide photographic sensitive material according to the present disclosure, the layer containing the compound according to the present disclosure may be one layer or two or more layers.

The above-described layer may contain various components contained in the diffusion transfer type silver halide photographic sensitive material described below.

It is preferable that the diffusion transfer type silver halide photographic sensitive material according to the present disclosure includes a photosensitive sheet, a transparent cover sheet, and an alkali treatment composition-containing body spread between the photosensitive sheet and the transparent cover sheet.

[1] Alkali treatment composition-containing body

The alkali treatment composition-containing body is uniformly spread on the exposed photosensitive sheet and has a function of performing a development treatment on the photosensitive layer and a function of completely blocking the photosensitive layer from external light together with a light-shielding layer provided on the rear surface of the transparent support of the photosensitive sheet or in the photosensitive sheet. Therefore, the alkali treatment composition-containing body typically contains an alkali, a thickener, a light-shielding agent, a developer, a development accelerator for adjusting development, a development inhibitor, an antioxidant for preventing deterioration of a developer, and the like.

(a) Alkali

The alkali is not particularly limited as long as the pH of the liquid is adjusted to 12 or greater. Examples of the alkali include hydroxides of alkali metals (for example, sodium hydroxide, potassium hydroxide, and lithium hydroxide), phosphates of alkali metals (for example, potassium phosphate), guanidines, and hydroxides of quaternary amines (for example, tetramethylammonium hydroxide). Among these, potassium hydroxide and sodium hydroxide are preferable.

(b) Developer

The developer may be any developer as long as the developer substantially does not generate a stain even in a case where the coloring agent image forming compound is cross-oxidized and oxidized. The developer may be used alone or in combination of two or more kinds thereof, or may be used in the form of a precursor. Examples of the developer include aminophenols and pyrazolidinones. Among these, the pyrazolidinones are particularly preferable from the viewpoint that stains are less generated. Specific examples of the pyrazolidinones include 1-phenyl-3-pyrazolidinone, 1-p-tolyl-4,4-dihydroxymethyl-3-pyrazolidinone, 1-(3'-methyl-phenyl)-4-methyl-4-hydroxymethyl-3-pyrazolidinone, 1-phenyl-4-methyl-4-hydroxymethyl-3-pyrazolidinone, and 1-p-tolyl-4-methyl-4-hydroxymethyl-3-pyrazolidinone. The developer may be formulated into the alkali treatment composition-containing body or may be added to an appropriate layer of the photosensitive sheet.

(c) Light-shielding agent

A material having a light-shielding function can be used as the light-shielding agent without particular limitation. Examples of the light-shielding agent include carbon black and a decomposable dye described in US4615966A. Among these light-shielding agents, carbon black is preferable. The carbon black is not limited to carbon black obtained by a specific production method, and may be carbon black obtained by any production method. Examples of the method of producing carbon black include a channel method, a thermal method, and a furnace method, as described in Donnel Voet "Carbon Black" Marcel Dekker, Inc. (1976).

In a case where carbon black is used as the light-shielding agent, it is preferable that the carbon black is made into an aqueous dispersion in advance. The aqueous dispersion of carbon black is frequently used as a black material or a light-shielding material as a coating material, an ink, a cosmetic product, or a photographic sensitive material. In order to prepare an aqueous dispersion of carbon black, typically, carbon black is added to water in which an appropriate dispersant is dissolved, the average particle diameter of the carbon black is set to about 10 $\mu$m to 100 $\mu$m, the carbon black is coarsely dispersed using a coarse disperser (for example, a high-speed stirring disperser such as a dissolver described in JP1979-36045 (JP-S54-36045)), and the particle diameter is further reduced with a fine disperser (for example, a sand grinder, a homogenizer, or a colloid mill). An aqueous dispersion of carbon black having an average particle diameter of about 0.1 $\mu$m to 10 $\mu$m can be obtained by performing the above-described step. In addition, as described in JP1983-52362A (JP-S58-52362A), the carbon black may be dispersed in an aqueous solution containing an organic solvent, and the organic solvent may be removed to obtain an aqueous dispersion of carbon black.

Preferred examples of the dispersant include those described in "Comprehensive Dispersion Technology Handbook" (publishing division, management development center) pp. 255 to 257 and pp. 501 to 539. Examples of commercially available dispersants include DEMOL N (trade name, manufactured by Kao Corporation).

The type and/or the amount of the dispersant affects the sodium ion content described below. The type and/or the amount of the dispersant is required to be determined to satisfy (a) the condition for imparting sufficient dispersibility to the light-shielding agent and (b) the condition for the sodium ion content. In order to satisfy both the conditions for the

dispersibility and the sodium ion content, it is preferable that the blending amount of the dispersant is set to 2% by mass to 100% by mass with respect to the light-shielding agent.

(d) Optical density

The optical density of the alkali treatment composition-containing body is preferably 47 or greater, more preferably 50 or greater, and particularly preferably 55 or greater. In a case where the optical density is 47 or greater, sufficient light-shielding properties are obtained, and the spot fogging is suppressed. It is preferable to determine the blending amount of the light-shielding agent such that the optical density is 47 or greater. Although the optical density depends on the type of the light-shielding agent to be used, the blending amount of the light-shielding agent is preferably set to about 10% by mass to 40% by mass in order to set the optical density to 47 or greater.

(e) Sodium ion content

The sodium ion content of the alkali treatment composition-containing body is preferably 0.4 $g/m^2$ or less in a state of being spread. The sodium ion content is still more preferably 0.35 $g/m^2$ or less and particularly preferably 0.25 $g/m^2$ or less.

The sodium ion content is mainly determined by the thickener in addition to the dispersant of the light-shielding agent described above.

Sodium carboxymethyl cellulose is particularly preferable as the thickener. Sodium carboxymethyl cellulose has sufficient spreadability and stability. **In** a case where an alkali metal salt other than sodium of polyvinyl alcohol, hydroxyethyl cellulose, and carboxymethyl cellulose is used as a thickener, the sodium ion content can be reduced. However, these compounds do not have sufficient spreadability or stability, and thus it is not appropriate to use these compounds alone. Therefore, it is preferable that sodium carboxymethyl cellulose is mainly used as the thickener and that an alkali metal salt other than sodium of polyvinyl alcohol, hydroxyethyl cellulose, or carboxymethyl cellulose is used in combination.

It is preferable to adjust the degree of etherification and the addition amount of the sodium carboxymethyl cellulose such that the sodium ion content is 0.4 $g/m^2$ or less in a state of being spread. The degree of etherification of sodium carboxymethyl cellulose is preferably 0.5 to 2.7 and more preferably 1.0 to 2.4. The blending amount of sodium carboxymethyl cellulose is preferably 1% by mass to 15% by mass and more preferably 2% by mass to 10% by mass.

The alkali treatment composition-containing body satisfying the above-described optical density and sodium ion content exhibits excellent light-shielding properties and dye transfer properties even in a case of being thinly spread on a photosensitive sheet. **In** the present specification, "thinly spread" indicates that the alkali treatment composition-containing body is spread on the photosensitive sheet with a thickness of 10 μm to 80 μm. The spreading thickness is preferably 10 μm to 70 μm and more preferably 20 μm to 60 μm.

[2] Photosensitive sheet

(a) First transparent support

The support of the photosensitive sheet may be any support that is typically used for a photographic sensitive material. The support of the integrated color diffusion transfer film unit needs to be transparent. The support is preferably smooth. Examples of the support material include cellulose acetate, polystyrene, polyethylene terephthalate, and polycarbonate. In order to prevent light piping, it is preferable that the support contains a small amount of a dye or a pigment such as titanium oxide. The thickness of the support of the photosensitive sheet is preferably 25 μm to 350 μm, more preferably 50 μm to 210 μm, and particularly preferably 70 μm to 150 μm. It is preferable that an undercoat layer is provided on the surface side of the support. In addition, a layer for balancing curl or an oxygen barrier layer can be provided on the back side of the support, as necessary. The oxygen barrier layer can be provided with reference to the description in JP1981-78833A (JP-S56-78833A).

(b) Image receiving layer

It is preferable that the image receiving layer (also referred to as a dye image receiving layer) of the photosensitive sheet contains a mordant and a hydrophilic colloid. The image receiving layer may be a single layer or may have a configuration in which layers having different mordant powers are laminated. The image receiving layer formed of a single layer or multiple layers can be provided with reference to the description in JP1986-252551A (JP-S61-252551A).

As the mordant, a polymer mordant is preferable. The polymer mordant is a polymer containing a secondary and/or tertiary amino group, a polymer having a nitrogen-containing heterocyclic moiety, a polymer containing a

quaternary cation, or the like, and the molecular weight thereof is preferably 5,000 or greater and particularly preferably 10,000 or greater. The coating amount of the mordant is preferably 0.5 $g/m^2$ to 10 $g/m^2$, more preferably 1 $g/m^2$ to 5 $g/m^2$, and particularly preferably 2 $g/m^2$ to 4 $g/m^2$.

Examples of the hydrophilic colloid include gelatin, polyvinyl alcohol, polyacrylamide, and polyvinylpyrrolidone. Gelatin is preferable as the hydrophilic colloid.

The image receiving layer may contain a fading inhibitor. The fading inhibitor is not particularly limited, and for example, those described in JP1987-30620A (JP-S62-30620A), JP1987-30621A (JP-S62-30621A), and JP1987-215272A (JP-S62-215272A) can be used.

The thickness of the image receiving layer may be the same as the thickness of the image receiving layer of a typical color diffusion transfer film unit.

(c) White reflective layer

A white reflective layer of the photosensitive sheet forms a white background of a color image. The white reflective layer usually contains a white pigment and a hydrophilic binder.

The whiteness of the white reflective layer is determined by the type of pigment, the mixing ratio between the pigment and the binder, and the coating amount of the pigment. In a case where the white pigment is titanium dioxide, the content of the titanium dioxide is preferably 5 $g/m^2$ to 40 $g/m^2$ and more preferably 10 $g/m^2$ to 25 $g/m^2$.

The light reflectivity of the white reflective layer is preferably 70% or greater and more preferably 78% to 85% with light having a wavelength of 540 nm.

Examples of the white pigment include barium sulfate, zinc oxide, barium stearate, silver flakes, silicates, alumina, zirconium oxide, sodium zirconium sulfate, kaolin, mica, and titanium dioxide. In addition, non-film-forming polymer particles such as polystyrene can also be used as the white pigment. Among these, titanium dioxide is preferable, and rutile type titanium dioxide is particularly preferable. The white pigment may be used alone or in combination of two or more kinds thereof. In a case where two or more kinds of white pigments are used, it is easy to set the reflectivity of the white reflective layer to a preferable value.

As the white pigment, a pigment which has been subjected to a surface treatment with alumina, silica, zinc oxide, or the like is preferable, and a pigment in which the amount of the surface treatment is 5% or greater is more preferable. The white reflective layer containing a surface-treated white pigment exhibits a high reflectivity.

Examples of commercially available titanium dioxide include Ti-pure R931 (trade name, manufactured by DuPont de Nemours,Inc.) and those described in Research Disclosure (RD) No. 15162.

Examples of the hydrophilic binder include a polymer matrix having alkaline penetrability, such as gelatin and polyvinyl alcohol, and a cellulose derivative, such as hydroxyethyl cellulose or carboxymethyl cellulose. In a case where the binder is gelatin, the mass ratio between the white pigment and the gelatin is preferably 1/1 to 20/1 and more preferably 5/1 to 10/1.

It is preferable that the white reflective layer contains a fading inhibitor. The fading inhibitor is not particularly limited, and for example, those described in JP1987-30620B (JP-S62-30620B) and JP1987-30621B (JP-S62-30621B) can be used.

(d) Light-shielding layer

The light-shielding layer is provided between the white reflective layer and the photosensitive layer. It is preferable that the light-shielding layer contains a light-shielding agent and a hydrophilic binder.

The light-shielding agent may be the light-shielding agent described in the section of (c) light-shielding agent of [1] alkali treatment composition-containing body described above. The content of the light-shielding agent varies depending on the sensitivity of the photosensitive material to be shielded from light, but is usually preferably about 5 to 10 in terms of optical density.

The binder of the light-shielding layer may be any binder as long as the binder can disperse a light-shielding agent such as carbon black. Preferred examples of the binder include gelatin.

The thickness of the light-shielding layer is not particularly limited within a range where the light-shielding layer exhibits a sufficient light-shielding ability and the thickness of the photosensitive sheet is not excessively large.

(e) Photosensitive layer

It is preferable that the photosensitive layer is adjacent to the light-shielding layer and contains a coloring agent image forming compound and a silver halide emulsion. The photosensitive layer may be a multilayer formed of a silver halide emulsion layer and a coloring agent image forming compound layer, or a single layer containing both a silver halide emulsion and a coloring agent image forming compound. Hereinafter, a case of the multilayer will be described, but the

same applies to a case of the single layer.

(f) Coloring agent image forming compound

The coloring agent image forming compound includes a yellow coloring agent forming compound, a magenta coloring agent forming compound, and a cyan coloring agent forming compound.

Specific examples of the yellow coloring agent forming compound are described in US3597200A, US3309199A, US4013633A, US4245028A, US4156609A, US4139383A, US4195992A, US4148641A, US4148643A, US4336322A, JP1976-114930A (JP-S51-114930A), JP1981-71072A (JP-S56-71072A), Research Disclosure 17630 (1978), and Research Disclosure 16475 (1977).

Specific examples of the magenta coloring agent forming compound are described in US3453107A, US3544545A, US3932380A, US3931144A, US3932308A, US3954476A, US4233237A, US4255509A, US4250246A, US4142891A, US4207104A, US4287292A, JP1977-106727A (JP-S52-106727A), JP1978-23628A (JP-S53-23628A), JP1980-36804A (JP-S55-36804A), JP1981-73057A (JP-S56-73057A), JP1981-71060A (JP-S56-71060A), JP1981-134A (JP-S55-134A), JP1995-120901A (JP-H7-120901A), JP1996-286343A (JP-H8-286343A), JP1996-286344A (JP-H8-286344A), and JP1996-292537A (JP-H8-292537A).

Specific examples of the cyan coloring agent forming compound are described in US3482972A, US3929760A, US4013635A, US4268625A, US4171220A, US4242435A, US4142891A, US4195994A, US4147544A, US4148642A, GB1551138, JP1979-99431A (JP-S54-99431A), JP1977-8827A (JP-S52-8827A), JP1978-47823A (JP-S53-47823A), JP1978-143323A (JP-S53-143323A), JP1979-99431A (JP-S54-99431A), JP1981-71061A (JP-S56-71061A), EP53037B, EP53040B, Research Disclosure 17,630 (1978), Research Disclosure 16,475 (1977), and the like.

A coloring agent image forming compound that forms a coloring agent by coupling can also be used as the coloring agent image forming compound. Examples of the coloring agent image forming compound that forms a coloring agent by coupling are described in JP1996-286340A (JP-H8-286340A), JP1997-152705A (JP-H9-152705A), JP1998-186564A (JP-H10-186564A), JP1998-293388A (JP-H10-293388A), and the like.

A positive tone coloring agent image forming compound can also be used. Examples of the positive tone coloring agent image forming compound are described in JP1992-156542A (JP-H4-156542A), JP1992-155332A (JP-H4-155332A), JP1992-172344A (JP-H4-172344A), JP1992-172450A (JP-H4-172450A), JP1992-318844A (JP-H4-318844A), JP1992-356046A (JP-H4-356046A), JP1993-45824A (JP-H5-45824A), JP1993-45825A (JP-H5-45825A), JP1993-53279A (JP-H5-53279A), JP1993-107710A (JP-H5-107710A), JP1993-241302A (JP-H5-241302A), JP1993-107708A (JP-H5-107708A), JP1993-232659A (JP-H5-232659A), US5192649A, and the like. It is preferable that the positive tone coloring agent image forming compound is combined with a negative tone silver halide emulsion described below.

The positive tone coloring agent image forming compound can be dispersed by the method described on pp. 144 to 146 of JP1987-215272A (JP-S62-215272A). In addition, the dispersion may contain the compounds described on pp. 137 to 144 of JP1987-215272A (JP-S62-215272A). Specific examples of the coloring agent image forming compound include the following compounds. Further, Dye in the following compounds represents a coloring agent group, a temporarily short-wavelength coloring agent group, or a coloring agent precursor group.

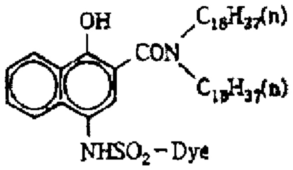

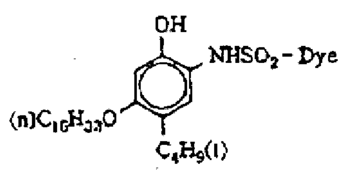

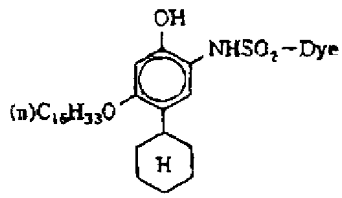

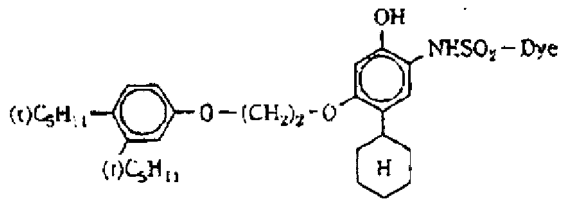

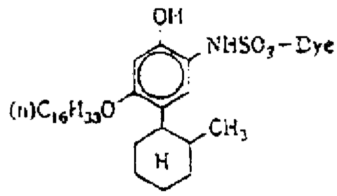

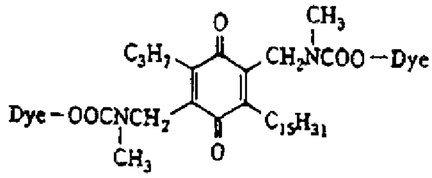

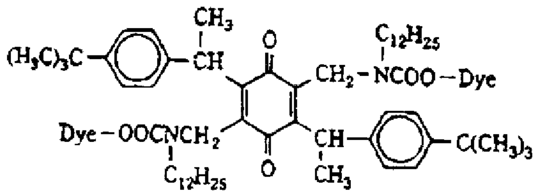

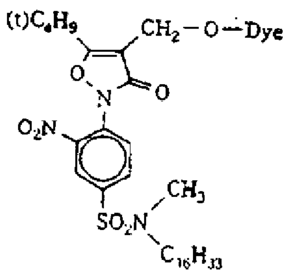

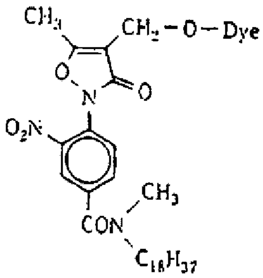

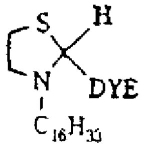

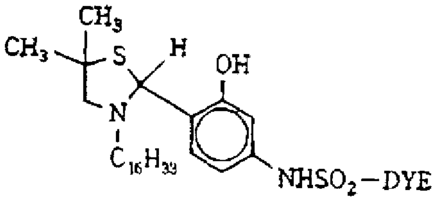

(g) Silver halide emulsion

The silver halide emulsion may be a negative tone silver halide emulsion that mainly forms a latent image on the surface of the silver halide particles, or may be an internal latent image type direct positive silver halide emulsion that forms a latent image inside the silver halide particles. The internal latent image type direct positive silver halide emulsion includes, for example, so-called "conversion type emulsion" formed by using a difference in solubility of silver halide, and "core/shell type emulsion" in which at least photosensitive sites of internal core (also referred to as core) particles of silver halide, which are doped with metal ions, chemically sensitized, or both, are coated with an external shell (also referred to as a shell) of silver halide, and the like, which are described in US2592250A, US3206313A, GB1027146, US3761276A, US3935014A, US3447927A, US2297875A, US2563785A, US3551662A, US4395478A, West German Patent No. 2728108, and US4431730A.

In addition, in a case where the internal latent image type direct positive silver halide emulsion is used, it is necessary to provide a surface fogging nucleus using light or a nucleating agent after image exposure. As the nucleating agent, hydrazines described in US2563785A, US2588982A, and the like, hydrazines and hydrazones described in US3227552A, heterocyclic quaternary salt compounds described in GB1283835A, JP1977-69613A (JP-S52-69613A), US3615615A, US3719494A, US3734738A, US4094683A, US4115122A, and the like, sensitizing dyes having a substituent with a nucleus-acting property in a dye molecule described in US3718470A, thio-urea-bonded acylhydrazine-based compounds described in US4030925A, US4031127A, US4245037A, US4255511A, US4266013A, US4276364A, GB2012433, and the like, and acylhydrazine-based compounds bonded using a heterocyclic group (a thioamide ring, a triazole ring, a tetrazole ring, or the like) as an adsorbing group described in US4080270A, US4278748A, GB2011391, and the like can be used.

In order to reduce the sensitivity of the reversed negative image and increase the inversed positive sensitivity, it is also preferable to use the metal complex described in JP2002-40607A and JP2003-107616A.

As a preferable production method for the negative tone silver halide emulsion, the method described in JP2006-113291A can be preferably used.

A spectral sensitizing dye can be used in combination with the silver halide emulsion. Specific examples thereof are described in JP1984-180550A (JP-S59-180550A), JP1985-140335A (JP-S60-140335A), RD17029, US1846300A, US2078233A, US2089129A, US2165338A, US2231658A, US2917516A, US3352857A, US3411916A, US2295276A, US2481698A, US2688545A, US2921067A, US3282933A, US3397060A, US3660103A, US3335010A, US3352680A, US3384486A, US3623881A, US3718470A, and US4025349A.

(h) Configuration of photosensitive sheet

It is preferable that the photosensitive sheet includes at least three layers of silver halide emulsion layers having different color sensitivities and at least two layers of color mixing prevention layers which are positioned between the silver halide emulsion layers and contain a non-diffusive reducing agent.

In order to impart different color sensitivities to at least three layers of the silver halide emulsion layers, it is effective and preferable to use the above-described spectral sensitizing dye having different absorption wavelength distributions.

In a case of imparting different color sensitivities to the silver halide emulsion, it is preferable that the spectral sensitivity distributions do not overlap each other as much as possible, but it is not necessary to completely separate the spectral sensitivity distributions. In a case where a relationship in which the sensitivity of one emulsion layer of the at least three silver halide emulsion layers at a specific wavelength is 2 times or more the sensitivity of at least two other emulsion layers of the silver halide emulsion layers is established, it can be considered that the color sensitivities are different. In a

relationship of sensitivity between the silver halide emulsion layers in which at least three layers are present, it is desirable that the sensitivity of one emulsion layer at a specific wavelength is preferably 5 times or more, and more preferably 10 times or more, that of the other at least two silver halide emulsion layers. The specific wavelength for establishing these relationships is not limited, and may be in any of the visible range, the ultraviolet range, or the infrared range. However, it is preferable that the silver halide emulsion of the at least three layers of the silver halide emulsion layers is selected from a silver halide emulsion having photosensitivity to any of blue, green, red, or infrared.

The emulsion and the coloring agent image forming compound may be provided in separate layers, or may be contained in one layer. In a case where the coloring agent image forming compound has absorption in the spectral sensitivity range of the emulsion combined with the coloring agent image forming compound in a state where the coloring agent image forming compound is applied, it is preferable that the emulsion and the coloring agent image forming compound are provided in separate layers.

The emulsion layer may be formed of emulsions having different sensitivities. In addition, an optional layer may be provided between the emulsion layer and the coloring agent image forming compound layer. For example, in a case where a layer containing a nucleating development accelerator described in JP1985-173541A (JP-S60-173541A) or a partition wall layer described in JP1985-15267B (JP-S60-15267B) is provided, the color image density can be increased, and in a case where a reflective layer is provided, the sensitivity of the photosensitive sheet can be increased. The reflective layer is a layer containing a white pigment and a hydrophilic binder, and the preferable white pigment is titanium oxide and the preferable hydrophilic binder is gelatin. The coating amount of titanium oxide is preferably 0.1 $g/m^2$ to 8 $g/m^2$ and more preferably 0.2 $g/m^2$ to 4 $g/m^2$. Examples of the reflective layer are described in JP1985-91354A (JP-S60-91354A).

In a case of a photosensitive layer having a multilayer configuration, it is preferable that a combination unit of the blue-sensitive emulsion, a combination unit of the green-sensitive emulsion, and a combination unit of the red-sensitive emulsion are sequentially disposed from the exposure side. An optional layer can be provided between the individual emulsion layer units as necessary.

(i) Color mixing prevention layer

In order to prevent an undesirable effect of the development of a certain emulsion layer on other emulsion layer units, it is preferable that a color mixing prevention layer containing a non-diffusive reducing agent positioned between the emulsion layer and the emulsion layer is provided. Since at least one layer of the color mixing prevention layer is required between the respective emulsion layers, it is preferable that the photosensitive sheet has at least two layers of the color mixing prevention layers.

As the non-diffusive reducing agent used in the color mixing prevention layer, any known compound can be preferably used.

For example, it is also preferable to use a high-molecular-weight redox compound described in JP1993-333501A (JP-H5-333501A), a phenidone or hydrazine-based compound described in WO98/33760A, US4923787A, and the like, or a redox compound described in the respective specifications of DE19618786A1, EP839623A1, EP842975A1, DE19806846A1, and FR2760460A1. In addition, it is also preferable to use the lactones described in JP2000-122243A.

The non-diffusive reducing agent used in the color mixing prevention layer is particularly preferably selected from a non-diffusive hydroquinone derivative, a sulfonamide phenol derivative, a sulfonamide naphthol derivative, and lactones. In particular, a non-diffusive hydroquinone derivative is preferable. Among these, a dialkyl hydroquinone derivative is preferable. Here, the alkyl group includes a substituted or unsubstituted alkyl group, and the substituent is not particularly limited as long as the substituent does not inhibit "non-diffusibility" of the compound. Specific examples thereof include an aryl group, an acyl group, an alkoxycarbonyl group, and an aryloxycarbonyl group. In addition, the total number of carbon atoms in "dialkyl group" is preferably 12 or more and more preferably 16 or more.

The molecular weight of the non-diffusive reducing agent is preferably 350 or greater, more preferably 390 or greater, and particularly preferably 500 or greater. In a case where the color mixing inhibitor is a polymer, the molecular weight is represented by the number average molecular weight. The upper limit of the molecular weight of the non-diffusive reducing agent is not particularly limited in a case where the non-diffusive reducing agent is a polymer, but is preferably about 1,000 or less in a case where the non-diffusive reducing agent is a compound other than a polymer. The optimum amount of the non-diffusive reducing agent contained in at least two color mixing prevention layers disposed between the silver halide emulsion layers varies depending on the coating amount, the shape, the particle size, the target maximum optical density, and the like of the silver halide emulsion to be used. However, a decrease in optical density or a delay in image formation time occurs in a case where the amount of the non-diffusive reducing agent is extremely large, and turbidity of the color development tone occurs in a case where the amount of the non-diffusive reducing agent is extremely small. Therefore, the amount of the non-diffusive reducing agent is required to be set in consideration of these points. A decrease in the color optical density in a case where the coating silver amount is reduced can be effectively suppressed by setting the coating amount of the silver halide to a specific ratio with respect to these non-diffusive reducing agents and

using a specific amount of a negative tone silver halide emulsion as the silver halide emulsion. The total number of moles of silver halide applied is in a range of 5 times to 10 times the total number of moles of the non-diffusive reducing agent applied, which is used in the color mixing prevention layer. The total number of moles of the non-diffusive reducing agent applied is preferably in a range of 0.5 mmol/$m^2$ to 1.5 mmol/$m^2$ and more preferably in a range of 0.8 mmol/$m^2$ to 1.2 mmol/$m^2$.

Specific examples of the non-diffusive reducing agent will be shown below, but the present disclosure is not limited thereto.

(A)

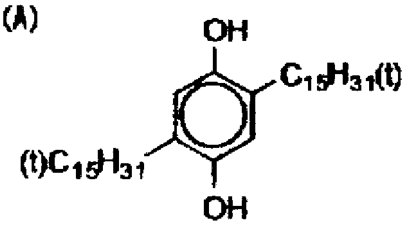

(B)

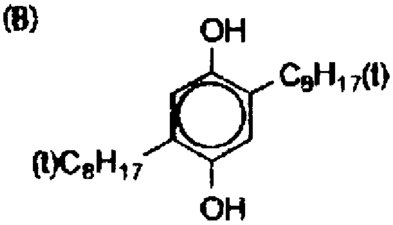

(C)

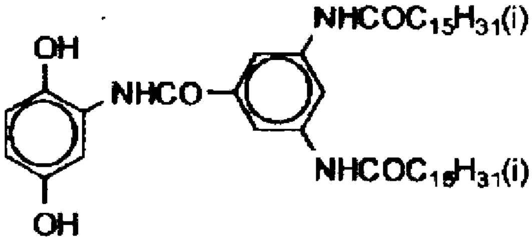

(D)

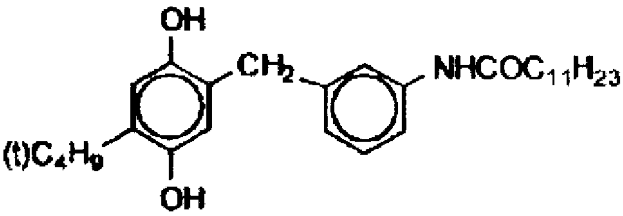

(E)

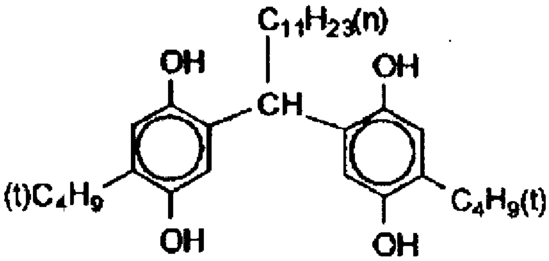

(F)

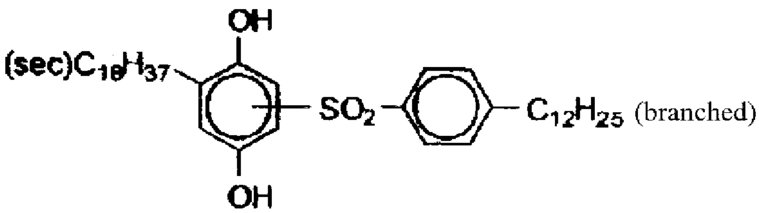

(G)

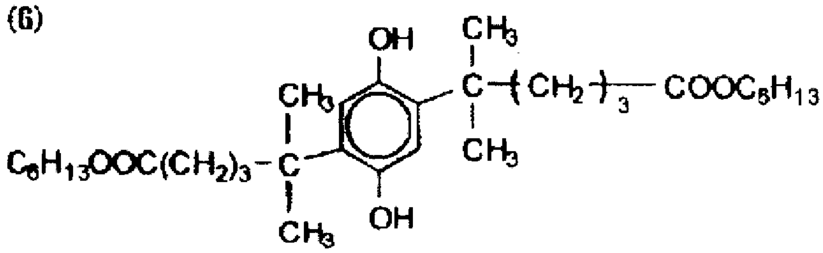

It is preferable that the non-diffusive reducing agent is present in the color mixing prevention layer as micro oil droplets obtained by being dissolved in a high-boiling point organic solvent and emulsified and dispersed. As the high-boiling point organic solvent, a high-boiling point organic solvent having a dielectric constant in a range of 4.0 to 8.0 is preferable. The high-boiling point organic solvent may be a mixture of two or more kinds thereof. Preferred examples of the high-boiling point organic solvent include esters such as phthalic acid ester and phosphoric acid ester, organic acid amides, and ketones. Here, the dielectric constant is measured under conditions of 25°C and 10 kHz by a transformer bridge method (Ando Electric TRS-10T). It is preferable that the boiling point of the high-boiling point organic solvent is 140°C or higher and the melting point thereof is 100°C or lower and more preferable that the boiling point thereof is 160°C or higher and the melting point thereof is 70°C or lower. The high-boiling point organic solvent may be a solid at a normal temperature, and the dielectric constant in this case is a value measured in a liquid (supercooled state). The amount (in terms of weight ratio) of the high-boiling point organic solvent to be used for the non-diffusive reducing agent in the color mixing prevention layer is preferably 0.3 to 20, more preferably 0.5 to 10, and still more preferably 1 to 8.

In a case where sufficient color reproducibility is exhibited and the thickness of the photosensitive sheet is not excessively increased, the thickness of the photosensitive layer is not particularly limited.

(j) Others

The photosensitive sheet can have an irradiation prevention layer, a UV absorber layer, a protective layer, and the like, as necessary.

The thickness of the photosensitive sheet is not particularly limited as long as the thickness of the color diffusion transfer film unit is not excessively increased.

[3] Transparent cover sheet

(a) Second transparent support

The support of the transparent cover sheet may be any transparent support as long as the support is a smooth transparent support that is typically used for the photographic sensitive material. Preferred examples of the support include cellulose acetate, polystyrene, polyethylene terephthalate, and polycarbonate. It is preferable that the support contains a trace amount of a dye in order to prevent light piping. In addition, it is preferable that an undercoat layer is provided on the support.

(b) Layer having neutralizing function

The layer having a neutralizing function (also referred to as a neutralizing layer) is a layer containing an acidic substance in a sufficient amount to neutralize an alkali brought in from the alkali treatment composition-containing body. As necessary, a multilayer structure formed of layers such as a neutralization speed adjusting layer (also referred to as a neutralization timing layer) and an adhesion reinforcing layer may be used.

Preferable acidic substances are substances containing an acidic group having a pKa of 9 or less (or a precursor group that generates an acidic group having a pKa of 9 or less by hydrolysis), and more preferable acidic substances are higher fatty acids such as oleic acid described in US2983606A, polymers of acrylic acid, methacrylic acid, or maleic acid and partial esters or acid anhydrides thereof described in US3362819A, copolymers of acrylic acid and acrylic acid ester described in FR290699B, and latex-type acidic polymers described in US4139383A and RD No. 16102 (1977). In addition, acidic substances disclosed in US4088493A, JP1977-153739A (JP-S52-153739A), JP1978-1023A (JP-S53-1023A), JP1978-4540A (JP-S53-4540A), JP1978-4541A (JP-S53-4541A), and JP1978-4542A (JP-S53-4542A) are also preferable.

Other examples of the acidic polymer include copolymers of vinyl monomers such as ethylene, vinyl acetate, and vinyl methyl ether and maleic anhydride, n-butyl esters thereof, copolymers of butyl acrylate and acrylic acid, and cellulose and acetate hydrodiene phthalate.

The acidic polymer can be used by being mixed with a hydrophilic polymer. Examples of the hydrophilic polymer include polyacrylamide, polymethylpyrrolidone, polyvinyl alcohol (also including a partially saponified product thereof), carboxymethyl cellulose, hydroxymethyl cellulose, hydroxyethyl cellulose, and polymethyl vinyl ether. Among these, polyvinyl alcohol is preferable. A polymer other than the hydrophilic polymer, for example, cellulose acetate, may be mixed with the acidic polymer.

The coating amount of the acidic polymer is determined by the amount of alkali in the alkali treatment composition-containing body. The equivalent ratio of the acidic polymer to the alkali per unit area is preferably 0.9 to 2.0. In a case where the amount of the acidic polymer is extremely small, the hue of the transfer dye changes, or a stain is generated in the white background portion. A change in hue, a decrease in light fastness, or the like occurs in a case where the amount of the acidic polymer is extremely large. The more preferable equivalent ratio is 1.0 to 1.3. The quality of the photograph is deteriorated in a case where the amount of the hydrophilic polymer to be mixed is extremely large or extremely small. The mass ratio of the hydrophilic polymer to the acidic polymer is preferably 0.01 to 10 and more preferably 0.1 to 3.0.

An additive can be incorporated into the neutralizing layer for various purposes. For example, a general film agent may be added for a hard film of the neutralizing layer, or a polyhydric hydroxyl compound such as polyethylene glycol, polypropylene glycol, or glycerin may be added to improve the brittleness of the film. In addition, an antioxidant, a fluorescent brightening agent, a development inhibitor, a precursor thereof, and the like can be added as necessary.

In the neutralization timing layer used in combination with the neutralizing layer, for example, a polymer having low alkali permeability, such as gelatin, polyvinyl alcohol, a partially acetalized product of polyvinyl alcohol, cellulose acetate, or partially hydrolyzed polyvinyl acetate, a latex polymer in which a small amount of hydrophilic comonomers such as an acrylic acid monomer is copolymerized to increase the activation energy of alkali permeability, or a polymer having a lactone ring is useful.

Among these, the timing layer formed of cellulose acetate disclosed in JP1979-136328A (JP-S54-136328A), US4267262A, US4009030A, US4029849A, and the like, the latex polymer in which a small amount of hydrophilic comonomers such as acrylic acid are copolymerized, which is disclosed in JP1979-128335A (JP-S54-128335A), JP1981-69629A (JP-S56-69629A), JP1982-6843A (JP-S57-6843A), US4056394A, US4061496A, US4199362A, US4250243A, US4256827A, US4268604A, and the like, the polymer having monoacrylic acid ester or monomethacrylic acid ester of a polyhydric alcohol, which is disclosed in JP1999-2890A (JP-H11-2890A), the polymer having a lactone ring, which is disclosed in US4229516A, and the polymers disclosed in JP1981-25735A (JP-S56-25735A), JP1981-97346A (JP-S56-97346A), JP1982-6842A (JP-S57-6842A), EP031957A1, EP03724A1, EP048412A1, and the like are particularly useful.

In addition, the polymers described in the following documents can also be used.

US3421893A, US3455686A, US3575701A, US3778265A, US3785815A, US3847615A, US4088493A, US4123275A, US4148653A, US4201587A, US4288523A, US4297431A, DE (OLS) 1622936A, DE2162277A, RD15162, No. 151 (1976), and the like

The neutralization timing layer may contain a development inhibitor and/or a precursor thereof disclosed in US4009029A, DE (OLS) 2913164A, DE3014672A, JP1979-155837A (JP-S54-155837A), JP1980-138745A (JP-S55-138745A), or the like, a hydroquinone precursor disclosed in US4201578A, or other photographic additives or precursors thereof. In addition, in a case where the auxiliary neutralization layer described in JP1988-168648A (JP-S63-168648A) and JP1988-168649A (JP-S63-168649A) is provided, it is effective in reducing a change in the transcription density over time after the treatment.

The neutralization timing layer may contain a plurality of these materials. A plurality of materials may be contained in one layer, or may be included in a plurality of layers.

(c) Other layers

A transparent cover sheet may have a back layer, a protective layer, a filter dye layer, or the like as a layer having an auxiliary function, in addition to the layer having a neutralizing function.

The back layer is provided to adjust curling and impart sliding properties. The back layer may contain a filter dye. The protective layer is mainly used to prevent adhesion to the back surface of the cover sheet and adhesion to the photosensitive material protective layer in a case where the photosensitive material and the cover sheet are laminated.

In a case where the transparent cover sheet contains a dye, the sensitivity of the photosensitive layer can be adjusted. The filter dye may be added to the support of the cover sheet, the layer having a neutralizing function, the back layer, the protective layer, a capturing mordant layer, or the like. In addition, a layer of a filter dye alone may be provided.

The diffusion transfer type silver halide photographic sensitive material according to the present disclosure can contain other known additives in each layer.

## Examples

Hereinafter, the present disclosure will be described in more detail with reference to examples. The materials, the used amounts, the ratios, the treatment contents, the treatment procedures, and the like described in the following examples can be appropriately changed without departing from the gist of the present disclosure. Therefore, the scope of the present disclosure is not limited to the following specific examples.
In addition, in the present examples, "%" and "part" denote "% by mass" and "part by mass" respectively unless otherwise specified.
(Examples 1-A to 1-N and Comparative Examples 1-A to 1-C: preparation of composition for image receiving film, and preparation and evaluation of film)
As a coating liquid for a base material and a sixth layer, a composition (A) containing the respective components listed in Table 2 was prepared with respect to 1,000 g of the completed coating liquid. Further, the remaining component in the composition (A) is water.

[Table 2]

| Type of compound | Amount (g/1000 composition) |
|---|---|
| Surfactant (1) | 2.53 |
| Additive (1) | 1.41 |
| Additive (5) | 1.57 |
| Gelatin | 35 |
| Matting agent (2) | 12.1 |
| Surfactant derived from matting agent (surfactant (3)) | 0.33 |

Further, the composition (A) listed in Table 2 was applied so that the gelatin coating amount in Table 3 was 0.29 g/m$^2$.
Separately, a back layer was laminated on a polyethylene terephthalate support, and then a base material was prepared by laminating a base material/a first layer and a base material/a second layer. Four layers from the base material/the third layer to the base material/the sixth layer were simultaneously pushed out from a Geyser onto the slide surface, and the base material was coated at a coating speed of 60 m/min. The image receiving film after the application was stored at 25°C and a relative humidity of 55% for 7 days to harden the film. The sample obtained in this manner was used as a film base material 101 for image reception.
The composition of each layer is listed in Table 3.
In addition, in order to forcibly evaluate the stability of the composition (A) against cissing during coating, coarse particles having a diameter of 6 μm are intentionally added to the composition. The incorporation of foreign matter in the coating environment or the peeling of foreign matter from the back layer may cause cissing during coating. The addition of the coarse particles is for the simulation thereof.

[Table 3]

| Layer configuration | Layer name | Additive | Coating amount (g/m$^2$) |
|---|---|---|---|
| Base material/sixth layer | Base material outermost layer | Composition (A) | Defined in Table 2 |
| | Light-shielding layer | Carbon black | 1.50 |
| Base material/fifth layer | | Surfactant (1) | 0.030 |
| | | Additive (1) | 0.060 |
| | | Additive (5) | 0.060 |
| | | Additive (12) | 0.15 |
| | | Gelatin | 1.00 |
| | Interlayer | Surfactant (1) | 0.0006 |
| Base material/fourth layer | | Additive (1) | 0.0090 |
| | | Additive (5) | 0.013 |
| | | Hardening agent (1) | 0.04 |
| | | Hardening agent (2) | 0.014 |
| | | Gelatin | 0.29 |

(continued)

| Layer configuration | Layer name | Additive | Coating amount (g/m$^2$) |
|---|---|---|---|
| Base material/third layer | White reflective layer | Titanium dioxide | 19.8 |
| | | Surfatant (6) | 0.019 |
| | | Additive (8) | 0.16 |
| | | Gelatin | 2.45 |
| Base material/second layer | Interlayer | Additive (10) | 0.014 |
| | | Surfatant (1) | 0.0003 |
| | | Additive (1) | 0.0090 |
| | | Gelatin | 0.31 |
| Base material/first layer | Image receiving layer | Polymer mordant (1) | 2.22 |
| | | Surfatant (7) | 0.020 |
| | | Additive (5) | 0.11 |
| | | Gelatin | 2.94 |
| Support (polyethylene terephthalate containing titanium oxide for preventing light piping and being subjected to undercoating, thickness of 90 μm) | | | |
| Back layer | Curling adjusting layer | Ultraviolet absorber (2) | 0.40 |
| | | Ultraviolet absorber (3) | 0.10 |
| | | Diacetyl cellulose | 4.2 |
| | | (Acetylation degree of 51%) | 0.25 |
| | | Additive (18)<br>Barium stearate | 0.11 |
| | | Hardening agent (4) | 0.50 |

Compositions (B) to (Q) were prepared by changing only the type of the compound of the portion of the surfactant (1) with respect to the composition (A) which is the coating liquid for the base material/the sixth layer. The details are listed in Table 5. In addition, image receiving film base materials 102 to 117 were prepared in the same manner as the image receiving film base material 101 except that only the type of the coating liquid for the base material/the sixth layer was changed.
The obtained sample was subjected to the following evaluation.

Evaluation 1) coating surface state

- Evaluation of cissing resistance -

The coated sample was visually observed at 10 m$^2$, and the frequency of cissing occurrence was evaluated.
The frequency of cissing occurrence in each sample was evaluated in terms of the percentage of the number of cissings in the image receiving film base material 101.

Evaluation 2) dust adhesion suppressiveness

The coated image receiving film was stored for 7 days under environmental conditions of 25°C and 55% RH, and then processed into a strip shape with a size of 35 mm × 120 mm.
Under environmental conditions of 25°C and 30% RH, the tissue papers formed of pulp were kneaded by hand to create pulp dust. The image receiving film was exposed for 30 minutes under environmental conditions of 25°C and 30% RH. The dust of pulp was sprinkled from a position about 20 cm above the black surface side of the image receiving film. Thereafter, the black surface of the film was turned upside down, and dust that did not adhere to the film was shaken off.
The degree of adhesion of the dust to each sample was visually observed under a brightness of 500 lux, and evaluated in terms of the percentage based on the frequency of generation of the image receiving film base material 101.

Evaluation 3) upper layer lamination properties

A functional film such as the image receiving film base material may be used by further laminating another functional layer thereon. Evaluation 3 is the evaluation for that purpose. In a case where the image receiving film base material was further coated with the coating liquid for evaluation listed in Table 4 such that the gelatin coating amount was

1.50 g/m$^2$, the frequency of occurrence of cissing was evaluated. In the evaluation, the frequency of occurrence of newly generated cissing was evaluated by applying the upper layer to the prepared image receiving film base material. In this case, the cissing that had already occurred in the image receiving film base material was subtracted. The evaluation was performed in terms of the percentage based on the frequency of generation of the image receiving film base material 101.

[Table 4]

| Type of compound | Amount (g/1000 composition) |
|---|---|
| Surfactant (1) | 2.53 |
| Additive (1) | 1.41 |
| Additive (5) | 1.57 |
| Gelatin | 35 |
| Matting agent (1) | 12.1 |
| Surfactant derived from matting agent (surfactant (3)) | 0.33 |

The evaluation results thereof are listed in Table 5.

[Table 5]

| | Name of composition | Compound (type) | Film base material No. for image reception | Coating surface state | Dust adhesion suppressiveness | Upper layer lamination properties |
|---|---|---|---|---|---|---|
| Comparative Example 1-A | (A) | Surfactant (1) | 101 | 100 | 100 | 100 |
| Comparative Example 1-B | (B) | Surfactant (3) | 102 | 330 | 120 | 90 |
| Example 1-A | (C) | Compound (P-1) | 103 | 7 | 7 | < 1 |
| Example 1-B | (D) | Compound (P-2) | 104 | 2 | 2 | < 1 |
| Example 1-C | (E) | Compound (P-3) | 105 | 7 | 4 | < 1 |
| Example 1-D | (F) | Compound (P-4) | 106 | 6 | 4 | < 1 |
| Example 1-E | (G) | Compound (P-5) | 107 | 2 | 2 | < 1 |
| Example 1-F | (H) | Compound (P-6) | 108 | 7 | 4 | < 1 |
| Example 1-G | (I) | Compound (P-7) | 109 | 6 | 4 | < 1 |
| Example 1-H | (J) | Mixture obtained by mixing compound (P-1) and surfactant (1) at ratio (mass ratio) of 1:1 | 110 | 6 | 8 | < 1 |
| Example 1-I | (K) | Mixture obtained by mixing compound (P-2) and surfactant (1) at ratio (mass ratio) of 1:1 | III | 2 | 3 | < 1 |
| Example 1-J | (L) | Mixture obtained by mixing compound (P-3) and surfactant (1) at ratio (mass ratio) of 1:1 | 112 | 5 | 4 | < 1 |

(continued)

| | Name of composition | Compound (type) | Film base material No. for image reception | Coating surface state | Dust adhesion suppressiveness | Upper layer lamination properties |
|---|---|---|---|---|---|---|
| Example 1-K | (M) | Mixture obtained by mixing compound (P-4) and surfactant (1) at ratio (mass ratio) of 1:1 | 113 | 4 | 4 | < 1 |
| Example 1-L | (N) | Mixture obtained by mixing compound (P-5) and surfactant (1) at ratio (mass ratio) of 1:1 | 114 | 2 | 3 | < 1 |
| Example 1-M | (O) | Mixture obtained by mixing compound (P-6) and surfactant (1) at ratio (mass ratio) of 1:1 | 115 | 5 | 4 | < 1 |
| Example 1-N | (P) | Mixture obtained by mixing compound (P-7) and surfactant (1) at ratio (mass ratio) of 1:1 | 116 | 4 | 4 | < 1 |
| Comparative Example 1-C | (Q) | Comparative surfactant (W) | 117 | 7 | 22 | 450 |

The details of each component described by the abbreviations used in Tables 2 to 5 are shown below.

Each of the compounds (P-2) to (P-7) has a structure of exemplary compounds (P2) to (P7). In addition, a compound (P-1) is a compound in which m = 0, n = 1, a = 0, b = 8, and R = a hydrogen atom in the exemplary compound (P1).

[Table 6]

| Compound | Copolymerization ratio (mass ratio) between components | | | Weight-average molecular weight (Mw) |
|---|---|---|---|---|
| | Constitutional unit A and/or B | Constitutional unit D | Constitutional unit C | |
| | Siloxane moiety | Polyalkylene oxide moiety | Betaine moiety | |
| Compound (P-1) | - | - | - | 700 |
| Compound (P-2) | 60 | 10 | 30 | 19200 |
| Compound (P-3) | 60 | 40 | - | 22100 |
| Compound (P-4) | 70 | - | 30 | 39800 |
| Compound (P-5) | 50 | 20 | 30 | 65600 |
| Compound (P-6) | 40 | 60 | - | 16500 |
| Compound (P-7) | 65 | - | 35 | 9300 |

Surfactant (1)

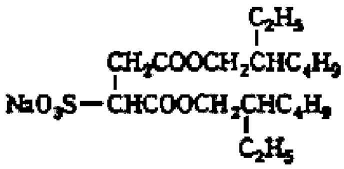

Surfactant (3): compound shown below

Surfactant (3)

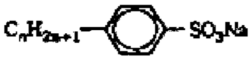 (n ≒ 12.6)

Comparative surfactant (W): compound shown below

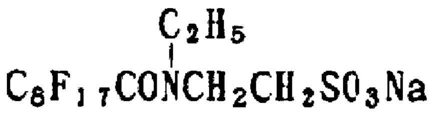

Surfactant (6): compound shown below

Surfactant (6)

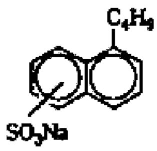

Surfactant (7): compound shown below

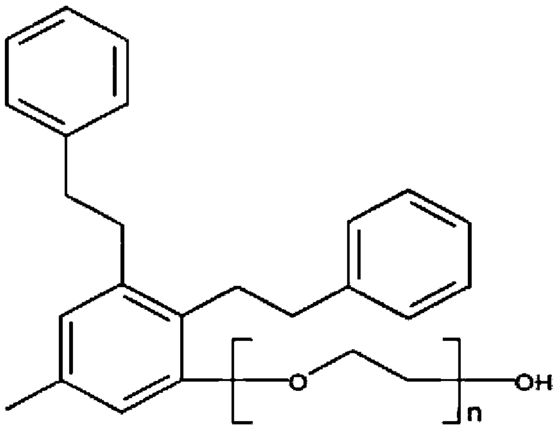

Additive (1): compound shown below

Additive (1)

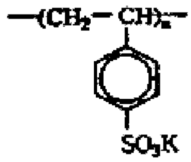

Additive (5): compound shown below

Additive (5)

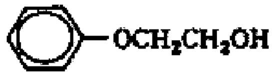

Additive (8): carboxymethyl cellulose (CMC CELLOGEN 6A, manufactured by DKS Co., Ltd.)

Additive (10): compound shown below

Additive (10)

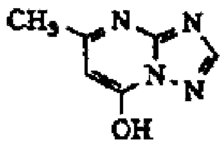

Additive (12): compound shown below

Additive (12)

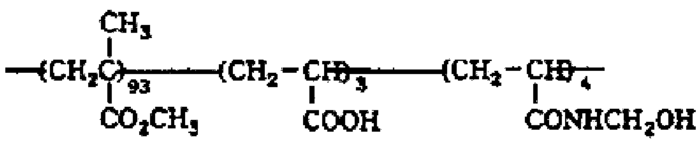

Additive (18): compound shown below

Additive (18)

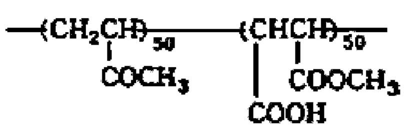

Matting agent (1): polymethyl methacrylate spherical latex (average particle diameter: 3 μm)
Matting agent (2): polymethyl methacrylate spherical latex (average particle diameter: 6 μm)
Hardening agent (1): compound shown below
Hardening agent (2): compound shown below
Hardening agent (4): compound shown below

Hardening agent (1) $CH_2=CHSO_2CH_2CONH(CH_2)_2NHCOCH_2SO_2CH=CH_2$

Hardening agent (2) $CH_2=CHSO_2CH_2CONH(CH_2)_3NHCOCH_2SO_2CH=CH_2$

Hardening agent (4)

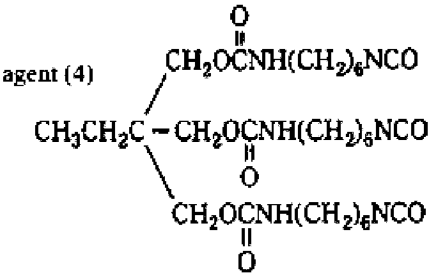

Polymer mordant (1): compound shown below

Polymer mordant (1)

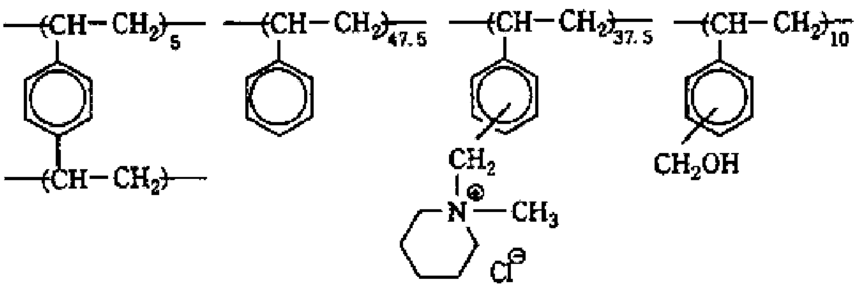

Ultraviolet absorber (2): compound shown below

Ultraviolet absorber (3): compound shown below

Ultraviolet absorber (2)

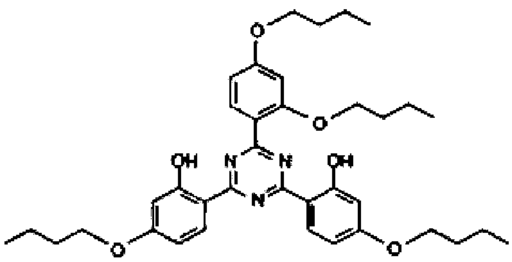

Ultraviolet absorber (3)

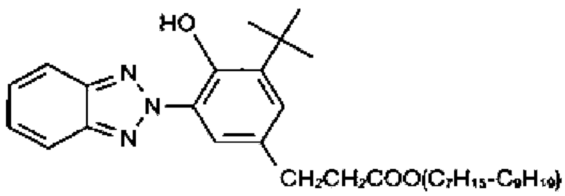

In a case where a functional material (for example, a functional film) is prepared using a composition containing the compound according to the present disclosure, a functional film having an excellent coating surface state and excellent dust adhesion resistance was obtained. In addition, it was easy to laminate another functional layer on the functional material according to the present disclosure.
In Comparative Example 1-C, a leveling agent containing a perfluorooctyl group was used as the surfactant. Although the frequency of occurrence of cissing is greatly improved as compared with Comparative Example 1-A in which the dialkyl sulfosuccinic acid type surfactant (1) frequently used in the related art was used, the dust adhesion property was inferior to that of the examples of the present application. In addition, it can be seen that the upper layer lamination properties are significantly inferior to the upper layer lamination properties of the examples of the present application.
In the preparation of the above-described film base material sample, a composition in which the matting agent and the leveling agent brought in by the matting agent were removed from the composition formulation of the base material/the sixth layer was prepared, and the same evaluation was performed. As a result, it was confirmed that a base material in which the occurrence of cissing was suppressed, the dust adhesion resistance was excellent, and the upper layer lamination properties were excellent could be formed by using a sample formed of the compound according to the present disclosure.
(Example 2: preparation of composition, and preparation and evaluation of silver halide photographic sensitive material)

<Preparation of base material for photosensitive material>

As described in Example 1 listed in Table 3, a back layer was laminated on a polyethylene terephthalate support, and the base material/the first to sixth layers were laminated to obtain a laminate base material (Subs-1).
In this case, as the composition of the base material/the sixth layer a composition in which the composition (A) of Comparative Example 1-A did not contain the matting agent (2) or the surfactant derived from the matting agent (the composition not containing the surfactant (3)) was used. This laminate base material (Subs-1) was stored for 7 days under environmental conditions of 25°C and a relative humidity of 55% RH after the coating.

<Preparation of photosensitive material>

As a coating liquid for the 18th layer of the silver halide photosensitive material, a composition (P-A) containing the respective components listed in Table 7 was prepared with respect to 1,000 g of the completed coating liquid.

[Table 7]

| Type of compound | Amount (g/1000 composition) |
|---|---|
| Surfactant (1) | 2.53 |
| Additive (1) | 1.41 |
| Additive (5) | 1.57 |
| Gelatin | 35 |
| Matting agent (1) | 30.3 |
| Matting agent (2) | 12.1 |
| Surfactant derived from matting agent (surfactant (3)) | 1.16 |

Further, the composition (P-A) listed in Table 7 was applied such that the gelatin coating amount in Table 8 was 0.20 g/$m^2$.
Eighteen layers from the first layer to the eighteenth layer were simultaneously pushed out from a Geyser onto a slide surface, the base material (Subs-1) prepared described above was coated at a coating speed of 60 m/min. The coated photosensitive material was stored for 7 days under an environmental condition of 25°C and a relative humidity of 55% RH to promote the hard film reaction. The sample obtained in this manner was used as a silver halide photographic sensitive material 201 of Comparative Example.
The composition of each layer is listed in Tables 8 to 10.
In addition, in order to forcibly evaluate the stability of the composition (P-A) against cissing during coating, coarse particles having a diameter of 6 μm are intentionally added to the composition. By intentionally adding coarse particles that are mixed at a very low frequency, cissing can be evaluated in a narrow coating area.

[Table 8]

| Layer configuration | Layer name | Additive | Coating amount (g/m$^2$) |
|---|---|---|---|
| Eighteenth layer | Protective layer | Composition (P-A) | Defined in Table 7 |
| Seventeenth layer | Ultraviolet absorber | Ultraviolet absorber (1) | 0.050 |
| | | Ultraviolet absorber (2) | 0.040 |
| | | Ultraviolet absorber (3) | 0.10 |
| | | Surfactant (3) | 0.013 |
| | | Additive (1) | 0.008 |
| | | Additive (5) | 0.023 |
| | | Additive (1) | 0.075 |
| | | Additive (2) | 0.025 |
| | | Additive (3) | 0.017 |
| | | Gelatin | 0.32 |
| Sixteenth layer | Blue photosensitive layer (high sensitivity) | Internally latent direct positive emulsion A | In terms of silver 0.38 |
| | | Nucleating agent (1) | 0.0000029 |
| | | Additive (2) | 0.051 |
| | | Additive (3) | 0.004 |
| | | Additive (4) | 0.013 |
| | | Additive (5) | 0.0038 |
| | | Additive (14) | 0.017 |
| | | Additive (1) | 0.0090 |
| | | Surfactant (5) | 0.0090 |
| | | Gelatin | 0.42 |
| Fifteenth layer | Blue photosensitive layer (low sensitivity) | Internally latent direct positive emulsion B | In terms of silver 0.07 |
| | | Internally latent direct positive emulsion C | In terms of silver 0.10 |
| | | Nucleating agent (1) | 0.0000025 |
| | | Additive (3) | 0.022 |
| | | Additive (5) | 0.0090 |
| | | Additive (1) | 0.013 |
| | | Surfactant (5) | 0.0090 |
| | | Gelatin | 0.35 |
| Fourteenth layer | White reflective layer | Titanium dioxide | 0.30 |
| | | Additive (1) | 0.0090 |
| | | Surfactant (1) | 0.00090 |
| | | Additive (5) | 0.011 |
| | | Additive (8) | 0.0028 |
| | | Gelatin | 0.27 |

[Table 9]

| Layer configuration | Layer name | Additive | Coating amount (g/m$^2$) |
|---|---|---|---|
| Thirteenth layer | Yellow coloring material layer | Yellow coloring agent-releasing compound (1) | 0.55 |
| | | High-boiling point organic solvent (1) | 0.36 |
| | | Additive (6) | 0.18 |
| | | Additive (7) | 0.090 |
| | | Surfactant (4) | 0.062 |
| | | Surfactant (5) | 0.030 |

(continued)

| Layer configuration | Layer name | Additive | Coating amount ($g/m^2$) |
|---|---|---|---|
| | | Additive (9) | 0.031 |
| | | Additive (1) | 0.0060 |
| | | Gelatin | 0.77 |
| Twelfth layer | Interlayer | Additive (10) | 0.013 |
| | | Surfactant (1) | 0.00030 |
| | | Additive (1) | 0.0070 |
| | | Gelatin | 0.32 |
| Eleventh layer | Color mixing prevention layer | Additive (11) | 0.47 |
| | | High-boiling point organic solvent (2) | 0.23 |
| | | Polymethyl methacrylate | 0.81 |
| | | Surfactant (5) | 0.046 |
| | | Additive (1) | 0.0020 |
| | | Additive (12) | 0.61 |
| | | Gelatin | 0.81 |
| Tenth layer | Green photosensitive layer (high sensitivity) | Internally latent direct positive emulsion D | In terms of silver 0.69 |
| | | Nucleating agent (1) | 0.0000025 |
| | | Additive (3) | 0.12 |
| | | Additive (5) | 0.014 |
| | | Additive (1) | 0.0030 |
| | | Additive (2) | 0.051 |
| | | Additive (14) | 0.017 |
| | | High-boiling point organic solvent (2) | 0.070 |
| | | Surfactant (5) | 0.040 |
| | | Gelatin | 0.87 |
| Ninth layer | Green photosensitive layer (low sensitivity) | Internally latent direct positive emulsion E | In terms of silver 0.11 |
| | | Internally latent direct positive emulsion F | In terms of silver 0.08 |
| | | Nucleating agent (1) | 0.0000027 |
| | | Additive (3) | 0.011 |
| | | Additive (4) | 0.033 |
| | | Additive (5) | 0.0015 |
| | | Additive (2) | 0.021 |
| | | Additive (14) | 0.0070 |
| | | Additive (1) | 0.011 |
| | | Surfactant (5) | 0.020 |
| | | Gelatin | 0.26 |
| Eighth layer | Interlayer | Additive (10) | 0.014 |
| | | Surfactant (1) | 0.00030 |
| | | Additive (5) | 0.014 |
| | | Gelatin | 0.28 |

[Table 10]

| Layer configuration | Layer name | Additive | Coating amount ($g/m^2$) |
|---|---|---|---|
| Seventh layer | Magenta coloring material layer | Magenta coloring agent-releasing compound (1) | 0.51 |
| | | High-boiling point organic solvent (1) | 0.18 |
| | | Additive (13) | 0.00093 |
| | | Additive (5) | 0.020 |
| | | Surfactant (4) | 0.040 |
| | | Additive (1) | 0.00700 |
| | | Gelatin | 0.45 |
| Sixth layer | Interlayer | Additive (10) | 0.014 |
| | | Surfactant (1) | 0.000300 |
| | | Additive (1) | 0.00900 |
| | | Gelatin | 0.31 |
| Fifth layer | Color mixing prevention layer | Additive (11) | 0.38 |
| | | High-boiling point organic solvent (2) | 0.19 |
| | | Polymethyl methacrylate | 0.66 |
| | | Surfactant (5) | 0.048 |
| | | Additive (1) | 0.0020 |
| | | Additive (12) | 0.49 |
| | | Gelatin | 0.65 |
| Fourth layer | Red photosensitive layer (high sensitivity) | Internally latent direct positive emulsion G | In terms of silver 0.33 |
| | | Nucleating agent (1) | 0.0000061 |
| | | Additive (3) | 0.040 |
| | | Additive (5) | 0.010 |
| | | Additive (1) | 0.0010 |
| | | Additive (2) | 0.045 |
| | | Additive (14) | 0.015 |
| | | High-boiling point organic solvent (2) | 0.040 |
| | | Surfactant (5) | 0.020 |
| | | Gelatin | 0.33 |
| Third layer | Red photosensitive layer (low sensitivity) | Internally latent direct positive emulsion H | In terms of silver 0.10 |
| | | Internally latent direct positive emulsion I | In terms of silver 0.11 |
| | | Nucleating agent (1) | 0.000025 |
| | | Additive (3) | 0.047 |
| | | Additive (5) | 0.016 |
| | | Additive (1) | 0.0080 |
| | | Surfactant (5) | 0.020 |
| | | Gelatin | 0.57 |
| Second layer | White reflective layer | Titanium dioxide | 1.87 |
| | | Additive (1) | 0.0070 |
| | | Surfactant (1) | 0.00040 |
| | | Additive (5) | 0.020 |
| | | Additive (8) | 0.016 |
| | | Gelatin | 0.68 |
| First layer | Cyan coloring material layer | Cyan coloring agent-releasing compound (1) | 0.19 |
| | | Cyan coloring agent-releasing compound (2) | 0.10 |

(continued)

| Layer configuration | Layer name | Additive | Coating amount (g/m²) |
|---|---|---|---|
| | | High-boiling point organic solvent (1) | 0.080 |
| | | Additive (3) | 0.060 |
| | | Additive (5) | 0.010 |
| | | Surfactant (4) | 0.050 |
| | | Additive (9) | 0.050 |
| | | Additive (1) | 0.00400 |
| | | Hardening agent (3) | 0.011 |
| | | Gelatin | 0.40 |

For the coating liquid for an eighteenth layer, compositions (P-B) to (P-S) in which the compound of the portion of the surfactant (1) was changed as listed in Table 13 with respect to the composition (P-A) were prepared. Silver halide photographic sensitive materials 202 to 219 were prepared in the same manner as that for the silver halide photographic sensitive material 201 except that only the type of the coating liquid for the 18th layer was changed.

The obtained photosensitive material sample was subjected to the following evaluation.

Evaluation 1) coating surface state

In the evaluation of the coating surface state, two evaluations of evaluation of cissing and evaluation of uniformity were performed.

- Evaluation of cissing -

The coated sample was visually observed at 10 $m^2$, and the frequency of cissing occurrence was evaluated.

The frequency of the occurrence of cissing in each sample was evaluated in terms of the percentage of the number of cissings in the silver halide photographic sensitive material 201.

- Evaluation of uniformity -

In a case of extruding the coating liquid from the Geyser onto a slide surface and applying the coating liquid onto the support, the coating was forcibly performed such that the coating surface state was likely to be disturbed by applying wind of about 2 m/sec to the slide surface.

The coated photosensitive material was uniformly exposed to perform a development treatment such that the density after the treatment was about 0.7. The image was visually observed over a length of 1 m with a width of 10 cm, and the uniformity of the coating was evaluated. The evaluation was carried out mainly focusing on the streak-like unevenness. The evaluation standards are described below.

A: Unevenness due to wind was not recognizable
B: Unevenness due to wind was hardly recognizable
C: Unevenness due to wind was slightly recognizable, but there was no problem in practical use.
D: Streak-like unevenness due to wind was recognizable and the captured image was uniform gray.
E: Streak-like unevenness due to wind was recognizable, and even in a case where the captured image was non-uniform with a pattern, the problem was significant.

Evaluation 2) electrostatic fogging suppressiveness

The coated silver halide photographic sensitive material was wound in a roll shape. After storage at 25°C and 55% RH for 7 days, the silver halide photographic sensitive material was fed at 100 m/min in an environment of 25°C and 20% RH and peeled off from a roll state to prepare a silver halide photographic sensitive material.

The obtained silver halide photographic sensitive material was subjected to a development treatment without being exposed, and the occurrence of fogging was examined over a length of 20 m with a width of 10 cm.

In an auto-positive photosensitive material such as the above-described silver halide photographic sensitive material, the emulsion is photosensitive and fogging occurs in a case of receiving light, and a bluish-white electrostatic mark is generated in a black portion of a non-exposed portion.

The frequency of occurrence of the electrostatic mark was evaluated by visual observation.

The electrostatic fogging suppressiveness of each sample was evaluated in terms of the percentage based on the frequency of generation of the silver halide photographic sensitive material 201.

Evaluation 3) change in density of formed coloring agent image after high-humidity storage (stability, de-mordanting)

The silver halide photographic sensitive material was subjected to a gray scale exposure, and the treatment liquid was spread under environmental conditions of 25°C and 55% RH, and the image density (also referred to as G density) formed by the transfer after 24 hours was measured. The photosensitive material after the measurement was stored at 70°C and 70% RH for 7 days, and the density was measured again.

The change in the density at the point of an initial density $D_0$ of 1.5 after 24 hours from the spread of the treatment liquid was evaluated. The decrease in the density was calculated as a percentage.

Evaluation 4) effect of silver halide photographic sensitive material on raw preservability (sensitivity stability)

The silver halide photographic sensitive material was stored for 7 days under environmental conditions of 25°C and 55% RH, and further stored for 7 days under environmental conditions of 45°C and 70% RH.

The photosensitive material under both storage conditions was subjected to a gray tone exposure, the treatment liquid was spread under environmental conditions of 25°C and 55% RH, and the image density formed by the transfer after 24 hours from the spread of the treatment liquid was measured to obtain a characteristic curve. The change in sensitivity at the point of a density of 1.0 with respect to the G density was evaluated by the following sensitivity stability (%).

$$\text{Sensitivity stability} = (|E0 - E1|/E0) \times 100$$

Here,

E0: required exposure amount (true number) at density of 1.0 after storage for 7 days under environmental conditions of 25°C and 55% RH

El: required exposure amount (true number) at point of density of 1.0 after additional storage for 7 days under environmental conditions of 45°C and 70% RH

The silver halide photographic sensitive material prepared above is a diffusion transfer type silver halide photographic sensitive material, and the treatment method thereof is to spread a treatment liquid in a thin layer between the exposed silver halide photographic sensitive material (for example, a photosensitive sheet) and the transparent cover sheet to perform a development treatment. The transparent cover sheet has cellulose acetate and an acid polymer, and the hydrolysis of cellulose acetate proceeds by the alkali of the treatment liquid, the permeability of the alkali is increased, the development of silver in the photosensitive material proceeds while the treatment liquid has a high pH for about 10 minutes, and the pH rapidly decreases and the development is stopped in about 15 to 20 minutes by the progress of neutralization due to the acid polymer. A container that can be destroyed with a pressure was filled with the treatment liquid, and the container was destroyed with a roller so that the spread thickness of the treatment liquid was set to 55 μm.

The composition of the transparent cover sheet is listed in Table 11, and the composition of the treatment liquid is listed in Table 12.

In addition, the evaluation results are listed in Table 13.

[Table 11]

| Layer configuratio n | Layer name | Additive | Coating amount (g/m$^2$) |
|---|---|---|---|
| Third layer | Temperature compensating layer | Temperature-compensating polymer (1)<br>Temperature-compensating polymer (2)<br>Compound (P-8) | 0.30<br>0.80<br>0.006 |
| Second layer | Alkali barrier layer | Cellulose acetate (acetylation degree of 51%)<br>Additive (20)<br>Additive (21)<br>Hardening agent (4) | 4.30<br>0.20<br>0.20<br>0.40 |

(continued)

| Layer configuratio n | Layer name | Additive | Coating amount (g/m$^2$) |
|---|---|---|---|
| First layer | Neutralizing layer | Acid polymer (1)<br>Cellulose acetate (acetylation degree of 45%)<br>Hardening agent (5) | 10.4<br>0.70<br>0.10 |
| Support (polyethylene terephthalate containing additive (22) for preventing light piping and being subjected to gelatin undercoating, thickness of 75 μm) | | | |
| Back layer | Curling adjusting layer | Cellulose acetate (acetylation degree of 55%)<br>Silica (average particle diameter of 3 μm to 4 μm) | 9.1<br>0.04 |

[Table 12]

| Component name | Used amount (g) |
|---|---|
| Water | 690 |
| Silver nitrate | 0.1 |
| Carbon black (manufactured by Dainichiseika Color & Chemicals Mfg. Co., Ltd.) | 160 |
| Additive (23) | 8.6 |
| Carboxymethyl cellulose sodium salt | 58 |
| Benzyl alcohol | 2.5 |
| Potassium nitrate (anhydrous) | 1.9 |
| 5-Methylbenzotriazole | 2.5 |
| 1-p-Tolyl-4-hydroxymethyl-4-methyl-3-pyrazolidone | 7 |
| 1-p-Phynyl-4-hydroxymethyl-4-methyl-3-pyrazolidone | 10 |
| Potassium hydroxide | 56 |
| Aluminum nitrate | 0.6 |
| Zinc nitrate | 0.6 |
| Additive (14) | 1.8 |

[Table 13]

| | Composition name | Compound (type) | Silver halide photographic sensitive material No. | Coating surface state cissing | Coating surface state uniformity | Electrostatic fogging suppressiveness | Density change after high-humidity storage (%) | Sensitivity stability (%) |
|---|---|---|---|---|---|---|---|---|
| Comparative Example 2-A | (P-A) | Surfactant (1) | 201 | 100 | D | 100 | 15 | 15 |
| Comparative Example 2-B | (P-B) | Surfactant (3) | 202 | 330 | E | 120 | 21 | 27 |
| Example 2-A | (P-C) | Compound (P-1) | 203 | 7 | A | 7 | 3 | 3 |
| Example 2-B | (P-D) | Compound (P-2) | 204 | 2 | B | 2 | 1 | 1 |
| Example 2-C | (P-E) | Compound (P-3) | 205 | 7 | B | 4 | 2 | 2 |
| Example 2-D | (P-F) | Compound (P-4) | 206 | 6 | B | 4 | 2 | 2 |
| Example 2-E | (P-G) | Compound (P-5) | 207 | 2 | B | 2 | 1 | 1 |
| Example 2-F | (P-H) | Compound (P-6) | 208 | 7 | B | 4 | 2 | 2 |
| Example 2-G | (P-I) | Compound (P-7) | 209 | 6 | B | 4 | 2 | 2 |
| Example 2-H | (P-J) | Mixture obtained by mixing compound (P-1) and surfactant (1) at ratio (mass ratio) of 2:1 | 210 | 6 | A | 8 | 4 | 3 |
| Example 2-I | (P-K) | Mixture obtained by mixing compound (P-2) and surfactant (1) at ratio (mass ratio) of 2:1 | 211 | 2 | A | 3 | 2 | 2 |
| Example 2-J | (P-L) | Mixture obtained by mixing compound (P-3) and surfactant (1) at ratio (mass ratio) of 2:1 | 212 | 5 | A | 4 | 3 | 3 |
| Example 2-K | (P-M) | Mixture obtained by mixing compound (P-4) and surfactant (1) at ratio (mass ratio) of 2:1 | 213 | 4 | A | 4 | 3 | 3 |
| Example 2-L | (P-N) | Mixture obtained by mixing compound (P-5) and surfactant (1) at ratio (mass ratio) of 2:1 | 214 | 2 | A | 3 | 2 | 2 |

(continued)

| | Composition name | Compound (type) | Silver halide photographic sensitive material No. | Coating surface state cissing | Coating surface state uniformity | Electrostatic fogging suppressiveness | Density change after high-humidity storage (%) | Sensitivity stability (%) |
|---|---|---|---|---|---|---|---|---|
| Example 2-M | (P-O) | Mixture obtained by mixing compound (P-6) and surfactant (1) at ratio (mass ratio) of 2:1 | 215 | 5 | A | 4 | 3 | 3 |
| Example 2-N | (P-P) | Mixture obtained by mixing compound (P-7) and surfactant (1) at ratio (mass ratio) of 2:1 | 216 | 4 | A | 4 | 3 | 3 |
| Example 2-O | (P-Q) | Mixture obtained by mixing compound (P-1), surfactant (1), and surfactant (A) at ratio (mass ratio) of 1:1:1 | 217 | 3 | A | 4 | 3 | 3 |
| Example 2-P | (P-R) | Mixture obtained by mixing exemplary compound (P-3), surfactant (1), and surfactant (B) at ratio (mass ratio) of 1:1:1 | 218 | 3 | A | 4 | 3 | 3 |
| Example 2-Q | (P-S) | Mixture obtained by mixing exemplary compound (P-6), surfactant (1), and surfactant (B) at ratio (mass ratio) of 1:1:1 | 219 | 3 | A | 4 | 3 | 3 |

The compounds (P-1) to (P-7) in Table 13 were the same as those in Example 1 in terms of the compositional ratio and the mass average molecular weight.

The details of each component described in the abbreviations used in Tables 7 to 13 other than those described above are shown below.

Ultraviolet absorber (1): compound shown below

Ultraviolet absorber (1)

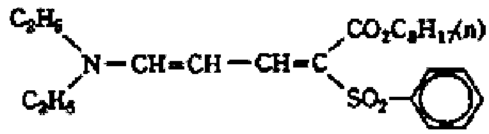

Hardening agent (3): compound shown below

Hardening agent (3)

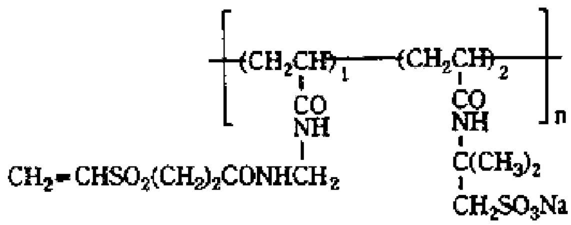

Hardening agent (5): compound shown below

Hardening agent (5) 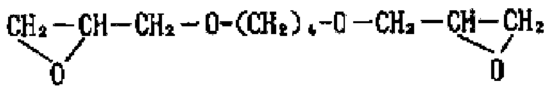

Additive (2): compound shown below

Addidtive (2)

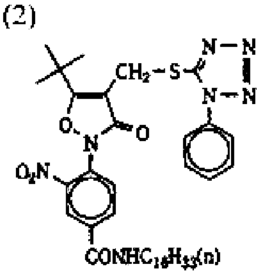

Additive (3): compound shown below

Additive (4): compound shown below

Additives (6) to (8): compounds shown below

Additive (9): polyvinyl alcohol (PVA-220E, manufactured by Kuraray Co., Ltd., degree of polymerization: about 2,000, degree of saponification: 88%)

Additive (11): compound shown below

Additive (13): compound shown below

Additive (3)

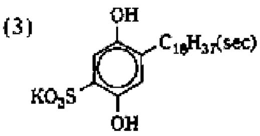

Additive (11)

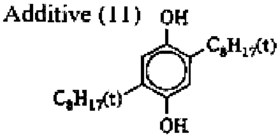

Additive (4)

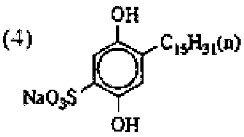

Additive (13)

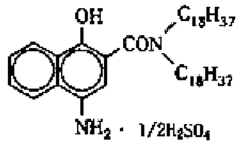

Additive (6)

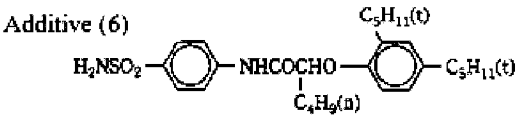

Additive (7)

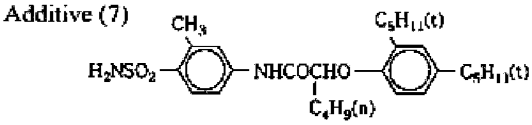

Additive (14): compound shown below

Additive (14)

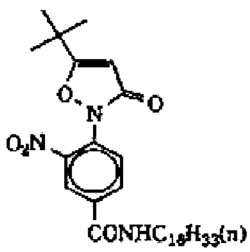

Additive (20): compound shown below

Additive (21): compound shown below

Additive (20)

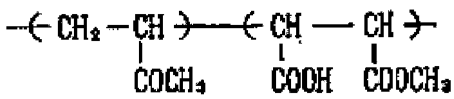

Additive (21) 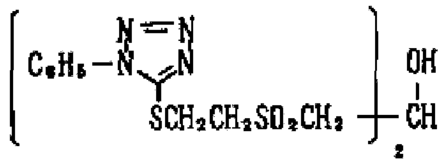

Additive (22): compound shown below

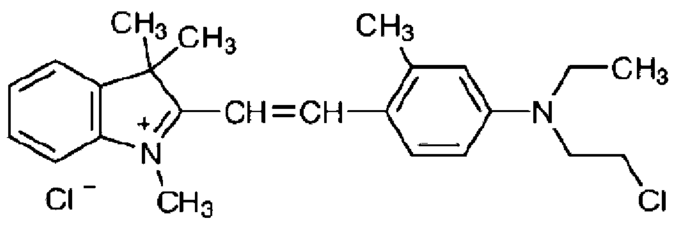

Additive (23): compound shown below

Additive (23)

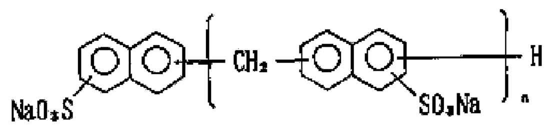

Nucleating agent (1): compound shown below

Nucleating agent (1)

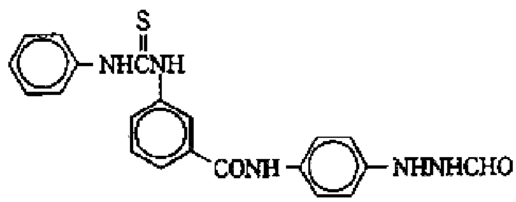

Surfactant (4): compound shown below

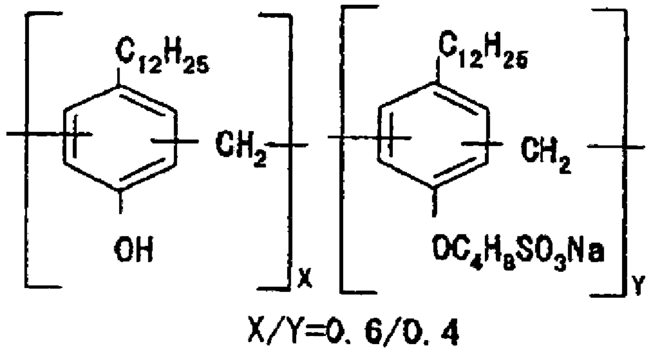

Surfactant (5): compound shown below

Surfactant (5)

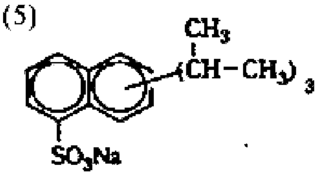

Surfactant (A): polyether-modified polydimethylsiloxane (BYK-3451, manufactured by BYK-Chemie GmbH)
Surfactant (B): polyether-modified polydimethylsiloxane (SAG503A, manufactured by Nissin Chemical Co., Ltd.)
Compound (P-8): compound shown below, Mw of 33,700

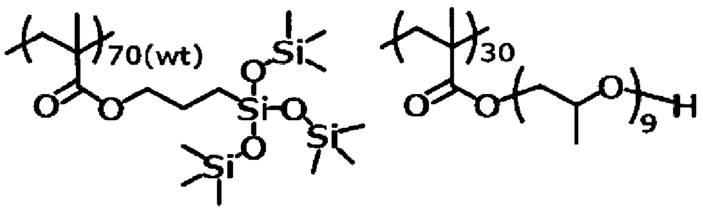

High-boiling point organic solvent (1): compound shown below

High-boiling point organic solvent (2): compound shown below

High-boiling point organic solvent (1)

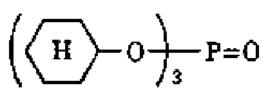

High-boiling point organic solvent (2)

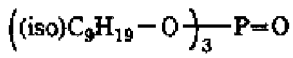

Yellow coloring agent-releasing compound (1): compound shown below Magenta coloring agent-releasing compound (1): compound shown below Cyan coloring agent-releasing compound (1): compound shown below

Yellow coloring agent-releasing compound (1)

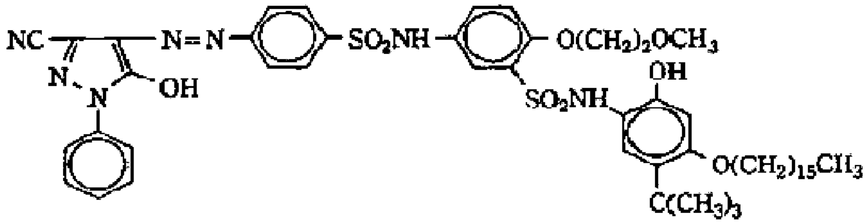

Magenta coloring agent-releasing compound (1)

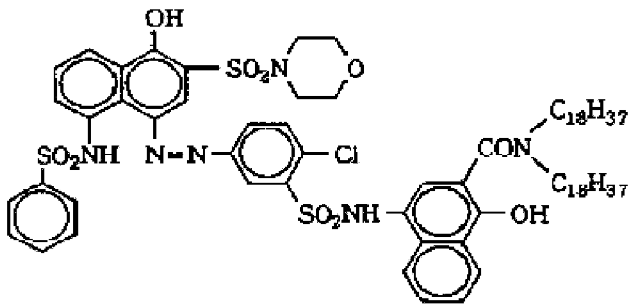

Cyan coloring agent-releasing compound (1)

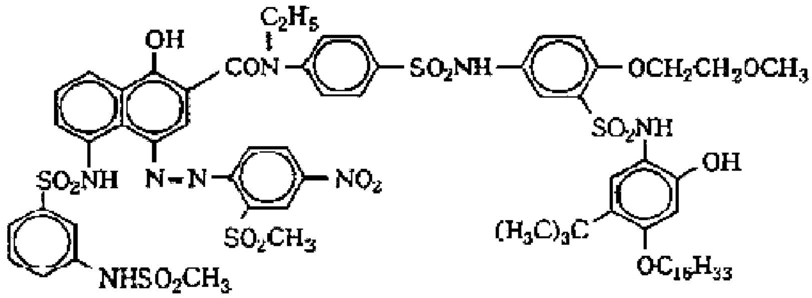

Cyan coloring agent-releasing compound (2): compound shown below

Cyan coloring agent-releasing compound (2)

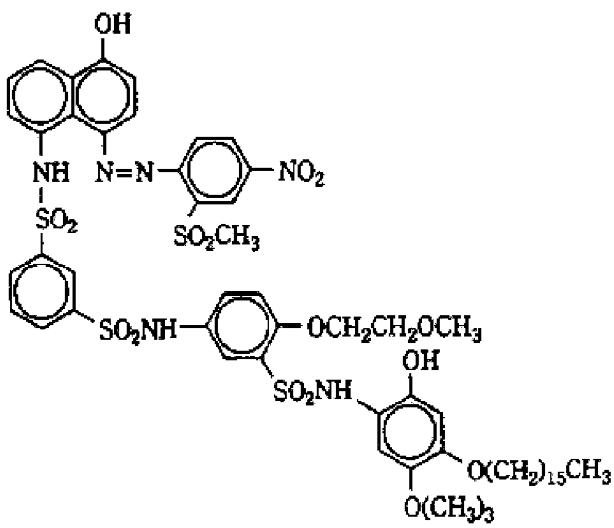

Temperature-compensating polymer (1): compound shown below

Temperature-compensating polymer (2): compound shown below

Temperature-compensating polymer (1)

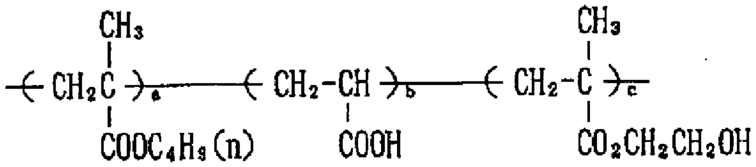

a/b/c=66.1/5.5/28.4 (wt ratio)

Temperature-compensating polymer (2)

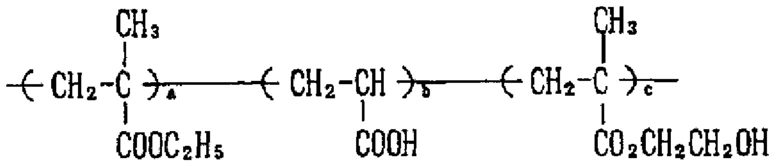

a/b/c=66.1/5.5/28.4 (wt ratio)

Acid polymer (1): compound shown below

Acid polymer (1)

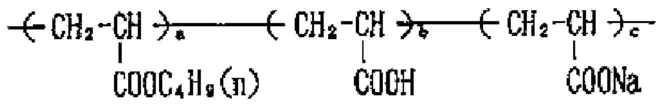

a/b/c=20/76/4 (molar ratio)

Internally latent direct positive emulsions A to I: prepared based on the emulsion of the sample 101 of JP2002-40607A. The fourth layer emulsion G was prepared based on the emulsion RM12 described in paragraphs 0052 and 0053 and 0057 to 0061. Tables 14 and 15 list details of the internally latent direct positive emulsions A to I.

[Table 14]

| Layer No. | Internally latent direct positive emulsion | Equivalent circle diameter ($\mu$m) | Outer shape of particle | Aspect ratio |
|---|---|---|---|---|
| Sixteenth layer | A | 1.3 | flat plate-like (hexagonal) | 7 |
| Fifteenth laver | B | 1.1 | flat plate-like (hexagonal) | 5 |
| Fifteenth laver | C | 0.9 | flat plate-like (hexagonal) | 4 |
| Tenth layer | D | 1.1 | flat plate-like (hexagonal) | 7 |
| Ninth layer | E | 1.0 | flat plate-like (hexagonal) | 5 |
| Ninth layer | F | 0.9 | flat plate-like (hexagonal) | 4 |

(continued)

| Layer No. | Internally latent direct positive emulsion | Equivalent circle diameter (μm) | Outer shape of particle | Aspect ratio |
|---|---|---|---|---|
| Fourth layer | G | 0.9 | flat plate-like (hexagonal) | 5 |
| Third layer | H | 0.8 | Octahedron | - |
| Third layer | I | 0.7 | Octahedron | - |

[Table 15]

| Internally latent direct positive emulsion | Type of sensitizing dye | Addition amount (mol/mol Ag) | Form of additive liquid |
|---|---|---|---|
| A | Sensitizing dye (9) | 0.00025 | Added in form of aqueous solution |
| | Sensitizing dye (8) | 0.00032 | Added in form of aqueous solution |
| B | Sensitizing dye (9) | 0.00018 | Added in form of aqueous solution |
| | Sensitizing dye (8) | 0.00022 | Added in form of aqueous solution |
| C | Sensitizing dye (9) | 0.0002 | Added in form of aqueous solution |
| | Sensitizing dye (8) | 0.00026 | Added in form of aqueous solution |
| D | Sensitizing dye (7) | 0.00027 | Added by dispersion in gelatin |
| | Sensitizing dye (4) | 0.0000067 | Added by dispersion in gelatin |
| | Sensitizing dye (6) | 0.00021 | Dispersion in water/organic solvent using surfactant |
| E | Sensitizing dye (7) | 0.00027 | Added by dispersion in gelatin |
| | Sensitizing dye (4) | 0.0000067 | Added by dispersion in gelatin |
| | Sensitizing dye (6) | 0.00021 | Dispersion in water/organic solvent using surfactant |
| F | Sensitizing dye (7) | 0.00027 | Added by dispersion in gelatin |
| | Sensitizing dye (4) | 0.0000067 | Added by dispersion in gelatin |
| | Sensitizing dye (6) | 0.00021 | Dispersion in water/organic solvent using surfactant |
| G | Sensitizing dye (5) | 0.000043 | Added in form of aqueous solution |
| | Sensitizing dye (4) | 0.000024 | Added by dispersion in gelatin |
| | Sensitizing dye (3) | 0.0000026 | Added by dispersion in gelatin |
| | Sensitizing dye (2) | 0.00000004 | Added by dispersion in gelatin |
| | Sensitizing dye (1) | 0.00013 | Added by dispersion in gelatin |
| H | Sensitizing dye (5) | 0.000042 | Added in form of aqueous solution |
| | Sensitizing dye (4) | 0.000034 | Added by dispersion in gelatin |
| | Sensitizing dye (3) | 0.0000034 | Added by dispersion in gelatin |
| | Sensitizing dye (2) | 0.000000056 | Added by dispersion in gelatin |
| | Sensitizing dye (1) | 0.00018 | Added by dispersion in gelatin |
| I | Sensitizing dye (5) | 0.000047 | Added in form of aqueous solution |
| | Sensitizing dye (4) | 0.000037 | Added by dispersion in gelatin |
| | Sensitizing dye (3) | 0.0000037 | Added by dispersion in gelatin |
| | Sensitizing dye (2) | 0.000000063 | Added by dispersion in gelatin |
| | Sensitizing dye (1) | 0.00021 | Added by dispersion in gelatin |

Sensitizing dyes (1) to (9): compounds shown below

| | |
|---|---|
| 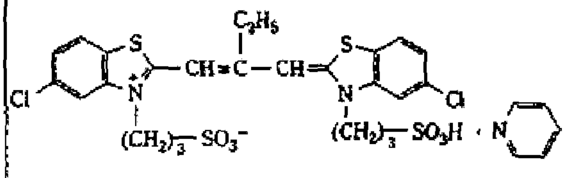 | molecular weight : 728.77<br>molecular formula : $C_{35} H_{36} Cl_2 N_2 O_6 S_4 \cdot C_5 H_5 N_1$<br>Sensitizing dye (1) |
| 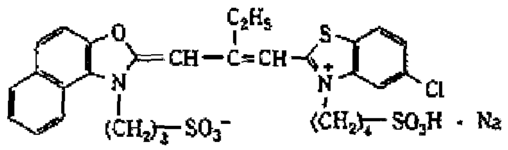 | molecular weight : 686.24<br>molecular formula : $C_{30} H_{31} Cl_1 N_2 O_7 S_3 \cdot NA_1$<br>Sensitizing dye (3) |
| 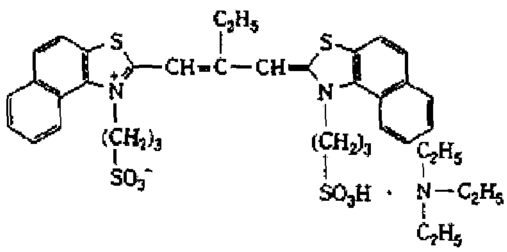 | molecular weight : 782.09<br>molecular formula : $C_{33} H_{32} N_2 O_6 S_4 \cdot C_6 H_{15} N_1$<br>Sensitizing dye (2) |

| | |
|---|---|
| 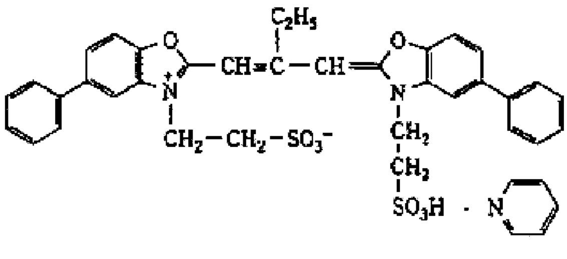 | molecular weight : 751.89<br>molecular formula : $C_{35}H_{32}N_2O_8S_2 \cdot C_5H_5N_1$<br>Sensitizing dye (7) |
| 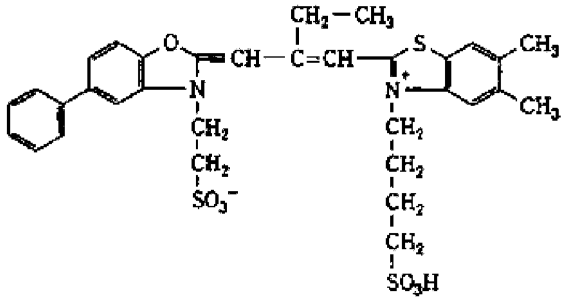 | molecular weight : 707.96<br>molecular formula : $C_{33}H_{36}N_2O_7S_3 \cdot K_1$<br>Sensitizing dye (4) |
| 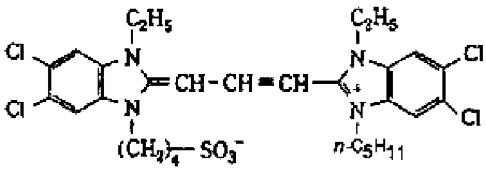 | molecular weight : 674.2<br>molecular formula : $C_{30}H_{38}Cl_4N_4O_3S_1$<br>Sensitizing dye (6) |

| | |
|---|---|
| 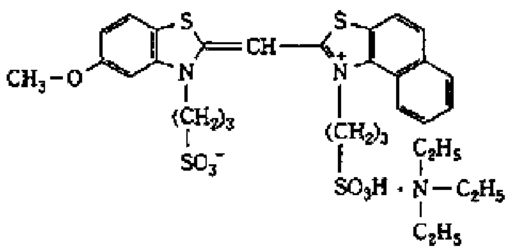 | molecular weight : 707.96<br>molecular formula : $C_{26}H_{26}N_2O_7S_4 \cdot C_6H_6N_1$<br>Sensitizing dye (9) |
| 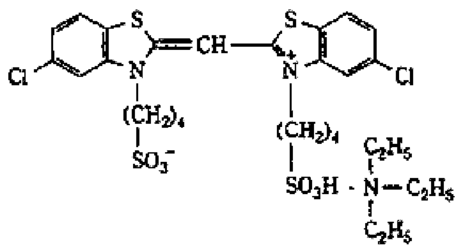 | molecular weight : 724.83<br>molecular formula : $C_{23}H_{24}Cl_2N_2O_6S_4 \cdot C_6H_{15}N_1$<br>Sensitizing dye (5) |
| 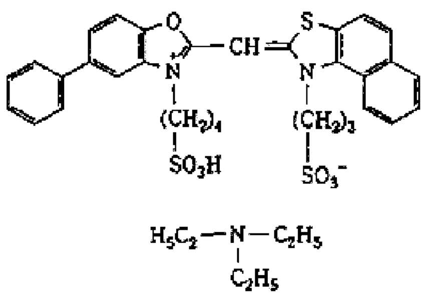 | molecular weight : 752.00<br>molecular formula : $C_{32}H_{30}N_2O_7S_3 \cdot C_6H_{15}N_1$<br>Sensitizing dye (8) |

As listed in Table 13, in a case where the composition containing the compound according to the embodiment of the present disclosure is used in the coating liquid for an outermost layer, a silver halide photographic sensitive material having an excellent coating surface state is obtained. The obtained photosensitive material satisfies all of three performances of electrostatic fogging suppressiveness, formed coloring agent image stability, and raw preservability of the photosensitive material.

In addition, the coating surface state can be further improved by using a leveling agent represented by a dialkyl-substituted succinic acid known in the related art in combination with the compound according to the present disclosure.

(Example 3)

Compositions (R), (S), and (T) in which the composition formulation of the base material/the sixth layer used in the silver halide photographic sensitive material of Example 2-A were changed as listed in Tables 16 to 18 were prepared. A base material (Subs-2), a base material (Subs-3), and a base material (Subs-4), each containing the compound according to the present disclosure, were prepared in the same manner as described above except that the composition of the sixth layer for the base material (Subs-1) with a functional layer was changed to the composition (R), the composition (S), or the composition (T).

The compositions for a multilayer photosensitive material used in the silver halide photographic sensitive materials 203 to 219 of Examples 2-A to 2-Q were applied to these three types of base materials, and the same evaluations as in Example 2-A were performed. As a result, it was found that a sample containing the compound according to the present disclosure in both the base material and the photosensitive material laminated on the base material is excellent in a coating surface state. In addition, it was found that the obtained silver halide photographic sensitive material is excellent in electrostatic fogging suppressiveness, and particularly, the formed coloring agent image stability and the raw preservability of the photosensitive material are further improved as compared with Examples 2A to 2-Q.

[Table 16]

| Composition (R) | |
|---|---|
| Type of compound | Amount (g/1000 composition) |
| Surfactant (1) | 1.2 |
| Compound (P-1) | 1.2 |
| Additive (1) | 1.41 |
| Additive (5) | 1.57 |
| Gelatin | 35 |

[Table 17]

| Composition (S) | |
|---|---|
| Type of compound | Amount (g/1000 composition) |
| Surfactant (1) | 1.2 |
| Compound (P-2) | 1.2 |
| Additive (1) | 1.41 |
| Additive (5) | 1.57 |
| Gelatin | 35 |

[Table 18]

| Composition (T) | |
|---|---|
| Type of compound | Amount (g/1000 composition) |
| Surfactant (1) | 1.2 |
| Compound (P-5) | 1.2 |
| Additive (1) | 1.41 |
| Additive (5) | 1.57 |
| Gelatin | 35 |

The composition (R), the composition (S), and the composition (T) are all aqueous compositions, and the residual components in each of the compositions listed in Tables 16 to 18 are water. The compositional ratios and the weight-average molecular weights of the compounds (P-1), (P-2), and (P-5) are the same as those in Example 1.

(Example 4)

In the transparent cover sheet used in Example 2, the evaluation was performed by changing the surfactant of the third layer. A composition (C-1) for a third layer was prepared as listed in Table 19.

[Table 19]

| Composition (C-1) | |
|---|---|
| Type of compound | Amount (g/1000 composition) |
| Compound (P-8) | 0.6 |
| Temperature compensating polymer (1) | 30 |
| Temperature compensating polymer (2) | 80 |
| Methyl ethyl ketone | 150 |

The remaining component in the composition (C-1) is acetone.

In the transparent cover sheet listed in Table 11, the second layer and the third layer were applied to the support coated with the back layer and the first layer by simultaneous multilayer coating at a coating speed of 60 m/min. In this case, the coating amounts of the temperature compensation polymers (1) and (2) were set to be the same as those in Table 11, and a transparent cover sheet (CS-1) was prepared. In addition, compositions (C-2) to (C-17) were prepared in the same manner as described above except that the kind of the surfactant of the third layer was changed as listed in Table 20, and the compositions were applied to prepare transparent cover sheets (CS-2) to (CS-17). The obtained cover sheets were evaluated as follows.

Evaluation 1) coating surface state

The reflected light of the coated sample was visually observed under a brightness of 500 lux, and the surface state was observed. The evaluation standards are described below.

A: Unevenness was not recognizable.
B: Unevenness was hardly recognizable.
C: A slight decrease in glossiness of the surface was observed.
D: A decrease in glossiness of the surface was clearly observed.

Evaluation 2) Spreadability of treatment liquid

The evaluation of the spreadability of the treatment liquid was performed using the fact that light-shielding leakage occurs in a case where cissing occurs in the spread treatment liquid in a case where the treatment liquid having light-shielding properties used in Example 2 was spread. By making the thickness thinner than the standard condition, the occurrence of cissing and the deterioration of the light-shielding properties can be forcibly evaluated.

The coated cover sheet was stored for 7 days under environmental conditions of 25°C and 55% RH to promote the hard film reaction. Thereafter, the photosensitive material No. 218 described in Example 2 and the transparent cover sheet were sandwiched between rollers facing each other and transported, and the treatment liquid of Example 2 was spread in a thin layer. In this case, the thickness of the spread treatment liquid was adjusted to 35 μm. Before the spread, the photosensitive material is not exposed, and the exposure is carried out under a condition that the photosensitive material using the auto-positive emulsion develops a maximum density color of black. Immediately after the spread, white light having an illuminance of 50,000 lux was applied from the transparent cover sheet side for 15 minutes. Thereafter, the sheet was stored in a dark room at 25°C and 55% for 24 hours to form a transfer image. In the image after the transfer, the frequency of cissing-like defects with a decrease in image density was visually examined. The evaluation was performed in terms of the percentage based on the frequency of occurrence in a case where the cover sheet (CS-14) was used.

The evaluation results are listed in Table 20.

[Table 20]

| | Composition name | Surfactant | | Cover sheet No. | Coating surface state | Treatment liquid spreadability |
|---|---|---|---|---|---|---|
| | | Type | **Amount** *(g/1000* composition) | | | |
| Example 4-A | (C-1) | Compound (P-8) | 0.6 | CS-1 | B | 4 |
| Example 4-B | (C-2) | Compound (P-9) | 0.6 | CS-2 | B | 4 |
| Example 4-C | (C-3) | Compound (P-10) | 0.6 | CS-3 | B | 5 |
| Example 4-D | (C-4) | Compound (P-15) | 0.6 | CS-4 | B | 6 |
| Example 4-E | (C-5) | Compound (P-16) | 0.6 | CS-5 | B | 6 |
| Example 4-F | (C-6) | Compound (P-8) | 1.2 | CS-6 | A | 4 |
| Example 4-G | (C-7) | Compound (P-9) | 1.2 | CS-7 | A | 4 |
| Example 4-H | (C-8) | Compound (P-10) | 1.2 | CS-8 | B | 5 |
| Example 4-I | (C-9) | Compound (P-15) | 1.2 | CS-9 | A | 5 |
| Example 4-J | (C-10) | Compound (P-16) | 1.2 | CS-10 | B | 5 |

(continued)

| | Composition name | Surfactant | | Cover sheet No. | Coating surface state | Treatment liquid spreadability |
|---|---|---|---|---|---|---|
| | | Type | **Amount** *(g/1000* composition) | | | |
| Example 4-K | (C-11) | Mixture obtained by mixing compound (P-8) and surfactant (C) at ratio (mass ratio) of 1:1 | 1.2 | CS-11 | A | 4 |
| Example 4-L | (C-12) | Mixture obtained by mixing compound (P-8) and surfactant (D) at ratio (mass ratio) of 1:1 | 1.2 | CS-12 | A | 4 |
| Example 4-M | (C-13) | Mixture obtained by mixing compound (P-8) and surfactant (E) at ratio (mass ratio) of 1:1 | 1.2 | CS-13 | A | 4 |
| Comparative Example 4-A | (C-14) | None | - | CS-14 | D | 100 |
| Example 4-N | (C-15) | Compound (P-27) | 1.2 | CS-15 | B | 5 |
| Example 4-O | (C-16) | Compound (P-32) | 1.2 | CS-16 | A | 5 |
| Example 4-P | (C-17) | Compound (P-36) | 1.2 | CS-17 | A | 5 |

The details of the surfactants (C) to (E) listed in Table 20 are shown below.

Surfactant (C): polyether-modified polydimethylsiloxane (BYK-302 (manufactured by BYK-Chemie GmbH))

Surfactant (D): polyether-modified polydimethylsiloxane (BYK-333 (manufactured by BYK-Chemie GmbH))

Surfactant (E): polyether-modified polydimethylsiloxane (KP-109 (manufactured by Shin-Etsu Chemical Co., Ltd.))

The mass ratio and the weight-average molecular weight of each compound in Table 20 are as listed in Table 21. Each of the compounds (P-8) to (P-16), (P-27), (P-32), and (P-36) has a structure of the exemplary compounds (P8) to (P16), (P27), (P32), and (P36).

[Table 21]

| Compound | Copolymerization ratio (mass ratio) between components | | | Weight-average molecular weight (Mw) |
|---|---|---|---|---|
| | Constitutional unit A and/or B | Constitutional unit C | Constitutional unit D | |
| | Siloxane moiety | Hydrophilic moiety | Polyalkylene oxide moiety | |
| Compound (P-8) | 70 | - | 30 | 33700 |
| Compound (P-9) | 75 | - | 25 | 28400 |
| Compound (P-10) | 50 | - | 50 | 48200 |
| Compound (P-15) | 40 | - | 60 | 7700 |
| Compound (P-16) | 30 | - | 70 | 76500 |
| Compound (P-27) | 60 | 20 | 20 | 16500 |
| Compound (P-32) | 50 | 30 | 20 | 18400 |
| Compound (P-36) | 60 | 40 | - | 22100 |

As listed in Table 20, in a case where the composition containing the compound according to the present disclosure is used in the coating liquid for an outermost layer, a functional film having an excellent coating surface state and excellent treatment liquid spreadability is obtained.

In addition, in a case where the evaluation was performed according to Example 2 using the cover sheet of the present application, the same results as in Example 2 were obtained in a case where the cover sheet was used together with the silver halide photographic sensitive material of the present application.

(Example 5: thermally-developable photosensitive material)

In the sample 7 in the examples described in JP2006-91780A, a sample in which the fluorine compound (F-29) was replaced with 10.0 mg/$m^2$ of the compound (P-1) was prepared. In a case where the surface state of the obtained sample was evaluated according to the same standards as in Example 4, the evaluation result was A, and it was found that the coating surface state was excellent.

(Example 6: thermally-developable photosensitive material)

In Example 1 described in JP6851389B, the fluorine-based surfactants F-1 and F-2 (the total thereof was set to 1 part by mass) in the non-photosensitive back protective layer were replaced with 10 parts by mass of the compound (P-1). In addition, the fluorine-based surfactants F-1 and F-2 (the total thereof was set to 1 part by mass) in the second layer of the surface protective layer were replaced with 10 parts by mass of the compound (P-1). In a case where the surface state of the prepared sample was evaluated according to the same standard as in Example 4, the evaluation result was A, and it was found that the coating surface state was excellent.

(Example 7: industrial X-ray photosensitive material)

In Example sample No. 14 described in JP2009-86332A, a sample in which the coating aid-4 and coating aid-5 (the total thereof was set to 1 part by mass) of the surface protective layer were replaced with 10 parts by mass of the compound (P-1) was prepared. In a case where the surface state of the obtained sample was evaluated according to the same standards as in Example 4, the evaluation result was A, and it was found that the coating surface state was excellent.

(Example 8: heat-sensitive recording material)

In Comparative Example 4 described in WO2016/194915A, sodium N-propyl-N-polyoxyethylene-perfluorooctanesulfonic acid amide butylsulfonate and potassium perfluorooctanesulfonate (the total amount thereof was set to 1 part by mass) in the BPC layer (also referred to as a back protective layer) were replaced with 10 parts by mass of a compound (P-1). In addition, SURFLON S231W (manufactured by AGC SEIMI CHEMICAL CO., LTD.) and the Priserf A217 (manufactured by DKS Co., Ltd.) (totaling 1 part by mass) of the protective layer were replaced with 10 parts by mass of the compound (P-1). In a case where the surface state of the prepared sample was evaluated according to the same standard as in Example 4, the evaluation result was A, and it was found that the coating surface state was excellent.

The entire disclosure of JP2023-150365 filed on September 15, 2023, the entire disclosure of JP2024-041730 filed on March 15, 2024, and the entire disclosure of JP2024-135461 filed on August 14, 2024 are incorporated herein by reference.

In a case where all documents, patent applications, and technical standards described in the present specification are specified to be incorporated specifically and individually as cited documents, the documents, patent applications, and technical standards are incorporated herein in the same limited scope as the cited documents.

## Claims

1. A compound which is a polymer having at least one selected from the group consisting of a constitutional unit A having two or more structures represented by Formula (Ia) and a constitutional unit B derived from a linear silicone (meth) acrylate, and at least one selected from the group consisting of a constitutional unit C represented by Formula (2) and a constitutional unit D represented by Formula (3),

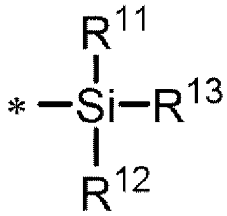

(Ia)

in Formula (Ia), * represents a bonding position, and $R^{11}$, $R^{12}$, and $R^{13}$ each independently represent an alkyl group, an alkenyl group, or an aryl group,

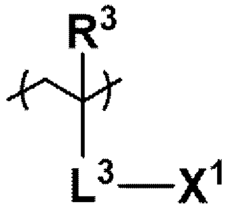

(2)

in Formula (2), $R^3$ represents a hydrogen atom or a methyl group, $L^3$ represents a single bond or a divalent linking group, $X^1$ represents -OH, -COOH, $-PO_3H$, $\{-OP(=O)(OH)_2\}$, $-CO_2M^1$, $-SO_3M^1$, $-NT^1T^2$, an oxazoline group, $-NG^1G^2G^3E^1$, or a group having a group having a betaine structure, $M^1$ represents an alkali metal, an alkaline earth metal, Mg, Al, or $Q^1Q^2Q^3Q^4N^+$, $Q^1$, $Q^2$, $Q^3$, and $Q^4$ each independently represent a hydrogen atom or an alkyl group having 1 to 20 carbon atoms, $T^1$ and $T^2$ each independently represent a hydrogen atom, an alkyl group having 1 to 20 carbon atoms, an alkylene group, an oxyalkylene group, or an alkoxy group, $T^1$ and $T^2$ may be bonded to each other, $E^1$ represents an anion, and $G^1$, $G^2$, and $G^3$ each independently represent a hydrogen atom or an alkyl group having 1 to 20 carbon atoms,

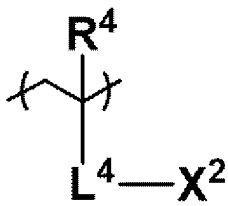

(3)

in Formula (3), $R^4$ represents a hydrogen atom or a methyl group, $L^4$ represents a single bond or a divalent linking group, and $X^2$ represents a polyoxyalkylene group.

**2.** The compound according to claim 1,

wherein the constitutional unit A is a constitutional unit represented by Formula (al),

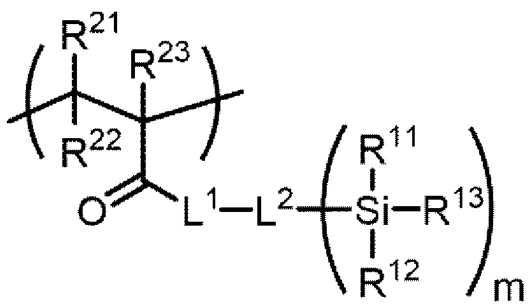

(a1)

in Formula (al), m represents an integer of 2 or greater, $R^{11}$, $R^{12}$, and $R^{13}$ each independently represent an alkyl group, an alkenyl group, or an aryl group, $R^{21}$ and $R^{22}$ each independently represent a hydrogen atom or an alkyl group, $R^{23}$ represents a hydrogen atom or a substituent, $L^1$ represents -O- or $-NR^Z-$, $R^Z$ represents a hydrogen atom or a substituent, and $L^2$ represents an (m+1)-valent linking group.

**3.** The compound according to claim 1,

wherein the constitutional unit B is a constitutional unit represented by Formula (a2),

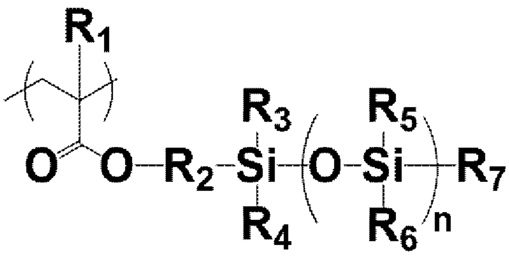

(a2)

in Formula (a2), $R_1$ represents a hydrogen atom or a methyl group, $R_2$ represents a divalent organic group having 1 to 20 carbon atoms, $R_3$ to $R_6$ each independently represent an alkyl group having 1 to 20 carbon atoms or an aryl group having 6 to 20 carbon atoms, $R_7$ represents an alkyl group having 1 to 20 carbon atoms or an aryl group having 6 to 20 carbon atoms, and n represents an integer of 1 to 200 which may have a distribution.

**4.** The compound according to claim 1, wherein the compound is a polymer having at least one selected from the group consisting of the constitutional unit A and the constitutional unit B, the constitutional unit C, and the constitutional unit D.

**5.** The compound according to claim 1, wherein the compound is a polymer having the constitutional unit A, the constitutional unit C, and the constitutional unit D.

**6.** A composition comprising:

a compound having a structure represented by Formula (Ia) and having at least one or more selected from the group consisting of -OH, -COOH, $-PO_3H$, {-OP(=O)$(OH)_2$}, $-CO_2M^1$, $-SO_3M^1$, $-NT^1T^2$, an oxazoline group, $-NG^1G^2G^3E^1$, a group having a betaine structure, and a group having a polyoxyalkylene structure; and
a binder,
wherein $M^1$ represents an alkali metal, an alkaline earth metal, Mg, Al, or $Q^1Q^2Q^3Q^4N^+$, $Q^1$, $Q^2$, $Q^3$, and $Q^4$ each independently represent a hydrogen atom or an alkyl group having 1 to 20 carbon atoms, $T^1$ and $T^2$ each independently represent a hydrogen atom, an alkyl group having 1 to 20 carbon atoms, an alkylene group, an oxyalkylene group, or an alkoxy group, $T^1$ and $T^2$ may be bonded to each other, $E^1$ represents an anion, and $G^1$, $G^2$, and $G^3$ each independently represent a hydrogen atom or an alkyl group having 1 to 20 carbon atoms,

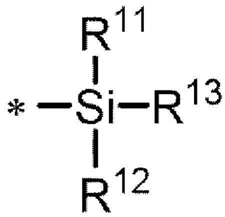

(Ia)

in Formula (Ia), * represents a bonding position, and $R^{11}$, $R^{12}$, and $R^{13}$ each independently represent an alkyl group, an alkenyl group, or an aryl group.

**7.** A functional material comprising:

a support; and
a layer that is provided on the support and contains a compound having a structure represented by Formula (Ia) and having at least one or more selected from the group consisting of -OH, -COOH, $-PO_3H$, {-OP(=O)$(OH)_2$}, $-CO_2M^1$, $-SO_3M^1$, $-NT^1T^2$, an oxazoline group, $-NG^1G^2G^3E^1$, a group having a betaine structure, and a group having a polyoxyalkylene structure,
wherein $M^1$ represents an alkali metal, an alkaline earth metal, Mg, Al, or $Q^1Q^2Q^3Q^4N^+$, $Q^1$, $Q^2$, $Q^3$, and $Q^4$ each independently represent a hydrogen atom or an alkyl group having 1 to 20 carbon atoms, $T^1$ and $T^2$ each

independently represent a hydrogen atom, an alkyl group having 1 to 20 carbon atoms, an alkylene group, an oxyalkylene group, or an alkoxy group, $T^1$ and $T^2$ may be bonded to each other, $E^1$ represents an anion, and $G^1$, $G^2$, and $G^3$ each independently represent a hydrogen atom or an alkyl group having 1 to 20 carbon atoms,

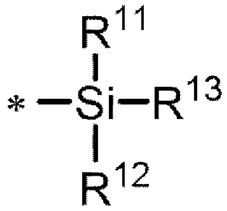 (Ia)

in Formula (Ia), * represents a bonding position, and $R^{11}$, $R^{12}$, and $R^{13}$ each independently represent an alkyl group, an alkenyl group, or an aryl group.

**8.** A silver halide photographic sensitive material comprising:

a support; and
a layer that is provided on the support and contains a compound having a structure represented by Formula (Ia) and having at least one or more selected from the group consisting of -OH, -COOH, $-PO_3H$, {-OP(=O)$(OH)_2$}, $-CO_2M^1$, $-SO_3M^1$, $-NT^1T^2$, an oxazoline group, $-NG^1G^2G^3E^1$, a group having a betaine structure, and a group having a polyoxyalkylene structure,
wherein $M^1$ represents an alkali metal, an alkaline earth metal, Mg, Al, or $Q^1Q^2Q^3Q^4N^+$, $Q^1$, $Q^2$, $Q^3$, and $Q^4$ each independently represent a hydrogen atom or an alkyl group having 1 to 20 carbon atoms, $T^1$ and $T^2$ each independently represent a hydrogen atom, an alkyl group having 1 to 20 carbon atoms, an alkylene group, an oxyalkylene group, or an alkoxy group, $T^1$ and $T^2$ may be bonded to each other, $E^1$ represents an anion, and $G^1$, $G^2$, and $G^3$ each independently represent a hydrogen atom or an alkyl group having 1 to 20 carbon atoms,

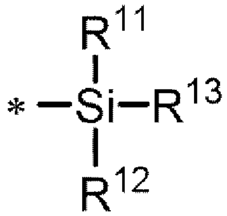 (Ia)

in Formula (Ia), * represents a bonding position, and $R^{11}$, $R^{12}$, and $R^{13}$ each independently represent an alkyl group, an alkenyl group, or an aryl group.

**9.** A diffusion transfer type silver halide photographic sensitive material comprising:

a support; and
a layer that is provided on the support and contains a compound having a structure represented by Formula (Ia) and having at least one or more selected from the group consisting of -OH, -COOH, $-PO_3H$, {-OP(=O)$(OH)_2$}, $-CO_2M^1$, $-SO_3M^1$, $-NT^1T^2$, an oxazoline group, $-NG^1G^2G^3E^1$, a group having a betaine structure, and a group having a polyoxyalkylene structure,
wherein $M^1$ represents an alkali metal, an alkaline earth metal, Mg, Al, or $Q^1Q^2Q^3Q^4N^+$, $Q^1$, $Q^2$, $Q^3$, and $Q^4$ each independently represent a hydrogen atom or an alkyl group having 1 to 20 carbon atoms, $T^1$ and $T^2$ each independently represent a hydrogen atom, an alkyl group having 1 to 20 carbon atoms, an alkylene group, an oxyalkylene group, or an alkoxy group, $T^1$ and $T^2$ may be bonded to each other, $E^1$ represents an anion, and $G^1$, $G^2$, and $G^3$ each independently represent a hydrogen atom or an alkyl group having 1 to 20 carbon atoms,

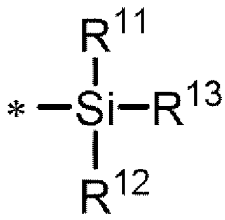

(Ia)

in Formula (Ia), * represents a bonding position, and $R^{11}$, $R^{12}$, and $R^{13}$ each independently represent an alkyl group, an alkenyl group, or an aryl group.

## INTERNATIONAL SEARCH REPORT

International application No. **PCT/JP2024/032970**

**A. CLASSIFICATION OF SUBJECT MATTER**

***C08F 290/06***(2006.01)i; ***C07F 7/18***(2006.01)i; ***C08F 220/10***(2006.01)i; ***C08L 33/14***(2006.01)i; ***C08L 101/00***(2006.01)i; ***C09K 3/00***(2006.01)i; ***G03C 8/06***(2006.01)i; ***G03C 8/08***(2006.01)i; ***G03C 8/10***(2006.01)i; ***G03C 8/24***(2006.01)i; ***G03C 8/26***(2006.01)i; ***G03C 8/34***(2006.01)i; ***G03C 8/36***(2006.01)i; ***G03C 8/42***(2006.01)i

FI: C08F290/06; C09K3/00 R; C08F220/10; C08L101/00; G03C8/08 504; G03C8/06 504; G03C8/10; C08L33/14; G03C8/34 501; G03C8/36; G03C8/24; C09K3/00 104Z; G03C8/26; C07F7/18 X CSP; G03C8/42 502

According to International Patent Classification (IPC) or to both national classification and IPC

**B. FIELDS SEARCHED**

Minimum documentation searched (classification system followed by classification symbols)

C08F290/06; C07F7/18; C08F220/10; C08L33/14; C08L101/00; C09K3/00; G03C8/06; G03C8/08; G03C8/10; G03C8/24; G03C8/26; G03C8/34; G03C8/36; G03C8/42

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2017/022815 A1 (JSR CORPORATION) 09 February 2017 (2017-02-09) claims, examples | 1-7 |
| A | | 8, 9 |
| X | WO 2017/018425 A1 (JSR CORPORATION) 02 February 2017 (2017-02-02) claims, examples | 1-7 |
| A | | 8, 9 |
| X | JP 2003-226834 A (KUSUMOTO KASEI KK) 15 August 2003 (2003-08-15) claims, examples | 1-7 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 October 2024** | **12 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/032970**

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2019/187053 A1 (NIPPON PAINT MARINE K.K.) 03 October 2019 (2019-10-03)<br>claims, examples | 1-7<br>8, 9 |
| X<br>A | WO 2019/187055 A1 (NIPPON PAINT MARINE K.K.) 03 October 2019 (2019-10-03)<br>claims, examples | 1-7<br>8, 9 |
| X<br>A | WO 2021/131726 A1 (DIC CORPORATION) 01 July 2021 (2021-07-01)<br>claims, examples | 1, 3, 6, 7<br>2, 4, 5, 8, 9 |
| X<br>A | WO 2023/140036 A1 (DIC CORPORATION) 27 July 2023 (2023-07-27)<br>claims, examples | 2, 3, 6, 7<br>1, 4, 5, 8, 9 |

Form PCT/ISA/210 (second sheet) (July 2022)

**INTERNATIONAL SEARCH REPORT**
**Information on patent family members**

International application No.
**PCT/JP2024/032970**

| Patent document cited in search report | Publication date (day/month/year) | Patent family member(s) | Publication date (day/month/year) |
|---|---|---|---|
| WO 2017/022815 A1 | 09 February 2017 | US 2018/0223024 A1<br>claims, examples | |
| WO 2017/018425 A1 | 02 February 2017 | US 2018/0217294 A1<br>claims, examples<br>EP 3329943 A1<br>CN 107249652 A<br>CA 2992964 A1 | |
| JP 2003-226834 A | 15 August 2003 | (Family: none) | |
| WO 2019/187053 A1 | 03 October 2019 | EP 3567085 A1<br>claims, examples<br>KR 10-2019-0114952 A<br>CN 110506086 A<br>SG 11201904153V A<br>CN 116426190 A | |
| WO 2019/187055 A1 | 03 October 2019 | US 2019/0300725 A1<br>claims, examples<br>EP 3567084 A1<br>CN 110214167 A<br>KR 10-2019-0114953 A<br>SG 11201904152P A | |
| WO 2021/131726 A1 | 01 July 2021 | US 2023/0090038 A1<br>claims, examples<br>EP 4083098 A1<br>CN 114846040 A<br>KR 10-2022-0120548 A<br>TW 202134304 A | |
| WO 2023/140036 A1 | 27 July 2023 | TW 202337964 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7120879 A
- JP H7120879 A
- JP 5273712 A
- JP H5273712 A
- JP 62215272 A
- JP S62215272 A
- DE 1121470
- GB 923045 A
- JP 57112751 A
- JP S57112751 A
- JP 62200350 A
- JP S62200350 A
- JP 62206541 A
- JP S62206541 A
- JP 62206543 A
- JP S62206543 A
- JP 55034932 B
- JP S5534932 B
- JP 56025738 A
- JP S5625738 A
- JP 62063936 A
- JP S6263936 A
- JP 49015495 B
- JP S4915495 B
- JP 59202464 A
- JP S59202464 A
- US 4663271 A
- US 4705744 A
- US 4707436 A
- JP 62160448 A
- JP 63089850 A
- US 3574628 A
- US 3655394 A
- GB 1413748 A
- US 4434226 A
- US 4414310 A
- US 4433048 A
- US 4439520 A
- GB 2112157 A
- JP 63264740 A
- JP 59133542 A
- US 4082553 A
- US 4626498 A
- JP 59214852 A
- JP S59214852 A
- US 5066576 A
- JP 4274425 A
- JP H4274425 A
- US 4476219 A
- JP 3039737 A
- JP H339737 A
- JP 5204106 A
- JP H5204106 A
- JP 4362631 A
- JP H4362631 A
- JP 4204843 A
- JP H4204843 A
- JP 4043345 A
- JP H443345 A
- JP 6067385 A
- JP H667385 A
- JP 2044345 A
- JP H244345 A
- US 4366237 A
- GB 2125570 A
- EP 96873 B
- DE 3234533 B
- EP 456257 A1
- US 4833069 A
- US 4837136 A
- WO 9211575 A
- EP 378236 A1
- EP 436938 A2
- EP 568037 A
- EP 440195 A2
- EP 310125 A2
- JP 6059411 A
- JP H659411 A
- US 4555478 A
- US 4749641 A
- US 4774181 A
- US 4656123 A
- EP 450637 A2
- US 4857447 A
- US 4199363 A
- US 4978606 A
- US 4923787 A
- EP 298321 A
- US 5122444 A
- EP 471347 A
- US 5139931 A
- EP 411324 A
- EP 477932 A
- JP 1214845 A
- JP H1214845 A
- US 4618573 A
- JP 2214852 A
- JP H2214852 A

- US 3325287 A
- JP 62168139 A
- JP S62168139 A
- US 5019492 A
- US 4923790 A
- US 4923793 A
- US 4952483 A
- JP 5040324 A
- JP H540324 A
- JP 3156450 A
- JP H3156450 A
- EP 445627 A
- EP 457153 A
- WO 8804794 A
- EP 319999 A
- EP 519306 A
- US 4268622 A
- US 4923788 A
- JP 46003335 A
- EP 520938 A
- EP 521823 A
- JP 2032615 B
- JP H232615 B
- JP 3039784 B
- JP H339784 B
- JP 2003330145 A
- JP 4244541 B
- JP 2016120650 A
- JP 8211615 A
- JP H8211615 A
- GB 635841 A
- US 3622318 A
- JP 2068539 A
- JP H268539 A
- US 3700458 A
- JP 5313282 A
- JP H5313282 A
- JP 6110144 A
- JP H6110144 A
- US 2448060 A
- GB 618061 A
- US 1574944 A
- US 2278947 A
- US 2410689 A
- US 2728668 A
- US 5501313 A
- US 3656955 A
- JP 60076743 A
- JP 60087322 A
- JP 60080839 A
- JP 57164735 A
- JP 61036213 B
- JP 59090844 A
- JP 62276539 A
- JP 3094249 A
- JP H394249 A
- US 3522052 A
- US 3617197 A
- US 3713828 A
- US 3615643 A
- US 3615632 A
- US 3617293 A
- US 3628964 A
- US 3703377 A
- US 3666480 A
- US 3667960 A
- US 3679428 A
- US 3672897 A
- US 3769026 A
- US 3556800 A
- US 3615613 A
- US 3613638 A
- US 3615635 A
- US 3705809 A
- US 3632349 A
- US 3677765 A
- US 3770449 A
- US 3770440 A
- US 3769025 A
- US 3745014 A
- US 3713826 A
- US 3567458 A
- US 3625698 A
- US 2526632 A
- US 2503776 A
- JP 48076525 A
- JP S4876525 A
- BE 691807
- JP 60080848 A
- JP S6080848 A
- JP 61112144 A
- JP S61112144 A
- JP 62172343 A
- JP S62172343 A
- JP 62173459 A
- JP S62173459 A
- US 2992101 A
- US 2701245 A
- US 4142894 A
- US 4396706 A
- US 3489576 A
- US 4047958 A
- JP 56023139 B
- GB 738618 A
- GB 738637 A
- GB 738639 A
- US 2960404 A
- US 3121060 A
- JP 49005017 A
- JP S495017 A
- JP 53028086 B
- JP S5328086 B
- JP 63068887 A
- JP S6368887 A

- JP 63149641 A
- JP S63149641 A
- JP 53041221 A
- JP 53057257 A
- JP S5357257 A
- JP 59162546 A
- JP S59162546 A
- JP 60080846 A
- JP S6080846 A
- US 3396029 A
- US 3623878 A
- US 3362827 A
- JP 56066841 A
- JP S5666841 A
- JP 56142524 A
- JP S56142524 A
- US 4161407 A
- JP 56065033 A
- JP S5465033 A
- US 4130429 A
- JP 61116354 A
- JP S61116354 A
- US 4800150 A
- JP 63305345 A
- JP S63305345 A
- JP 1166031 A
- JP H1166031 A
- US 4803150 A
- JP 2264944 A
- JP H2264944 A
- JP 3039948 A
- JP H339948 A
- EP 452772 A
- JP 8039948 A
- JP H839948 A
- JP 2103037 A
- JP H2103037 A
- JP 2115837 A
- JP H2115837 A
- JP 2000112078 A
- JP 2001255617 A
- JP 5623921 B
- US 4615966 A
- JP 54036045 A
- JP S5436045 A
- JP 58052362 A
- JP S5852362 A
- JP 56078833 A
- JP S5678833 A
- JP 61252551 A
- JP S61252551 A
- JP 62030620 A
- JP S6230620 A
- JP 62030621 A
- JP S6230621 A
- JP 62030620 B
- JP S6230620 B
- JP 62030621 B
- JP S6230621 B
- US 3597200 A
- US 3309199 A
- US 4013633 A
- US 4245028 A
- US 4156609 A
- US 4139383 A
- US 4195992 A
- US 4148641 A
- US 4148643 A
- US 4336322 A
- JP 51114930 A
- JP S51114930 A
- JP 56071072 A
- JP S5671072 A
- US 3453107 A
- US 3544545 A
- US 3932380 A
- US 3931144 A
- US 3932308 A
- US 3954476 A
- US 4233237 A
- US 4255509 A
- US 4250246 A
- US 4142891 A
- US 4207104 A
- US 4287292 A
- JP 52106727 A
- JP S52106727 A
- JP 53023628 A
- JP S5323628 A
- JP 55036804 A
- JP S5536804 A
- JP 56073057 A
- JP S5673057 A
- JP 56071060 A
- JP S5671060 A
- JP 56000134 A
- JP S55134 A
- JP 7120901 A
- JP H7120901 A
- JP 8286343 A
- JP H8286343 A
- JP 8286344 A
- JP H8286344 A
- JP 8292537 A
- JP H8292537 A
- US 3482972 A
- US 3929760 A
- US 4013635 A
- US 4268625 A
- US 4171220 A
- US 4242435 A
- US 4195994 A
- US 4147544 A
- US 4148642 A
- GB 1551138 A
- JP 54099431 A

- JP S5499431 A
- JP 52008827 A
- JP S528827 A
- JP 53047823 A
- JP S5347823 A
- JP 53143323 A
- JP S53143323 A
- JP 56071061 A
- JP S5671061 A
- EP 53037 B
- EP 53040 B
- JP 8286340 A
- JP H8286340 A
- JP 9152705 A
- JP H9152705 A
- JP 10186564 A
- JP H10186564 A
- JP 10293388 A
- JP H10293388 A
- JP 4156542 A
- JP H4156542 A
- JP 4155332 A
- JP H4155332 A
- JP 4172344 A
- JP H4172344 A
- JP 4172450 A
- JP H4172450 A
- JP 4318844 A
- JP H4318844 A
- JP 4356046 A
- JP H4356046 A
- JP 5045824 A
- JP H545824 A
- JP 5045825 A
- JP H545825 A
- JP 5053279 A
- JP H553279 A
- JP 5107710 A
- JP H5107710 A
- JP 5241302 A
- JP H5241302 A
- JP 5107708 A
- JP H5107708 A
- JP 5232659 A
- JP H5232659 A
- US 5192649 A
- US 2592250 A
- US 3206313 A
- GB 1027146 A
- US 3761276 A
- US 3935014 A
- US 3447927 A
- US 2297875 A
- US 2563785 A
- US 3551662 A
- US 4395478 A
- DE 2728108
- US 4431730 A
- US 2588982 A
- US 3227552 A
- GB 1283835 A
- JP 52069613 A
- JP S5269613 A
- US 3615615 A
- US 3719494 A
- US 3734738 A
- US 4094683 A
- US 4115122 A
- US 3718470 A
- US 4030925 A
- US 4031127 A
- US 4245037 A
- US 4255511 A
- US 4266013 A
- US 4276364 A
- GB 2012433 A
- US 4080270 A
- US 4278748 A
- GB 2011391 A
- JP 2002040607 A
- JP 2003107616 A
- JP 2006113291 A
- JP 59180550 A
- JP S59180550 A
- JP 60140335 A
- JP S60140335 A
- US 1846300 A
- US 2078233 A
- US 2089129 A
- US 2165338 A
- US 2231658 A
- US 2917516 A
- US 3352857 A
- US 3411916 A
- US 2295276 A
- US 2481698 A
- US 2688545 A
- US 2921067 A
- US 3282933 A
- US 3397060 A
- US 3660103 A
- US 3335010 A
- US 3352680 A
- US 3384486 A
- US 3623881 A
- US 4025349 A
- JP 60173541 A
- JP S60173541 A
- JP 60015267 B
- JP S6015267 B
- JP 60091354 A
- JP S6091354 A
- JP 5333501 A
- JP H5333501 A
- WO 9833760 A
- DE 19618786 A1

- EP 839623 A1
- EP 842975 A1
- DE 19806846 A1
- FR 2760460 A1
- JP 2000122243 A
- US 2983606 A
- US 3362819 A
- FR 290699 B
- US 4088493 A
- JP 52153739 A
- JP S52153739 A
- JP 53001023 A
- JP S531023 A
- JP 53004540 A
- JP S534540 A
- JP 53004541 A
- JP S534541 A
- JP 53004542 A
- JP S534542 A
- JP 54136328 A
- JP S54136328 A
- US 4267262 A
- US 4009030 A
- US 4029849 A
- JP 54128335 A
- JP S54128335 A
- JP 56069629 A
- JP S5669629 A
- JP 57006843 A
- JP S576843 A
- US 4056394 A
- US 4061496 A
- US 4199362 A
- US 4250243 A
- US 4256827 A
- US 4268604 A
- JP 11002890 A
- JP H112890 A
- US 4229516 A
- JP 56025735 A
- JP 56097346 A
- JP S5697346 A
- JP 57006842 A
- JP S576842 A
- EP 031957 A1
- EP 03724 A1
- EP 048412 A1
- US 3421893 A
- US 3455686 A
- US 3575701 A
- US 3778265 A
- US 3785815 A
- US 3847615 A
- US 4123275 A
- US 4148653 A
- US 4201587 A
- US 4288523 A
- US 4297431 A
- DE 1622936 A
- DE 2162277 A
- US 4009029 A
- DE 2913164 A
- DE 3014672 A
- JP 54155837 A
- JP S54155837 A
- JP 55138745 A
- JP S55138745 A
- US 4201578 A
- JP 63168648 A
- JP S63168648 A
- JP 63168649 A
- JP S63168649 A
- JP 2006091780 A
- JP 6851389 B
- JP 2009086332 A
- WO 2016194915 A
- JP 2023150365 A
- JP 2024041730 A
- JP 2024135461 A

**Non-patent literature cited in the description**


- *Research Disclosure (RD) Item 17643*, December 1978, 26, 27
- *Research Disclosure (RD) Item 18716*, November 1979, 650
- *Research Disclosure (RD) Item 307105*, November 1989, 875, 876
- *Research Disclosure (RD) Item 17643*, December 1978, 651
- *Research Disclosure (RD) Item 307105*, November 1989, 873, 874
- I. Emulsion preparation and types. *Research Disclosure*, December 1978, 22-23
- *Research Disclosure No. 18716*, November 1979, 648
- *Research Disclosure No. 307105*, November 1989, 863-865
- **P. GLAFKIDES**. Chimie et Physique Photographiques. Paul Montel, 1967
- **G. F. DUFFIN**. Photographic Emulsion Chemistry. Focal Press, 1966
- **V. L. ZELIKMAN et al.** Making and Coating Photographic Emulsion. Focal Press, 1964
- **GUTOFF**. *Photographic Science and Engineering*, 1970, vol. 14, 248-257
- **A. GREEN et al.** *Photogr. Sci. Eng.*, vol. 19 (2), 124-129
- *Research Disclosure No. 17029*, June 1978
- *Research Disclosure No. 17333*, 1978

- *Research Disclosure No. 16725*, 1978
- **DONNEL VOET**. Carbon Black. Marcel Dekker, Inc., 1976
- Comprehensive Dispersion Technology Handbook. publishing division, management development center, 255-257, 501-539
- *Research Disclosure 17630*, 1978
- *Research Disclosure 16475*, 1977
- *Research Disclosure*, 1978, vol. 17, 630
- *Research Disclosure*, 1977, vol. 16, 475
- *RD No. 16102*, 1977
- *RD15162, No. 151*, 1976